# EUROPÄISCHE PATENTSCHRIFT

(11) **EP 4 006 628 B1**
(45) Veröffentlichungstag und Bekanntmachung des Hinweises auf die Patenterteilung: **04.11.2026**
(21) Anmeldenummer: 20210496.4
(22) Anmeldetag: 27.11.2020
(51) Int. Cl.: G02C 13/00

(54) **COMPUTERIMPLEMENTIERTES VERFAHREN ZUM BEREITSTELLEN UND PLATZIEREN EINER BRILLE SOWIE ZUR ZENTRIERUNG VON GLÄSERN DER BRILLE**
COMPUTER IMPLEMENTED METHOD FOR PROVIDING AND POSITIONING OF SPECTACLES AND FOR CENTRATION OF THE SPECTACLE GLASSES
PROCÉDÉ MIS EN OEUVRE PAR ORDINATEUR POUR FOURNIR ET POSITIONNER DES LUNETTES ET POUR CENTRER LES VERRES DES LUNETTES

(43) Veröffentlichungstag der Anmeldung: 01.06.2022
(73) Patentinhaber: Fielmann Ventures GmbH, 22083 Hamburg (DE)
(72) Erfinder: SCHROETER, Franziska, 20257 Hamburg (DE); STEINRÜCKEN, René, 21149 Hamburg (DE)
(74) Vertreter: RDL Patentanwälte PartG mbB

(56) Entgegenhaltungen:
- EP-A1- 3 410 178
- WO-A1-2016/164859
- WO-A1-2018/224655
- WO-A2-01/88654
- GB-A- 2 536 060
- US-A1- 2020 219 326

## Beschreibung

Die Erfindung betrifft ein computerimplementiertes Verfahren zum Bereitstellen einer Brille, eine computergestützte Applikation und ein System zum Bereitstellen einer Brille.

Um Brillengläser einer Fassung einer Brille zu erhalten, die auf einen Träger der Brille abgestimmt sind, muss ein Kunde sich bislang in ein Optikergeschäft begeben. Hierbei angepasste Gläser der Brillen werden in ihrer ausgewählten Fassung für den spezifischen Träger bzw. Nutzer als zentriert bezeichnet.

In der Druckschrift US 2019/0033624 A1 ist ein Verfahren zum Anpassen einer Brille beschrieben. In der Druckschrift US 7 740 355 B2 ist ein Verfahren beschrieben, das das Tragen einer physischen Fassung der Brille erfordert. In der Druckschrift EP 3 339 943 A1 ist ein Verfahren beschrieben, bei dem ein Vermessungsgerüst benötigt wird. Bei dem Verfahren gemäß der Druckschrift EP 1 011 006 B1 benötigt man eine Vermessungsvorrichtung, bei dem Verfahren gemäß der Druckschrift US 10 201 273 B2 und bei dem Verfahren gemäß der Druckschrift US 7 740 355 B2 ein großes Vermessungsgerät, wobei die meisten dieser Geräte nicht vom Träger der Fassung bedient werden können, sondern von ausgebildetem Personal bedient werden müssen, z. B. von einem Optiker in dem Optikergeschäft.

Programme, die virtuelle Fassungen auf Gesichtern anordnen, gibt es in vielen Variationen, bspw. zur Bereitstellung von augmented reality (AR). Das Anordnen eines virtuellen Objekts auf einem Bild ist ebenfalls fest etabliert und bspw. in der Druckschrift US 9 076 209 B2 beschrieben. Diese Technologien befassen sich mit modischen Aspekten.

Die Druckschrift US 2020/219326 A1 beschreibt ein virtuelles Anprobesystem für Brillen.

Die Druckschrift WO0188654A2 beschreibt ein Verfahren zum Anpassen einer Brille.

Aus der Druckschrift GB 2 536 060 A ist ein virtuelles Anprobieren einer Brille bekannt.

Ein computerimplementiertes Verfahren zur virtuellen Brillenanpassung ist aus der Druckschrift EP 3 410 178 A bekannt.

Vor diesem Hintergrund werden ein Verfahren, eine Applikation und ein System mit den Merkmalen der unabhängigen Patentansprüche vorgestellt. Ausführungsformen des Verfahrens, der Applikation und des Systems gehen aus den abhängigen Patentansprüchen hervor.

Das erfindungsgemäße computerimplementierte Verfahren ist zum virtuellen Bereitstellen einer Brille für ein Gesicht einer Person vorgesehen, wobei das Gesicht von einem Sensor, bspw. einem Tiefensensor, eines mobilen Endgeräts erfasst wird. Auf Basis des erfassten Gesichts wird ein virtuelles 3D-Modell des Gesichts erstellt und das Gesicht demnach modelliert. Mittels einer auf dem mobilen Endgerät, bspw. auf einer Prozessoreinheit des Endgeräts, implementierten und laufenden und mit dem Sensor in kommunikativer Verbindung, bspw. drahtlos oder drahtgebunden, stehenden Applikation werden auf Basis des 3D-Modells des Gesichts und eines bereitgestellten 3D-Modells der Brille automatisch beim Positionieren der Brille auf dem Gesicht einander zugeordnete Brillenpunkte und Gesichtspunkte berechnet, wobei die Brille unter Nutzung der einander zugeordneten und berechneten Brillenpunkte und Gesichtspunkte virtuell auf dem Gesicht angeordnet, bspw. positioniert, wird, wobei die virtuell auf dem Gesicht angeordnete Brille auf einer Ausgabeeinheit des mobilen Endgeräts optional angezeigt wird. Das bereitgestellte 3D-Modell der Brille wird bspw. von einer Datenbank abgerufen, selbst auf Basis von aus einer Datenbank abgerufenen physischen Daten berechneten und/oder auf Basis von dem Sensor erfassten Daten berechnet.

Brillenpunkte sowie Gesichtspunkte bezeichnen Punkte und damit Positionen in einem 3D Koordinatensystem. Brillenpunkte sind Punkte, welche gruppiert das 3D-Modell der Brille repräsentieren. Gesichtspunkte repräsentieren als Gruppe das 3D-Modell des Gesichts.

Weiterhin wird mindestens ein Zentrierparameter für jeweils ein Glas der Brille ermittelt. Dabei kann der mindestens eine Zentrierparameter auf Grundlage der virtuellen Anordnung der Brille auf dem Gesicht ermittelt werden. Ein möglicher Zentrierparameter ist der Zentrierpunkt. In diesem Zentrierpunkt soll eine vorgeschriebene dioptrische Wirkung herrschen. Diese dioptrische Wirkung soll bei bzw. in demjenigen Strahlengang herrschen, der beim Gebrauch des jeweiligen Glases der Brille vor dem jeweiligen Auge liegt. Dabei werden also Koordinaten des Zentrierpunkts in einer Scheibenebene ermittelt. So wird die Anordnung der Brille dazu genutzt, um einen Zentrierpunkt als Zentrierparameter des jeweiligen Glases der Brille für die Person bzw. für einen Träger der Brille zu bestimmen. Weitere mögliche Zentrierparameter sind die Inklination einer Fassung der Brille, ein Fassungsscheibenwinkel, eine Vorneigung der Fassung und/oder ein Hornhautscheitelabstand. Für den Fassungsscheibenwinkel und die Inklination ist in der Regel keine virtuelle Anordnung erforderlich.

Bei diesem Verfahren zum Bereitstellen der Brille wird diese u. a. auf dem Gesicht platziert. Außerdem können Gläser der Brille zentriert werden, wobei für Gesicht und Brille jeweils ein virtuelles 3D-Modell berechnet wird, welches aus einer üblicherweise begrenzten Anzahl an virtuellen Punkten repräsentiert wird. Das Gesicht wird durch den mindestens einen Sensor erfasst. Außerdem werden bestimmte Komponenten der Brille bestimmten Bereichen des Gesichts zugeordnet. Bei dem Verfahren ist es möglich, die Brille in Echtzeit auf dem Gesicht anzuordnen und somit darauf zu positionieren und/oder zu platzieren. Das Verfahren ist auf dem mobilen Endgerät durchführbar, wobei hierbei durchzuführende Berechnungen auf dem mobilen Gerät selbst durchgeführt werden. Alternativ oder ergänzend ist es möglich, die durchzuführenden Berechnungen auf einem Backend, bspw. in einer Cloud, zu berechnen und zu dem mobilen Endgerät über eine mobile Datenverbindung zu übertragen. Entsprechend ist es möglich, Zentrierwerte auf dem mobilen Endgerät und/oder dem Backend zu berechnen. Das mobile Endgerät weist als Nutzerschnittstelle ein optisches Anzeigefeld bzw. Display auf, um der Person noch während des Aufsetzens der Brille ein visuelles Feedback bereitzustellen und ein entsprechendes Resultat für eine Passgenauigkeit der Brille auszugeben. Erst danach wird die Zentrierung der Gläser berechnet. Zur Durchführung des Verfahrens wird vorab die hierzu vorgesehene Applikation (App) bzw. Anwendung auf dem Endgerät installiert. Weiterhin ist vorgesehen, dass zumindest die Brillenpunkte als Daten bereits vorverarbeitet vorliegen, wobei die Brillenpunkte bzw. ein entsprechendes Netz bereits berechnet sind. Dabei können diese Brillenpunkte dem mobilen Endgerät auch von der Datenbank bereitgestellt werden. Üblicherweise beruhen die Gesichtspunkte auf Sensordaten, die von dem mindestens einen Sensor erfasst werden, wobei die Gesichtspunkte aus derartigen Sensordaten berechnet und/oder ausgewählt werden.

Die Brille weist die zwei Gläser und eine Fassung mit einer Brücke und zwei Bügeln als Komponenten auf, wobei die Brücke innen zwischen den beiden Gläsern angeordnet wird, wobei jeweils ein Bügel außen an einem Glas, an einem Mittelteil oder einer Umrandung der Fassung angeordnet wird. Die Gläser sind zwischen den beiden Bügeln angeordnet. Dabei wird für die Brille das virtuelle 3D-Modell an Brillenpunkten berechnet und/oder von der mit der Applikation in kommunikativer Verbindung stehenden Datenbank abgerufen, wobei für die Brücke, für jeden Bügel und für das Mittelteil zwischen Gläsern der Brille als Komponenten der Brille jeweils eine vorgegebene begrenzte Anzahl an Brillenpunkten bzw. sogenannten ursprünglichen Brillenpunkten automatisch ausgewählt wird. Weiterhin werden mit mindestens einem bspw. optischen Sensor des Endgeräts Sensordaten für die Nase, die Augen und die Ohren sensorisch erfasst, aus denen das 3D-Modell berechnet wird. Bei dem virtuellen Anordnen der Brille auf dem Gesicht mit dem Endgerät wird aus den Sensordaten für die Nase, die Augen und die Ohren jeweils die vorgegebene begrenzte Anzahl an Gesichtspunkten, d. h. ursprünglichen Gesichtspunkten, für die Nase, die Augen und die Ohren zumindest teilweise dynamisch berechnet und automatisch ausgewählt, wobei die Gesichtspunkte zusammen das virtuelle 3D-Modell des Gesichts bilden. Es ist möglich, eine jeweilige Komponente der Brille in Zellen aufzuteilen und für jede Zelle einen bspw. primären Brillenpunkt zu ermitteln. Weiterhin ist vorgesehen, dass für die Brücke aus der begrenzten Anzahl an Brillenpunkten mindestens ein primärer Brillenpunkt ermittelt wird, der an einem Rand, bspw. unteren Rand, der Brücke angeordnet wird, wobei dieser mindestens eine primäre Brillenpunkt mindestens einem Gesichtspunkt der Nase zugeordnet wird. Entsprechend wird für jeden Bügel aus der begrenzten Anzahl an Brillenpunkten mindestens ein primärer Brillenpunkt ermittelt, der an einem Rand, bspw. unteren Rand, des jeweiligen Bügels angeordnet wird, wobei dieser mindestens eine primäre Brillenpunkt mindestens einem als Ohrpunkt ausgebildeten Gesichtspunkt des Ohrs zugeordnet wird. Dabei kann jeweils ein primärer Brillenpunkt aus mehreren ursprünglichen bzw. ursprünglich vorgegebenen Brillenpunkten abgeleitet werden. Bei dem virtuellen Anordnen der Brille auf dem Gesicht wird mit der Applikation der jeweiligen Komponente der Brille mindestens ein Gesichtspunkt des mindestens einen Bereichs des Gesichts zugeordnet, wobei bei dem virtuellen Anordnen der Brille auf dem Gesicht aus dem 3D-Modell für das Gesicht der mindestens eine Gesichtspunkt zumindest teilweise dynamisch berechnet wird.

Mindestens ein weiterer Bereich des Gesichts ist als Rand einer Augenhöhle, der ein in der jeweiligen Augenhöhle angeordnetes Auge umschließt, als Stirn, als Wange bzw. Backe und/oder als Schläfe ausgebildet und wird von dem mindestens einen Sensor des Endgeräts sensorisch erfasst. Somit ist es möglich, die Brille, üblicherweise die Umrandung der Gläser und/oder das Mittelteil zwischen den Gläsern, im Bereich der Stirn oder der Backe bzw. Wange des Gesichts zu verschieben, so dass es beim virtuellen Positionieren nicht zu einer Kollision kommt und vermieden wird, dass die virtuelle Brille in der Stirn oder Backe des Gesichts sitzt.

Die Brille wird unter Berücksichtigung einer jeweiligen Zuordnung eines jeweiligen Brillenpunkts der Brille zu einem jeweiligen Gesichtspunkt des Gesichts auf dem Gesicht virtuell angeordnet. Mit dem Verfahren wird bei der virtuellen Anordnung der Brille eine Topologie des Gesichts berücksichtigt, woraus anschließend der mindestens eine Zentrierparameter abgeleitet werden kann.

Hierbei ist es möglich, dass auf Basis von gegebenen und von einer Datenbank abrufbaren Maßdaten bzw. Metadaten der Brille für die Komponenten der Brille die begrenzte Anzahl, Position und Art der automatisch auszuwählenden Brillenpunkte festgelegt wird. Zum Erfassen des Gesichts wird üblicherweise ein mobiles Endgerät zur Kommunikation und Datenverarbeitung, bspw. ein Smartphone, verwendet, wobei der mindestens eine Sensor bspw. als Tiefensensor ausgebildet ist. Das mobile Endgerät weist außerdem einen Speicher, eine Recheneinheit und ein Anzeigefeld auf. Es wäre technisch möglich, Daten für Brillenpunkte der Brille auch live bzw. verfahrensbegleitend anzupassen. Ein hierbei zu berücksichtigender Wert ist z. B. die physikalische Breite einer Front bzw. einer Umrandung der Brille, die die Gläser umschließt.

Es ist vorgesehen, dass ein dreidimensionales 3D-Modell der Brille auf das dreidimensionale 3D-Modell des Gesichts virtuell aufgesetzt und dabei an dem Gesicht virtuell angeordnet wird. Dabei werden die Gesichtspunkte aus den erfassten Sensordaten abgeleitet, wobei es möglich ist, zumindest einige der Gesichtspunkte oder sämtliche Gesichtspunkte zu berechnen, wenn die Brille virtuell aufgesetzt wird.

In Ausgestaltung wird mindestens ein Gesichtspunkt, bspw. eine Position des mindestens einen Gesichtspunkts, durch maschinelles Lernen automatisch ermittelt. Dabei können üblicherweise sämtliche Gesichtspunkte durch maschinelles Lernen ermittelt werden.

Die Gesichtspunkte, zu denen z. B. die Ohrpunkte und/oder Nasenpunkte gehören, werden dabei aus den Sensordaten automatisch erzeugt. Dies kann mit Hilfe des maschinellen Lernens durchgeführt werden. Dabei wird aus der Anzahl an Sensordaten ein 3D-Gesichtsmesh bzw. eine begrenzte Anzahl an Gesichtspunkten erzeugt. Das maschinelle Lernen (machine learning) umfasst dabei unterschiedliche Gruppen bzw. Bereiche für maschinelles Lernen, nämlich überwachtes Lernen (supervised learning), unüberwachtes Lernen (unsupervised learning), teilüberwachtes Lernen (semi-supervised learning) und bestärkendes Lernen (reinforcement learning). Die Erzeugung der Gesichtspunkte ist mit Algorithmen aus allen oben genannten Bereichen für das maschinelle Lernen möglich.

Im Falle des beanspruchten überwachten Lernens wird mit Beispielen, bspw. mit Trainingsdaten, die Beziehung zwischen Sensordaten und den gewünschten, ausgegebenen Gesichtspunkten dem Algorithmus vorgestellt. Der Algorithmus modelliert dann die Beziehung zwischen den Sensordaten als Eingabedaten und Gesichtspunkten als Ausgabedaten. Im Zuge von neuen, unbekannten Sensordaten kann der Algorithmus dann die Gesichtspunkte erzeugen und/oder voraussagen. Dies kann z. B. mit einem Entscheidungsbaum (decision tree) oder einem neuronalen Netz (neural network) durchgeführt werden.

Alternativ wäre es möglich, mit unüberwachtem Lernen Sensordaten zu gruppieren. Diese Gruppierungen werden erzeugt, ohne Beispiele bzw. Trainingsdaten zu definieren. Der Algorithmus kann selbstständig Regeln und relevante Eingabedaten erkennen. Clustering-Algorithmen, wie der k-means Algorithmus, sind Beispiele für unüberwachtes Lernen. Hier ist z. B. möglich, die Sensordaten einfach zu gruppieren, bspw. in einen Vordergrund und Hintergrund, um diese anschließend weiterzuverarbeiten. Alternativ ist auch die Kombination aus unüberwachtem und überwachtem Lernen, das teilüberwachtes Lernen genannt wird, möglich.

Ein maschinelles Lernen ist erfindungsgemäß auf der Basis von bestärkendem Lernen aufgebaut. Dabei lernt der Algorithmus kontinuierlich, z. B. welche Sensordaten am besten geeignet sind, um Gesichtspunkte zu erzeugen, indem seine Voraussage immer wieder bewertet und/oder bestärkt wird. Ein solches bestärkendes Lernen sagt z. B. Gesichtspunkte voraus, welches dann immer wieder von anderen Algorithmen bewertet wird. Mit der Dauer einer Lernphase kann das System immer stabile Gesichtspunkte aus Sensordaten erzeugen.

Die Ermittlung eines Gesichtspunkts mittels maschinellen Lernens (machine learning) ist u. a. mit folgenden Algorithmen möglich:
- Regressionsalgorithmen, wie z. B. lineare Regression (linear regression), logistische Regression (logistic regression), Poisson Regression (Poisson regression). Algorithmen und Methoden aus dem Bereich Regularisation (regularization), wie z. B. ridge regression, elastic net.
- Algorithmen aus dem Bereich instanzbasiertes Lernen (instance-based learning): z. B. k-nearest neighbor, support vector machine (SVM), selbstorganisierende Karten (self organizing maps). Die Ermittlung des Gesichtspunkts ist ebenso über Bäume, wie z. B. über einen Entscheidungsbaum (decision tree), oder Clustering Algorithmen, wie z. B. k-means, hierarchische Clusteranalyse (hierarchical clustering), möglich. Im Bereich der künstlichen neuronalen Netze (artificial neural networks) können z. B. Perzeptron (perceptron), back-propagation oder Hopfield-Netzwerke (Hopfield network) eingesetzt werden. Ebenso können neuronale Netze bzw. Netzwerke (neural networks), wie z. B. faltende neuronale Netzwerke (convolutional neural networks), vorwärtsgerichtete neuronale Netzwerke (feed forward neural networks), rekurrente neuronale Netzwerke (recurrent neural networks), eingesetzt werden.
- Algorithmen, die schwächere Prädiktoren kombinieren, um so besser Vorhersagen zu ermöglichen: z. B. random forest oder gradient boosted trees.
- Ebenfalls einsetzbar sind Algorithmen aus dem stochastischen Lernen, wie z. B. das simulierte Abkühlen (simulated annealing), Markov-Ketten (Markov chains).
- Darüber hinaus können Algorithmen aus dem Bereich Dimensionsreduzierung (dimensionality reduction), wie z. B. eine Hauptkomponentenanalyse (principal component analysis (PCA)), eingesetzt werden.
- Auch Algorithmen, die als Basis die Formel von Bayes nutzen, wie z. B. Bayessche Netze (Baysian network), sind einsetzbar.

Dabei ist es auch möglich, dass zumindest einige Gesichtspunkte aus den erfassten Sensordaten, die ebenfalls Punkte des Gesichts beschreiben, direkt übernommen werden. Ein jeweiliges Ohr ist hier definitionsgemäß als Bereich des Gesichts ausgebildet.

Es ist auch möglich, dass aus der begrenzten Anzahl an Brillenpunkten bzw. ursprünglichen Brillenpunkten zunächst mindestens ein primärer Brillenpunkt berechnet wird, der dann bspw. als Schnittpunkt dem Gesicht zugeordnet wird. Dabei wird mindestens ein sogenannter primärer Gesichtspunkt der Nase, insbesondere einer Nasenwurzel, ausgewählt oder dynamisch berechnet und mindestens einem Brillenpunkt zugeordnet. Außerdem wird mindestens ein primärer Brillenpunkt mindestens einem als Ohrpunkt ausgebildeten Gesichtspunkt des jeweiligen Ohrs zugeordnet, wobei der primäre Brillenpunkt berechnet werden kann, wobei der mindestens eine Ohrpunkt je nach Definition einer Anatomie des Gesichts in der Nähe des Ohrs und/oder im Ohr als Bereich des Gesichts liegt, weshalb dieser Ohrpunkt nicht exakt auf dem Ohr liegen muss, sondern sich daneben befinden kann. Ein virtuelles Anordnen und somit Aufsetzen der Brille auf das Gesicht kann auf Basis der Maßdaten bzw. Metadaten durchgeführt werden, die zumindest teilweise skaliert und/oder zumindest teilweise fix vorgegeben sind. Eine Abbildung der auf dem Gesicht virtuell angeordneten, bspw. aufgesetzten, Brille wird auf dem Anzeigefeld des Endgeräts angezeigt.

In Ausgestaltung werden zunächst lokal Regionen des Gesichts und Komponenten der Brille ausgewählt, wobei auf weiterhin zu berücksichtigende Beispiele nachfolgend verwiesen wird. Nur für eine jeweilige ausgewählte Komponente der Brille und dem zugeordneten Bereich des Gesichts werden Brillenpunkte und Gesichtspunkte betrachtet bzw. erzeugt. Aus jeweils mindestens zwei ursprünglichen Brillenpunkten kann ein dazwischen liegender neuer Brillenpunkt üblicherweise geometrisch berechnet und somit ermittelt werden, der zu Gesichtspunkten des Gesichts, bspw. dem Ohr, einen geringeren Abstand als die ursprünglichen Brillenpunkte aufweist. Dies ist u. a. dann möglich, wenn ein primärer Brillenpunkt vor oder hinter einem Ohrpunkt, jedoch nicht auf dem Ohrpunkt, liegt. Falls für einen Bereich des Gesichts eine bestimmte Anzahl von begrenzten Gesichtspunkten, bspw. dreißig, ermittelt worden ist, wird die Brille darauf angeordnet, bspw. platziert. Dann wird überprüft, ob mindestens ein Gesichtspunkt das Raster aus Brillenpunkten schneidet, wobei mindestens ein Schnittpunkt berechnet wird. Falls jedoch kein passender Schnittpunkt im Gesicht vorhanden sein sollte, kann ein dazwischen liegender Gesichtspunkt berechnet werden. Dieser Schnittpunkt hat einen geringen Abstand zu einem ihm zugeordneten Brillenpunkt. Sind geeignete Schnittpunkte gefunden, wird der Abstand der Brillenpunkte durch Bewegen, also Verschieben und/oder Drehen, der Brille relativ zu dem Gesicht und damit zu den Gesichtspunkten verringert. Dadurch können auch neue Gesichtspunkte ausgewählt oder berechnet werden. Insgesamt verändert sich auch die Gesamtposition der Fassung, welche durch die Brillenpunkte repräsentiert wird. Entsprechend kann die Brille relativ zu dem jeweiligen Bereich bzw. einer Region des Gesichts, bspw. der Nase und/oder einem jeweiligen Ohr, bewegt werden.

Alternativ oder ergänzend ist es auch möglich, dass die Brillenpunkte fix vorgegeben sind und nur Gesichtspunkte des jeweiligen Bereichs des Gesichts dynamisch erzeugt werden sowie vice versa. Weiterhin ist zu berücksichtigen, dass die Anzahl an Brillenpunkten für die Darstellung bzw. Anzeige auf dem Endgerät als zunächst vorgesehene Brillenpunkte beibehalten wird. Eine Auswahl und damit verbundene Reduzierung der Brillenpunkte wird nur für das Aufsetzen durchgeführt. Im Fall eines Bügels werden die primären Brillenpunkte an dessen Unterseite vorgesehen, die weiterhin zu Außenseiten des Bügels die gleiche Entfernung aufweisen. Falls die Brille im Rahmen einer Skalierung verkleinert wird, werden Abstände von unmittelbar benachbarten Brillenpunkten entsprechend verringert. In diesem Fall wird bspw. die Brücke verkleinert, wobei für die Brücke die zu berücksichtigenden Brillenpunkte schnell ermittelt werden können.

In weiterer Ausgestaltung werden auch Gesichtspunkte ermittelt, mit denen jeweils ein Auge als Bereich des Gesichts beschrieben wird. Dies betrifft bspw. auch Gesichtspunkte für eine jeweilige Pupille und/oder eines jeweiligen Augendrehpunkts eines Auges. Somit ist es möglich, eine Pupillendistanz bzw. einen Abstand zwischen den Pupillen und weitere Zentrierparameter, wie den Hornhautscheitelabstand, als Abstand zwischen Cornea und einer Rückseite des Glases bzw. der Linse zu ermitteln. Durch die Bestimmung der Pupille bzw. des Augendrehpunkts ist die Bestimmung eines Zentrierpunkts möglich. Der Zentrierpunkt ist gekennzeichnet als der Punkt, durch den die Person bzw. ein Träger der Brille hauptsächlich blickt und daher in diesem Punkt die gewünschte dioptrische Wirkung vorhanden sein sollte. Hier sollte also der optische Mittelpunkt der Linse liegen, um Abbildungsfehler zu minimieren. Der Punkt bzw. Zentrierpunkt wird mit dem Abstand bzw. der Höhe (y-Wert) zum unteren Rand der Linse und dem horizontalen Versatz (x-Wert) zum nasalen Rand der Linse genauer beschrieben. Alternativ kann die Position durch die horizontale Dezentration und die vertikale Dezentration von der vertikalen bzw. horizontalen Mittellinie eines Kastensystems angegeben werden.

In Ausgestaltung wird eine jeweilige Komponente der Brille so lange virtuell bewegt, d. h. gedreht und/oder verschoben, bis der mindestens eine primäre Brillenpunkt der jeweiligen Komponente der Brille und der mindestens eine dem mindestens einen primären Brillenpunkt zugeordnete Gesichtspunkt des jeweiligen Bereichs des Gesichts zueinander einen Istwert eines Abstands aufweisen, der maximal um einen Toleranzwert von einem hierfür vorgesehenen Sollwert für den Abstand abweicht, und anschließend für alle verbleibenden Komponenten der Brille jeweils ein virtueller Abstand zwischen einem jeweiligen primären Brillenpunkt der jeweiligen Komponente und dem jeweiligen primären Brillenpunkt zugeordneten Gesichtspunkt bestimmt und mit einem hierfür vorgesehenen Sollwert des Abstands verglichen wird, und aus dem Vergleich abgeleitet wird, ob die Brille passt. Dabei ist es in möglicher Ausgestaltung denkbar, dass ein virtueller Abstand oder ein realer Abstand berücksichtigt wird, wobei der virtuelle Abstand dem realen Abstand entsprechen kann.

Hierbei ist es u. a. möglich, dass zunächst jeweils ein Bügel bzw. der mindestens eine primäre Brillenpunkt auf jeweils mindestens einem Ohrpunkt aufgesetzt wird. Danach werden die Bügel und die Brücke ausgehend von den Ohrpunkten nach unten gedreht, wobei die Brücke bzw. mindestens ein primärer Brillenpunkt mindestens auf einem als Nasenpunkt ausgebildeten Gesichtspunkt aufgesetzt wird. Alternativ oder ergänzend wird zunächst die Brücke bzw. mindestens ein primärer Brillenpunkt mindestens auf einem als Nasenpunkt ausgebildeten Brillenpunkt aufgesetzt, dann werden die Bügel ausgehend von dem mindestens einen Nasenpunkt nach unten gedreht, wobei jeweils ein Bügel auf mindestens einem Ohrpunkt aufgesetzt wird. Dabei wird der Istwert des Abstands, zwischen jeweils einem Brillenpunkt und jeweils einem Gesichtspunkt, die einander zugeordnet werden und/oder zuzuordnen sind, an den hierfür vorgesehenen Sollwert angepasst, wobei vorgesehen wird, dass der Sollwert zuzüglich des Toleranzwerts größer als der Istwert ist, und dass der Sollwert abzüglich des Toleranzwerts kleiner als der Istwert ist, wobei der Istwert unter Berücksichtigung des Sollwerts optimiert wird.

Üblicherweise ist ein vorgesehener virtueller Abstand zwischen einem jeweiligen Gesichtspunkt und einem jeweiligen Brillenpunkt minimal. Bei dem Verfahren werden sämtliche Abstände virtuell gemessen und mit hierfür vorgesehenen realen Sollwerten verglichen. Dabei ist bspw. der Abstand zwischen einem Gesichtspunkt oben an der Nase bzw. Nasenwurzel zu einem Brillenpunkt in der Mitte der Brücke null, da die Brücke direkt auf der Nase aufliegt. Üblicherweise werden die Sollwerte dynamisch vorgegeben und sind nicht zwangsläufig fixiert. Dabei können sich diese Sollwerte je nach Form des Gesichts abhängig oder unabhängig voneinander verändern. Es ist möglich, dass die Sollwerte über maschinelles Lernen bzw. machine learning gefunden und/oder optimiert werden. Es ist auch möglich, dass pro Gesichtspunkt nicht nur ein einziger Sollwert, sondern auch mehrere Sollwerte miteinbezogen werden können. Die im Rahmen des Verfahrens jeweils ermittelten Istwerte für Abstände werden unter Berücksichtigung der hierfür vorgesehenen Sollwerte bewertet. Die Sollwerte basieren in Ausgestaltung auf bereits ermittelten Daten, die bspw. bei einem realen Anordnen einer Brille auf einem Gesicht erfasst worden sind. Derartige Sollwerte, die auf realen Daten basieren, können weiterhin bspw. auch durch maschinelles Lernen optimiert werden.

In Ausgestaltung wird der Abstand des mindestens einen Brillenpunkts der jeweiligen Komponente der Brille zu dem mindestens einen Gesichtspunkt des Bereichs des Gesichts beim Aufsetzen dynamisch berechnet und somit ermittelt, wobei dieser Abstand durch Bewegen der jeweiligen Komponente der Brille relativ zu dem Bereich des Gesichts reduziert wird, wobei ein positionsabhängiger Istwert für den Abstand ermittelt und mit einem hierfür vorgesehenen Sollwert verglichen wird, wobei die Komponente dann an bzw. auf dem Gesicht virtuell angeordnet ist, wenn der Istwert in Ausgestaltung maximal so groß wie der Sollwert ist. In weiterer Ausgestaltung ist der Abstand zwischen dem Gesichtspunkt und dem Brillenpunkt im Rahmen üblicher Toleranzen null. In diesem Fall ist zwischen einem jeweiligen Gesichtspunkt und einem jeweiligen Brillenpunkt kein Abstand vorhanden, dies betrifft bspw. mindestens einen Ohrpunkt und mindestens einen Brillenpunkt eines Bügels sowie mindestens einen Gesichtspunkt der Nase und einen zuzuordnenden Brillenpunkt der Brücke. Zwischen anderen Gesichtspunkten und Brillenpunkten sind größere Abstände vorzusehen, da derartige Abstände nicht durch Verschiebung oder Rotation verkleinert werden können. Dies trifft z. B. auf Brillen zu, welche nicht passen. Ein Prüfsystem untersucht dann die ermittelten Istwerte und vergleicht diese mit den vorgesehenen Sollwerten.

Hierbei ist es möglich, dass der mindestens eine Brillenpunkt einer jeweiligen Komponente der Brille und/oder der Fassung der Brille bei der Platzierung bzw. Anordnung so nah wie möglich an dem jeweiligen Bereich des Gesichts angeordnet wird, wobei eine präferierte Platzierung der Brille an und/oder auf dem Gesicht möglich ist.

Es ist vorgesehen, dass die Brille als mindestens eine weitere Komponente zwei Nasenauflagen aufweist, wobei jeweils eine Nasenauflage als Verlängerung der zwischen den Nasenauflagen angeordneten Brücke ausgebildet ist, wobei für jeweils eine Nasenauflage jeweils eine begrenzte Anzahl an Brillenpunkten automatisch ausgewählt wird, wobei für jede Nasenauflage aus der begrenzten Anzahl an Brillenpunkten bzw. entsprechenden ursprünglichen Brillenpunkten mindestens ein primärer Brillenpunkt ermittelt wird, der an einem inneren Rand der jeweiligen Nasenauflage angeordnet wird, wobei dieser primäre Brillenpunkt mindestens einem Gesichtspunkt der Nase zugeordnet wird.

Dabei wird jeweils eine Nasenauflage innen an jeweils einem Glas angeordnet. Für jede Komponente wird dem mindestens einen Brillenpunkt ein als Partnerpunkt ausgebildeter bzw. zu bezeichnender Gesichtspunkt auf einer Oberfläche des Gesichts, bspw. einer Oberfläche der Nase, zugeordnet. Für jede Komponente wird aus der Gesamtheit der Entfernung aller dieser Brillenpunkte dann der Sitz auf dem Gesicht, bspw. auf der Nase, berechnet.

Im Fall der Nasenauflage bzw. des Nasenpads werden bspw. fünf Brillenpunkte auf jeder Seite jeweils einer Naseauflage berücksichtigt. Dabei ist es möglich, dass die Brillenpunkte zu den Gesichtspunkten unterschiedliche Abstände aufweisen, wobei ein Brillenpunkt zu dem Gesichtspunkt, dem er zuzuordnen ist, einen geringeren Abstand als ein anderer Brillenpunkt zu dem Gesichtspunkt, dem er zuzuordnen ist, aufweist. Dabei wird für jeden Brillenpunkt und dem Gesichtspunkt ein Sollwert für den Abstand vorgesehen. Falls eine Komponente der Brille mehrere zu berücksichtigende Brillenpunkte und der Bereich des Gesichts ebenfalls viele Gesichtspunkte aufweist, ist es möglich, jene Punkte, d. h. jeweils einander zuzuordnende Brillenpunkte und Gesichtspunkte, zu finden oder zu erzeugen, welche den geringsten Abstand zueinander haben.

Außerdem weist die Brille als mindestens eine weitere Komponenten zwei Umrandungen auf, wobei jeweils eine Umrandung jeweils ein Glas zumindest teilweise umrandet, wobei für jeweils eine Umrandung jeweils eine begrenzte Anzahl an Brillenpunkten automatisch ausgewählt wird, wobei für jede Umrandung aus der begrenzten Anzahl an Brillenpunkten bzw. ursprünglichen Brillenpunkten mindestens ein primärer Brillenpunkt ermittelt wird, der an der jeweiligen Umrandung angeordnet wird, wobei dieser mindestens eine primäre Brillenpunkt mindestens einem Gesichtspunkt eines Bereichs des Gesichts zugeordnet wird.

Eine derartige Umrandung kann auch als Mittelteil oder Rahmen ausgebildet sein bzw. bezeichnet werden. Die Umrandung kann jeweils ein Glas nur teilweise oder vollständig umranden. Der mindestens eine Brillenpunkt der Umrandung ist an einer inneren Seite der Umrandung, die mindestens einem Bereich des Gesichts zugewandt ist, angeordnet. Falls die Brille keine Umrandung für das jeweilige Glas aufweist, wird entsprechend ein Rand des jeweiligen Glases mindestens einem Gesichtspunkt eines Bereichs des Gesichts zugeordnet.

In Ausgestaltung ist es möglich, dass jede Komponente der Brille zunächst unabhängig von anderen Komponenten der Brille betrachtet wird, wobei der mindestens eine primäre Brillenpunkt für diese Komponente der Brille unabhängig bzw. isoliert von primären Brillenpunkten der anderen Komponenten der Brille ermittelt wird.Dieser Schritt wird üblicherweise am Anfang des Verfahrens zur Berechnung der Brillenpunkte durchgeführt. Beim nachfolgenden Aufsetzen bzw. Platzieren der Brille sind die Komponenten der Brille verbunden und werden beim virtuellen Positionieren der Brille auch gemeinsam bewegt, bspw. verschoben und/oder gedreht.

Weiterhin wird mit dem Endgerät eine Abbildung der Brille, wenn sie auf dem Gesicht virtuell angeordnet ist, dargestellt. Weiterhin wird mit der Applikation ein Auswertesystem bereitgestellt. Mit diesem Auswertesystem wird eine nach dem virtuellen Anordnen der Brille auf dem Gesicht resultierende Anordnung der Brille auf dem Gesicht bewertet. Eine derartige Bewertung beruht auf jeweils aktuell gemessenen Istwerten für die Abstände, die bei dem virtuellen Anordnen an die vorgesehenen Sollwerte angepasst und somit optimiert werden. Bei der Bewertung können Abweichungen der Istwerte von den hierfür vorgesehenen Sollwerten berücksichtigt werden, wobei einzelne Abweichungen statistisch gewichtet werden können. Hierbei ist zu berücksichtigen, dass für den Fall, dass bereits lediglich ein Istwert wesentlich mehr als ein hierfür vorgesehener Toleranzwert von dem hierfür vorgesehenen Sollwert abweichen sollte, entschieden werden kann, dass die vorab virtuell angeordnete Brille nicht auf das Gesicht passt.

Mit diesem Auswertesystem wird die räumliche und/oder geometrische Anordnung bzw. Positionierung und/oder Passförmigkeit der Brille relativ zu dem Gesicht bewertet und somit beurteilt. Dabei wird u. a. der Istwert des Abstands eines jeweiligen Brillenpunkts zu dem jeweiligen Gesichtspunkt, die einander zuzuordnen sind bzw. zugeordnet werden, unter Berücksichtigung eines jeweils vorgesehenen Sollwerts bewertet. Hierbei ist vorgesehen, dass die Sollwerte für Abstände ebenfalls in der Datenbank hinterlegt sein können. Dabei wird jeweils ein Sollwert für einen bestimmten Brillenpunkt, der einem bestimmten Gesichtspunkt zuzuordnen ist, aus einer Anzahl an Test-Sollwerten ermittelt, wobei jeweils ein derartiger Test-Sollwert wiederum von einem Optiker experimentell ermittelt wird, wenn er eine reale Brille auf einem realen Gesicht eines Kunden bzw. einer Person aufsetzt und somit anprobiert. Ein jeweiliger Sollwert wird dabei als Mittelwert aus der Anzahl an Test-Sollwerten ermittelt. Bei dem Verfahren werden mehrere Istwerte mit mehreren Sollwerten für Abstände verglichen, die sich beim virtuellen Anordnen der Brille auf dem Gesicht ergeben, wobei sich für jeweils einen Istwert eine Abweichung von einem jeweils vorgesehenen Abstand ergeben kann. Das Auswertesystem beruht auf einer Zusammenschau sämtlicher Abweichungen, aus denen abgeleitet wird, wie gut die Brille auf das Gesicht virtuell passt. Dabei kann dem Kunden bzw. der Person eine Bewertung der virtuellen Passförmigkeit anhand eines Punktsystems und/oder Ampelsystems angezeigt werden, aus dem hervorgeht, ob die Brille auf das Gesicht passt oder nicht, was dem Kunden bspw. über das Anzeigefeld des Endgeräts angezeigt wird. Weiterhin kann auf einer Anzeigeeinheit, bspw. dem Anzeigefeld, des Endgeräts, das virtuelle Anordnen der Brille auf dem Gesicht und/oder eine Bewertung einer resultierenden virtuellen Anordnung der Brille auf dem Gesicht dynamisch, insbesondere in Echtzeit, dargestellt und angezeigt werden.

Weiterhin ist es möglich, dass die begrenzte Anzahl an Brillenpunkten für ein jeweiliges Glas, einen jeweiligen Bügel, die Brücke und das Mittelteil in Ausgestaltung bereits vor dem Aufsetzen der Brille auf dem Gesicht errechnet werden kann. Somit ist es möglich, die besagten Brillenpunkte für das jeweilige Glas sowohl vor als auch nach dem Aufsetzen und somit Anordnen der Brille auf dem Gesicht zu berechnen. Alternativ oder ergänzend kann die begrenzte Anzahl an Brillenpunkten für das jeweilige Glas automatisch ausgewählt werden.

In weiterer Ausgestaltung wird zum Ermitteln des mindestens einen Zentrierparameters bzw. zum Zentrieren des jeweiligen Glases der Brille mit der Applikation ein Augendrehpunkt eines jeweiligen Auges des Gesichts ermittelt.

Zum Ermitteln des mindestens einen Zentrierparameters des jeweiligen Glases werden lediglich Positionen von primären Brillenpunkten des jeweiligen Glases in einem 3D-Raum sowie die Position des Augendrehpunkts des jeweiligen Auges in demselben 3D-Raum genutzt.

Erfindungsgemäß wird aus den primären Brillenpunkten jeweils eines Glases mindestens eine geometrische Figur erzeugt, mit der das jeweilige Glas repräsentiert wird. Zur Modellierung des jeweiligen Glases bzw. zur Bereitstellung eines 3D-Modells dieses Glases wird jeweils eine begrenzte Anzahl an Brillenpunkten automatisch ausgewählt, wobei die mindestens eine geometrische Figur aus der begrenzten Anzahl an Brillenpunkten erzeugt wird, die das jeweilige Glas virtuell repräsentiert. Dabei wird eine Krümmung der geometrischen Figur durch Einbeziehung mindestens eines Brillenpunkts des jeweiligen Glases erzeugt. Dabei werden zum Erzeugen der Krümmung mindestens ein Brillenpunkt auf einer Oberfläche des Glases und mindestens zwei Brillenpunkte auf einer Außenlinie des Glases berücksichtigt. Wird bspw. das Glas durch eine Kugel repräsentiert, wird eine Kugel erzeugt, welche bezüglich ihrer Größe und Position optimiert wird, bis ausgewählte Brillenpunkte des Glases auf der Oberfläche der Kugel positioniert sind.

Weiterhin ist vorgesehen, dass beim Zentrieren der Zentrierpunkt des jeweiligen Glases durch Projektion des Augendrehpunkts ermittelt wird. Dabei zeigt der Augendrehpunkt durch die Projektion an, wo der Zentrierpunkt auf dem Glas angeordnet sein soll. Dieser Zentrierpunkt ist gegenüber einem mechanischen Schwerpunkt des Glases verschoben. Falls das Glas bzw. eine Linse in einem Kastensystem schematisch dargestellt wird, ist ein Mittelpunkt des Kastensystems auf der Hälfte der Höhe und der Hälfte der Breite des Kastensystems angeordnet. Unter Berücksichtigung der Form des Glases wird der Zentrierpunkt durch Verschiebung gegenüber dem Mittelpunkt oder dem Rand des Glases definiert. Mit dem Augendrehpunkt kann eine vertikale und horizontale Verschiebung des Zentrierpunkts gegenüber dem Mittelpunkt bzw. Schwerpunkt oder dem Rand des Glases angezeigt werden.

Ein Zentrierpunkt als der mindestens eine Zentrierparameter des jeweiligen Glases wird unter Verwendung einer Projektion des Augendrehpunkts des jeweiligen Auges auf die geometrische Figur des jeweils entsprechenden Glases ermittelt, wobei in Abhängigkeit der geometrischen Figur ein dabei projizierter Punkt der geometrischen Figur auf eine vordefinierte ebene Fläche, deren Lage und Form durch die Außenlinie des jeweiligen Glases definiert ist, projiziert wird, wobei das Glas durch diese ebene Fläche repräsentiert wird. Ergänzend ist es möglich, mittels eines Projektionspunkts des Augendrehpunkts und dem Augendrehpunkt eine Gerade zu erzeugen. Diese Gerade kann mit weiteren geometrischen Formen geschnitten werden. Der Schnittpunkt wird weiter auf eine vordefinierte ebene Fläche projiziert, deren Lage und Form durch die Außenlinie des jeweiligen Glases definiert ist, wobei das Glas durch diese ebene Fläche repräsentiert wird.

Es ist vorgesehen, dass als der mindestens eine Zentrierparameter ein Zentrierpunkt, der für die dioptrische Wirkung beim Durchblicken durch das Glas vorgesehen ist, eine Inklination einer Fassung der Brille, ein Fassungsscheibenwinkel, eine Vorneigung der Fassung und/oder ein Hornhautscheitelabstand ermittelt wird bzw. werden.

Gemäß einer ersten erfindungsgemäßen Methode wird z. B. aus den Brillenpunkten eines jeweiligen Glases die ebene Fläche als die mindestens eine geometrische Figur erzeugt. Zum Ermitteln des Zentrierpunkts wird der Augendrehpunkt auf diese ebene Fläche projiziert. Gemäß einer zweiten erfindungsgemäßen Methode wird als die mindestens eine geometrische Figur eine Kugel erzeugt. Diese Kugel bzw. Kugeloberfläche umfasst alle Brillenpunkte auf einer Außenlinie des Glases und mindestens einen Brillenpunkt auf der Oberfläche des Glases, wobei mit dieser Kugel eine Krümmung des Glases berücksichtigt wird. Wie bei der ersten Methode wird der Augendrehpunkt auf die Fläche projiziert. Aus dem Projektionspunkt wird eine Gerade erzeugt, die durch den Augendrehpunkt und den Projektionspunkt definiert ist und durch den Augendrehpunkt und den Projektionspunkt verläuft. Diese Gerade wird mit der Kugel geschnitten und so ein Schnittpunkt ermittelt. Der Schnittpunkt kann dann auf eine weitere zweite ebene Fläche, die durch das Glas definiert ist, projiziert werden. Dabei kann der Brillenpunkt auf der Oberfläche des Glases berücksichtigt werden, um die Krümmung des Glases in der bzw. mit der mindestens einen geometrischen Figur zu berücksichtigen, wobei in Abhängigkeit der geometrischen Figur der dabei projizierte Punkt bzw. Schnittpunkt auf die bspw. vordefinierte ebene Fläche projiziert wird.

Zum Zentrieren des jeweiligen Glases werden lediglich die Position einer begrenzten Anzahl an Brillenpunkten des Glases im 3D-Raum sowie die Position des Augendrehpunkts des jeweiligen Auges genutzt, ohne eine bestimmte Kopfhaltung, Körperhaltung und/oder Blickrichtung der Person bestimmen zu müssen.

In Ausgestaltung kann ergänzend oder alternativ zu dem Zentrierpunkt noch mindestens ein anderer Zentrierparameter ermittelt, bspw. gemessen, und somit berücksichtigt werden. Ein anderer Zentrierparameter ist die Inklination bzw. ein Winkel zwischen dem Bügel und einem Mittelteil, bspw. der Brücke. Hierbei ist es möglich, dass die Inklination aus Metadaten der Datenbank auch ohne Aufsetzen bestimmt werden kann. Ein möglicher Zentrierparameter ist ein Fassungsscheibenwinkel, der eine Durchbiegung der Brille beschreibt, wenn sie mit eingesetzten Gläsern bzw. Linsen auf einer bzw. der ebenen Fläche liegt, wobei der Fassungsscheibenwinkel auch schon vorher aus den Metadaten bestimmt werden kann. Ein Zentrierparameter ist eine Vorneigung, die einen Winkel zwischen den Gläsern und einer vertikalen Ebene, bspw. einer Wand, darstellt. Zu dessen Ermittlung wird die Person angewiesen, eine habituelle bzw. natürliche Kopf- und Körperhaltung einzunehmen, wobei der Winkel von dem mindestens einen Sensor im 3D-Raum gemessen wird. Ein weiterer Zentrierparameter ist ein Hornhautscheitelabstand (HSA), wobei es sich um einen kürzesten Abstand zwischen der Hornhaut bzw. Cornea des Auges und einer dem Auge zugewandten Rückseite des Glases handelt, wobei dieser Abstand einen Einfluss auf eine Sehstärke des Glases hat. Weiterhin kann mindestens ein Bedarfsabstand als Zentrierparameter ermittelt werden, mit dem ein Zweck der Brille berücksichtigt wird, also ob mit der Brille gelesen oder am PC gearbeitet wird. Ein derartiger Bedarfsabstand wird mit dem Sensor des Endgeräts gemessen, wobei die Person über das Endgerät angewiesen wird, den Sensor in einem bestimmten Abstand vor dem Auge anzuordnen. Der Bedarfsabstand hat auf einen Typ des Glases Einfluss oder verändert einen PD-Abstand. Demnach kann durch ausgewählte Brillenpunkte der Fassungsscheibenwinkel und/oder die Inklination bzw. eine Neigung der Fassung ermittelt werden. Weiterhin kann durch ausgewählte Brillenpunkte, Gesichtspunkte und durch Positionen dieser Punkte im 3D-Raum die Vorneigung der Fassung und/oder der Hornhautscheitelabstand der Fassung ermittelt werden. Positionen dieser Punkte im 3D-Raum können durch weitere Sensordaten des Endgeräts bestimmt und/oder verbessert werden.

Ein jeweiliger Augendrehpunkt, aber auch andere Gesichtspunkte, wird bzw. werden aus den sensorisch erfassten Sensordaten des Gesichts berechnet und/oder ausgewählt. Aus den Gesichtspunkten wird ein Gesichtsmesh bzw. ein entsprechendes Netz oder Geflecht des Gesichts erzeugt, mit dem das Gesicht 3D-modelliert und/oder dargestellt wird. Diese Erzeugung des Augendrehpunkts, aber auch der Gesichtspunkte, kann dabei mit Hilfe maschinellen Lernens durchgeführt werden. Dabei wird aus der Anzahl an Sensordaten bzw. Gesichtspunkten eine begrenzte Anzahl an Gesichtspunkten bzw. ein Augendrehpunkt erzeugt.

Der Bereich maschinellen Lernens (machine learning) umfasst dabei als Gesamtbereich die Gruppen: überwachtes Lernen (supervised learning), unüberwachtes Lernen (unsupervised learning), teilüberwachtes Lernen (semi-supervised learning) und bestärkendes Lernen (reinforcement learning). Die Erzeugung des Augendrehpunkts und/oder von Gesichtspunkten ist mit Algorithmen aus allen oben genannten Bereichen möglich.

Im Falle des überwachten Lernens wird mit Beispielen, bspw. mit Trainingsdaten, die Beziehung zwischen Sensordaten oder Gesichtspunkten und den gewünschten, auszugebenden Gesichtspunkten oder dem Augendrehpunkt dem Algorithmus vorgestellt. Der Algorithmus modelliert dann die Beziehung zwischen den Eingabedaten, (Sensordaten oder Gesichtspunkte) und Ausgabedaten (Augendrehpunkt oder Gesichtspunkte). Im Zuge einer neuen Ermittlung eines Augendrehpunkts aus Sensordaten oder Gesichtspunkten kann der Algorithmus dann aus den unbekannten Sensordaten oder Gesichtspunkten den gesuchten Augendrehpunkt oder die gesuchten Gesichtspunkte erzeugen und/oder voraussagen. Dies kann z. B. mit einem Entscheidungsbaum (decision tree) oder bspw. neuronalen Netz (neural network) durchgeführt werden.

Alternativ ist es möglich, mit unüberwachtem Lernen Sensordaten zu gruppieren. Diese Gruppierungen werden erzeugt, ohne Beispiele bzw. Trainingsdaten zu definieren. Der Algorithmus kann selbstständig Regeln und relevante Eingabedaten erkennen. Clustering-Algorithmen, wie der k-means Algorithmus, sind Beispiele für unüberwachtes Lernen. Hier ist es z. B. möglich, die Sensordaten und/oder Gesichtspunkte einfach zu gruppieren, bspw. in einen Vordergrund und in einen Hintergrund, um diese anschließend weiterzuverarbeiten. Alternativ ist auch die Kombination aus unüberwachtem und überwachtem Lernen möglich, das teilüberwachtes Lernen genannt wird.

Ein alternatives Verfahren kann auf der Basis von bestärkendem Lernen aufgebaut sein. Dabei lernt der Algorithmus kontinuierlich, welche Sensordaten z. B. am besten geeignet sind, um Gesichtspunkte zu erzeugen, indem seine Voraussage immer wieder bewertet und/oder bestärkt wird. Ein solches Verfahren sagt z. B. Augendrehpunkte voraus. Dieses Verfahren kann dann immer wieder von anderen Algorithmen bewertet werden. Mit der Dauer der Lernphase kann das Verfahren z. B. Augendrehpunkte aus anderen Gesichtspunkten immer stabiler erzeugen.

Die Ermittlung eines Augendrehpunkts oder Gesichtspunkts mittels maschinellen Lernens (machine learning) ist u. a. mit folgenden Algorithmen möglich:
- Regressionsalgorithmen, wie z. B. lineare Regression (linear regression), logistische Regression (logistic regression), Poisson Regression (Poisson regression). Algorithmen und Methoden aus dem Bereich Regularisation (Regularization), wie z. B. ridge regression oder elastic net.
- Algorithmen aus dem Bereich instanzbasiertes Lernen (instance-based learning), z. B. k-nearest neighbor, support vector machine (SVM), selbstorganisierende Karten (self organzing maps). Die Ermittlung des Augendrehpunkts oder von Gesichtspunkten ist ebenso über Bäume, wie z. B. über einen Entscheidungsbaum (decision tree), oder Clustering Algorithmen, wie z. B. k-means, hierarchische Clusteranalyse (hierarchical clustering), möglich. Im Bereich der künstlichen neuronalen Netze (artificial neural networks) können z. B. Perzeptron (perceptron), back-propagation oder Hopfield Netzwerke (Hopfield network) eingesetzt werden.
- Ebenso können neuronale Netze bzw. Netzwerke (neural networks), wie z. B. faltende neuronale Netzwerke (convolutional neural networks), vorwärtsgerichtete neuronale Netzwerke (feed forward neural networks), rekurrente neuronale Netzwerke (recurrent neural networks), eingesetzt werden.
- Algorithmen, welche schwächere Prädiktoren kombinieren, um so besser Vorhersagen zu ermöglichen: z. B. random forest oder gradient boosted trees.
- Ebenfalls einsetzbar sind Algorithmen aus dem stochastischen Lernen wie z. B. das simulierte Abkühlen (simulated annealing), Markov-Ketten (Markov chains). Darüber hinaus können Algorithmen aus dem Bereich Dimensionsreduzierung (dimensionality reduction), wie z. B. eine Hauptkomponentenanalyse (principal component analysis (PCA)), eingesetzt werden. Auch Algorithmen, welche als Basis die Formel von Bayes nutzen, wie z. B. Bayessche Netze (Baysian network), sind einsetzbar.

Der Augendrehpunkt kann mit Hilfe der vorhandenen Gesichtspunkte oder direkt mittels der Sensordaten ermittelt werden, indem einzelne Gesichtsmerkmale, wie ein lateraler oder medialer Augenwinkel, genutzt werden, um auf eine Augengröße zu schließen. Kombiniert mit anderen Gesichtsmerkmalen, bspw. Gesichtspunkten, kann die Augengröße und damit der Augendrehpunkt geschätzt werden. Hier kann z. B. auf eine Kopfgröße bzw. Gesichtsgröße der Person aufgrund von Gesichtspunkten, die mit dem mindestens einen Tiefensensor ermittelt werden, zurückgegriffen werden, wobei z. B. auch das Geschlecht der Person berücksichtigt werden kann, welches durch Algorithmen trainiert und mit maschinellem Lernen erkannt werden kann. Durch Modelle für Augen oder statistisch erfasste Werte, z. B. Mittelwerte, für bereits erfasste Augen, können die passende Augengröße und die Position des Augendrehpunkts bestimmt werden.

Alternativ ist es möglich, den Augendrehpunkt zu ermitteln, indem die Person als Nutzer des Endgeräts aufgefordert wird, bestimmte Symbole auf dem Display des Endgeräts zu betrachten. Eine Ermittlung einer Blickrichtung (z. B. durch machine learning) ist in der Literatur hinreichend bekannt. Betrachtet die Person die Symbole und wird für jedes Symbol eine Blickrichtung ermittelt, kann der Augendrehpunkt als Schnittpunkt aller Blickrichtungen auf das Endgerät, bspw. Smartphone, ermittelt werden, was bei bestimmten Kopfhaltungen möglich ist.

Bei einer Ausführung des Verfahrens ist vorgesehen, dass vor oder nach der virtuellen Anordnung der Brille auf dem Gesicht für jeweils ein Glas jeweils eine begrenzte Anzahl an Brillenpunkten automatisch ausgewählt wird.

Außerdem wird für jeweils ein Glas mindestens eine Außenlinie ermittelt. Alternativ oder ergänzend wird für jeweils ein Glas eine geometrische Figur erzeugt, mit der das jeweilige Glas, üblicherweise dessen Krümmung und/oder Ausdehnung, repräsentiert wird. Dabei kann die geometrische Figur unter Berücksichtigung der mindestens einen Außenlinie erzeugt werden. Für eine Kugel wird darüber hinaus ein Brillenpunkt auf der Oberfläche eines Glases verwendet. Dabei wird für die Krümmung eine Kugel und für die Ausdehnung eine ebene Fläche als geometrische Figur verwendet. Mit der ebenen Fläche wird der Versatz des Zentrierpunkts zum Rand des Glases ermittelt.

Die geometrische Figur ist in Ausgestaltung als Körper, in Ausgestaltung als rotationssymmetrischer Körper, bspw. als Kugel, als ebene Fläche oder als Geometrielinie, ausgebildet. Weiterhin kann eine orthogonale Projektion des Augendrehpunkts eines jeweiligen Auges auf die ebene Fläche, Kugel oder auf eine andere geometrische Figur erzeugt werden. Hierbei kann der Abstand dieses Projektionspunkts zu einem Rand der geometrischen Figur und/oder der Außenlinien des Glases für die Bestimmung des Zentrierpunkts genutzt werden. Es ist möglich, mit der einfachen ebenen Fläche als geometrische Figur die Position des Zentrierpunkts durch Messung des Abstands des Projektionspunkts zum Rand der Figur abzulesen. In der Realität sind die Gläser bzw. entsprechende Scheiben gekrümmt. Daher entspricht eine ebene Fläche nicht der Realität. Demnach ist es möglich, wie in einem Optikergeschäft, Zentrierpunkte der Gläser auf einer gekrümmten Fläche als geometrische Figur aufzuzeichnen. Hierzu wird aus Brillenpunkten die Kugel erzeugt, die eine derartige Krümmung repräsentiert. Weiterhin wird der Augendrehpunkt auf eine jeweilige Kugel eines Glases projiziert. Alternativ wird der Projektionspunkt auf die ebene Fläche mit dem Augendrehpunkt als Ausgangspunkt einer Geraden definiert. Die Gerade wird anschließend mit der Kugel geschnitten. Da eine Kugel keinen Rand aufweist, wird der Schnittpunkt bzw. Projektionspunkt auf eine weitere, üblicherweise rechteckige, ebene Fläche projiziert, von der die Position des Zentrierpunkts abgelesen werden kann, wobei dieser Zentrierpunkt dem Durchblickspunkt durch das jeweilige Glas in Hauptblickrichtung entspricht.

Zur Erfüllung der Augendrehpunktforderung ist vorgesehen, dass der optische Mittelpunkt des Glases bzw. der Zentrierpunkt und der Augendrehpunkt auf einer Achse liegen, wenn durch ein jeweiliges Brillenglas geblickt bzw. geschaut wird. Da dies nicht für jede Blickrichtung der Fall sein kann, zumal aus unterschiedlichen Richtungen durch das Glas geblickt werden kann, wird der optische Mittelpunkt bzw. Zentrierpunkt der Linse bzw. des Glases dort platziert, wo am häufigsten durch das Glas geblickt wird. Diesbezüglich wird empirisch nachgewiesen, dass meistens unter einem Winkel von 5° bis 10° unterhalb des Horizonts auf den Boden geblickt wird, weshalb Fassungen in der Regel einen derartigen Winkel zwischen den Bügeln und den Gläsern und somit die Inklination aufweisen. Die Anforderung an den Augendrehpunkt wird nach der Platzierung der Brille auf dem Gesicht nur dann erfüllt, wenn der Zentrierpunkt so gewählt wird, dass eine Gerade, die durch den Zentrierpunkt und den Augendrehpunkt verläuft, das Glas bzw. die Linse orthogonal schneidet. Üblicherweise existieren für die Linse unendlich viele Geraden, die auf der Linse orthogonal positioniert werden können. Allerdings verläuft nur eine dieser Geraden auch durch den Augendrehpunkt. Demnach wird der Zentrierpunkt dadurch ermittelt, indem der Augendrehpunkt orthogonal auf die Linse bzw. die hierfür vorgesehene geometrische Figur projiziert wird. Durch die Inklination der Fassung, welche bereits für Hauptsehaufgaben optimiert ist, liegt der Zentrierpunkt dann in der Nähe eines Hauptdurchblickspunkts.

Mit der geometrischen Figur wird eine vertikale und horizontale Verschiebung eines Zentrierpunkts bzw. eines primären Brillenpunkts des jeweiligen Glases gemessen. Eine derartige Verschiebung wird relativ zu dem geometrischen Mittelpunkt bzw. Schwerpunkt des Glases oder dem Rand des Glases gemessen. Dabei kann aus einer ersten ebenen Projektionsfläche oder einer anderen ersten geometrischen Figur mindestens eine weitere ebene Projektionsfläche oder geometrische Figur abgeleitet werden. Der Projektionspunkt wird ebenfalls weiterprojiziert. Dann wird die Position des Projektionspunkts auf dieser Figur oder Fläche ermittelt, welcher dem Zentrierpunkt des Glases entspricht. Weiterhin wird die vertikale und horizontale Verschiebung des Projektionspunkts bzw. Zentrierpunkts zum Schwerpunkt oder Rand der Figur gemessen.

Außerdem ist es möglich, dass ein horizontaler Abstand zwischen dem Projektionspunkt und einem Ursprung der Fassung, der üblicherweise in einer Mitte der Brücke der Brille angeordnet ist, ermittelt, bspw. berechnet und/oder gemessen, wird. Alternativ kann auch ein Abstand zwischen dem Projektionspunkt und dem Rand des Glases, der innen und/oder nasal angeordnet bzw. der Nase zugewandt ist, ermittelt, bspw. berechnet und/oder gemessen, werden.

Der mindestens eine Zentrierpunkt des jeweiligen Glases wird durch Projektion des Augendrehpunkts des jeweiligen Auges ermittelt. Dieser optische Mittelpunkt bzw. Zentrierpunkt muss nicht in der Mitte des Glases liegen, wie z. B. der mechanische Schwerpunkt. Nachdem die Brille virtuell aufgesetzt wurde, werden die primären Brillenpunkte der Gläser genutzt, um geometrische Figuren, wie Flächen oder Kugeln, zu erzeugen, welche die Gläser repräsentieren. Alternativ können die geometrischen Figuren auch bereits vor dem Aufsetzen vorberechnet werden. Nach dem Aufsetzen der Brille ist lediglich eine jeweilige Position der geometrischen Figuren von Bedeutung und wird aktualisiert, wobei die Position der primären Brillenpunkte des jeweiligen Glases genutzt wird, um die Positionen der geometrischen Figuren zu aktualisieren. Anschließend werden die Augendrehpunkte auf die geometrischen Figuren projiziert und können anschließend vermessen oder weiterprojiziert werden.

Zeitlich vor dem Aufsetzen und vor dem Zentrieren wird die Außenlinie des jeweiligen Glases erzeugt und ein Brillenpunkt auf der Oberfläche des Glases bzw. der Linse ausgewählt. Um primäre Brillenpunkte bzw. die Außenlinie der Linse zu erzeugen, wird ein temporärer mittlerer Brillenpunkt erzeugt oder ausgewählt. Der mittlere Brillenpunkt befindet sich mittig in den Brillenpunkten des jeweiligen Glases. Ausgehend von diesem mittleren Brillenpunkt werden zwei ebene Flächen aufgespannt, die sich auf einer Schnittlinie schneiden. Dabei sind die beiden ebenen Flächen zueinander um einen festen, bspw. spitzen, Winkel orientiert. Zwischen den beiden ebenen Flächen liegt anschließend eine Untermenge der Brillenpunkte der Gläser. Aus dieser Auswahl an Brillenpunkten wird ein primärer Brillenpunkt ausgewählt, welcher am Außenrand des Glases liegt. Dieser Punkt wird zu der Außenlinie hinzugefügt. Danach werden die beiden ebenen Flächen unter Beibehaltung des Winkels um eine Schnittlinie gedreht und aus den zwischen den ebenen Flächen liegenden Brillenpunkten ein weiterer primärer Brillenpunkt ausgewählt. Nach mehrmaligem Drehen der beiden ebenen Flächen sind die insgesamt n primären Brillenpunkte und die Außenlinie ermittelt. Dabei sind diese primären Brillenpunkte auf der Außenlinie um den temporären, mittleren Brillenpunkt symmetrisch gleichmäßig verteilt, wobei diese Brillenpunkte auf der Außenlinie einen definierbaren maximalen Abstand zu dem primären Brillenpunkt aufweisen. Danach kann der mittlere Brillenpunkt verworfen werden.

In Ausgestaltung wird mindestens ein Brillenpunkt auf einer Oberfläche des jeweiligen Glases ermittelt. Mit der Außenlinie kann die geometrische Figur erzeugt werden, welche dann die Krümmung des Glases berücksichtigt.

Ebenfalls wird bereits vor dem virtuellen Aufsetzen der Brille für jeden Bügel aus der begrenzten Anzahl an Brillenpunkten zunächst mindestens ein primärer Brillenpunkt ermittelt, der an dem unteren Rand des mindestens einen Bügels angeordnet wird, wobei mehrere untere primäre Brillenpunkte eine Grundlinie des jeweiligen Bügels bilden.

Üblicherweise wird der mindestens eine primäre Brillenpunkt aus der begrenzten Anzahl an Brillenpunkten ausgewählt und/oder berechnet und somit ermittelt. Entsprechend wird für die Brücke und ggf. auch für die beiden Nasenauflagen, die zu der Brücke symmetrisch angeordnet sind, aus der begrenzten Anzahl an Brillenpunkten zunächst mindestens ein primärer Brillenpunkt ermittelt, der an dem unteren Rand der Brücke und ggf. an jeweils einem Rand einer Nasenauflage angeordnet wird. Dieser Rand ist in Richtung der Nase orientiert und kann je nach Definition als innerer und/oder unterer Rand bezeichnet werden bzw. ausgebildet sein. Dabei können mehrere innere und/oder untere primäre Brillenpunkte je nach Definition eine Linie, bspw. Grundlinie bzw. Kontrolllinie, der Brücke und ggf. auch der Nasenauflagen bilden. Dabei ist es möglich, dass zwischen zwei voneinander entfernten Brillenpunkten entlang der Linie ein dazwischen liegender Brillenpunkt entlang der Linie ermittelt wird, der zu einem jeweiligen Gesichtspunkt einen geringeren Abstand als die beiden erstgenannten Brillenpunkte aufweist.

In weiterer möglicher Ausgestaltung werden bspw. jeweils drei Brillenpunkte aus der begrenzten Anzahl an Brillenpunkten einer jeweiligen Komponente der Brille zusammengefasst, wobei aus den jeweils drei Brillenpunkten ein jeweils ebenes Dreieck gebildet wird, wobei aus mehreren ebenen Dreiecken der jeweiligen Komponente der Brille ein virtuelles Netz der Brille gebildet wird. Entsprechend werden bspw. jeweils drei Gesichtspunkte aus der begrenzten Anzahl an Gesichtspunkten eines jeweiligen Bereichs des Gesichts zusammengefasst, wobei aus den jeweils drei Gesichtspunkten ein jeweils ebenes Dreieck gebildet wird, wobei aus mehreren ebenen Dreiecken der jeweiligen Komponente des Gesichts das virtuelle Mesh bzw. Netz des Gesichts gebildet wird, wobei das Mesh aus diesen Dreiecken zusammengestellt wird.

Weiterhin kann für das Gesicht ein dreidimensionales Koordinatensystem und/oder für die Brille ein dreidimensionales Koordinatensystem definiert werden, wobei jedes Koordinatensystem einen eigenen Ursprung aufweist, wobei die beiden Koordinatensysteme beim Aufsetzen der Brille auf dem Gesicht relativ zueinander bewegt, d. h. verschoben und/oder gedreht, werden, wobei die beiden Koordinatensysteme zu einem gemeinsamen Koordinatensystem vereinigt werden.

Dabei kann jedes Koordinatensystem eine Achse aufweisen, die einen Abstand des Ursprungs eines jeweiligen Koordinatensystems zu einem gemeinsamen Referenzpunkt aufweist, wobei bspw. auch ein Abstand von Gesichtspunkten des Gesichts zu dem mindestens einen Sensor gemessen und/oder berechnet und somit ermittelt werden kann. Hierbei ist es denkbar, dass die Achse des Koordinatensystems für das Gesicht parallel zu einer geradeaus gerichteten Blickrichtung der Augen der Person orientiert wird. Üblicherweise wird sowohl das Gesicht als auch die Brille mit dem jeweils zugeordneten Koordinatensystem skaliert. Der Ursprung des Koordinatensystems des Gesichts kann am oder im Kopf der Person liegen, auf deren Gesicht die Brille virtuell anzuordnen ist. Der Ursprung des Koordinatensystems der Brille kann in der Front der Brille, üblicherweise in der Brücke und/oder Umrandung der Brille, mittig angeordnet sein. In Ausgestaltung kann das Koordinatensystem der Brille relativ zu dem des Gesichts bewegt, d. h. verschoben und/oder gedreht, und an das Koordinatensystem des Gesichts angepasst werden.

Üblicherweise wird das Koordinatensystem für die Brille anhand der begrenzten Anzahl an Brillenpunkten, die bspw. aus der Datenbank bereitgestellt werden und die Brille grundsätzlich geometrisch beschreiben, bspw. bei einer Präparierung der Brille festgelegt. Das Koordinatensystem für das Gesicht wird anhand des sensorisch erfassten bzw. gescannten Gesichts der Person festgelegt.

In möglicher Ausgestaltung des Verfahrens wird berücksichtigt, ob die Fassung genau auf jenen Bereichen der Nase und Ohren angeordnet wird, auf dem später auch die physikalische bzw. reale Fassung angeordnet wird. Dabei kann auch eine leichte Verschiebung berücksichtigt werden. Der Gesamteindruck der Brille als Objekt wird nicht allein anhand des Aussehens, bspw. Farbe und Größe, auf dem Gesicht der Person bzw. des Trägers beurteilt.

Das Verfahren besteht aus mehreren Schritten, um die virtuelle Anordnung zu erzeugen, die der physikalischen Anordnung entspricht und gleichzeitig rechnerisch so wenig Ressourcen benötigt, um eine Berechnung auf dem mobilen Endgerät, wie einem Smartphone, zu ermöglichen. Zudem umfasst das System eine Benutzeroberfläche, die es einem Nutzer ermöglicht, die virtuelle Anordnung der Brille, d. h. das erfindungsgemäße Verfahren, durchzuführen, was einen effektiven Brillenanpassungsprozess von zu Hause aus ermöglicht.

Die erfindungsgemäße computergestützte Applikation ist für ein mobiles Endgerät vorgesehen, wobei die Applikation dazu konfiguriert ist, auf dem mobilen Endgerät implementiert und ausgeführt zu werden, wobei die Applikation bei Ausführung auf dem mobilen Endgerät dazu konfiguriert ist, mit einem ein Gesicht eines Nutzers des mobilen Endgeräts erfassenden Sensor des mobilen Endgeräts in kommunikative Verbindung zu treten und auf Basis eines mit dem erfassten Gesicht erstellten, ggf. berechneten, virtuellen 3D-Modells und eines bereitgestellten 3D-Modells der Brille automatisch beim Positionieren der Brille auf dem Gesicht einander zugeordnete Brillenpunkte und Gesichtspunkte zu berechnen, die Brille unter Nutzung der einander zugeordneten und berechneten Brillenpunkte und Gesichtspunkte virtuell auf dem Gesicht anzuordnen, bspw. zu positionieren, und in Ausgestaltung bzw. optional zu zentrieren. Weiterhin ist die virtuell auf dem Gesicht angeordnete, bspw. positionierte, Brille auf einer Ausgabeeinheit des mobilen Endgeräts anzuzeigen. Das 3D-Modell der Brille kann mit der Applikation von einer Datenbank abgerufen oder von der Applikation selbst auf Basis von aus einer Datenbank abgerufenen physikalischen Daten berechneten oder auf Basis von dem Sensor erfassten Daten berechnet werden.

Die Applikation steht zu ihrer funktionsbestimmten Ausführung auf dem Endgerät mit einer auf dem Endgerät und/oder in einem Backend implementierten Recheneinheit und/oder Speichereinheit in kommunikativer Verbindung.

Das erfindungsgemäße System ist zum computerimplementierten Bereitstellen einer Brille für ein Gesicht einer Person ausgebildet, wobei das System ein mobiles Endgerät, das mindestens einen Sensor aufweist, aufweist, der dazu ausgebildet ist, das Gesicht zu erfassen, wobei auf dem mobilen Endgerät eine Applikation implementiert ist, auf dem mobilen Endgerät läuft, mit dem mindestens einen Sensor in kommunikativer Verbindung steht und dazu ausgebildet ist, auf Basis des erfassten Gesichts ein virtuelles 3D-Modell des Gesichts zu erstellen, auf Basis des 3D-Modells des Gesichts und eines bereitgestellten 3D-Modells der Brille bei einem Positionieren der Brille auf dem Gesicht automatisch einander zugeordnete Brillenpunkte der Brille und Gesichtspunkte des Gesichts zu berechnen und die Brille unter Nutzung der einander zugeordneten und berechneten Brillenpunkte und Gesichtspunkte virtuell auf dem Gesicht anzuordnen, bspw. zu positionieren, und in Ausgestaltung bzw. optional zu zentrieren.

Das erfindungsgemäße System ist zum computerimplementierten Bereitstellen einer Brille für ein Gesicht ausgebildet. Die Brille weist zwei Gläser und eine Fassung mit einer Brücke und zwei Bügeln als Komponenten auf, wobei die Brücke innen zwischen den beiden Gläsern angeordnet wird, wobei die Gläser zwischen den beiden Bügeln angeordnet werden. Das System weist ein Endgerät mit mindestens einem üblicherweise optischen Sensor auf. Der mindestens eine Sensor des Endgeräts ist dazu ausgebildet, Sensordaten für die Nase, die Augen und die Ohren als Bereiche des Gesichts sensorisch zu erfassen. Das Endgerät ist weiterhin dazu ausgebildet, bei einem virtuellen Anordnen der Brille auf dem Gesicht aus den Sensordaten für die Nase, die Augen und die Ohren jeweils eine vorgegebene begrenzte Anzahl an Gesichtspunkten für die Nase, die Augen und die Ohren unter Anwendung der Applikation zumindest teilweise dynamisch zu berechnen und automatisch auszuwählen, wobei die Gesichtspunkte zusammen das virtuelle 3D-Modell des Gesichts bilden. Das Endgerät ist auch dazu ausgebildet, einen Augendrehpunkt und für die Brücke aus der begrenzten Anzahl an Brillenpunkten bzw. ursprünglichen Brillenpunkten mindestens einen primären Brillenpunkt zu ermitteln, der an einem unteren Rand der Brücke angeordnet wird, wobei dieser mindestens eine primäre Brillenpunkt mindestens einem Gesichtspunkt der Nase zugeordnet wird. Das Endgerät ist zudem dazu ausgebildet, für jeden Bügel aus der begrenzten Anzahl an Brillenpunkten bzw. ursprünglichen Brillenpunkten mindestens einen primären Brillenpunkt zu ermitteln, der an einem unteren Rand des jeweiligen Bügels angeordnet wird, wobei dieser mindestens eine primäre Brillenpunkt mindestens einem als Ohrpunkt ausgebildeten Gesichtspunkt des Ohrs zugeordnet wird. Es ist vorgesehen, dass die Brillenpunkte der Brille bzw. Fassung, also der Brücke und der Bügel, dem mobilen Endgerät über eine Datenverbindung aus einer Datenbank bereitgestellt werden, auf die die Applikation, die auf dem Endgerät implementiert ist, zugreift. Dabei ist es auch möglich, dass bereits mit der Datenbank und/oder einer damit verbundenen Software eine Auswahl und somit Reduzierung der Brillenpunkte durchgeführt wird. Auf Grundlage der extern bereitgestellten Brillenpunkte wird von dem Endgerät unter Berücksichtigung der Gesichtspunkte ein virtuelles Aufsetzen der Brille auf dem Gesicht berechnet. Neben dem virtuellen Aufsetzen werden mit dem Endgerät unter Nutzung der Applikation auch Zentrierpunkte für Gläser der Brille berechnet.

Die von dem Sensor des mobilen Endgeräts erfassten Daten des Gesichts können mittels der App über eine drahtlose oder eine drahtgebundene Verbindung automatisch an eine Recheneinheit des mobilen Endgeräts oder mittels einer Funkverbindung, bspw. Mobilfunkverbindung oder WLAN, automatisch an ein Backendsystem, das bspw. in einer Cloud lokalisiert ist, übermittelt werden. Bei der App handelt es sich um eine mobile App, d. h. um eine Anwendungssoftware auf dem mobilen Endgerät, die dazu ausgelegt ist, unter Verwendung bzw. Ansteuerung eines in der Regel ohnehin auf dem mobilen Endgerät bereits implementierten Sensors, ein Gesicht sensorisch zu erfassen und mit Hilfe einer ebenfalls von der App ansteuerbaren Recheneinheit auf Basis der erfassten Daten des Gesichts ein virtuelles 3D-Modell des Gesichts zu erstellen. Durch Ansteuerung der Recheneinheit durch die App können alle von dem erfindungsgemäßen Verfahren vorgesehenen Schritte der Positionierung der Fassung und der Zentrierung der Gläser der Brille auf dem Gesicht ausgeführt werden. Ferner ermöglicht die App durch entsprechende Ansteuerung der Recheneinheit und einer mit der Recheneinheit in kommunikativer Verbindung stehenden Anzeigeeinheit eine Darstellung von einzelnen Resultaten einzelner Verfahrensschritte, insbesondere eine 3D-Darstellung einer auf dem Gesicht positionierten Brille auf der Anzeigeeinheit. In einer Ausführungsform umfasst die Anzeigeeinheit ein Virtual-Reality (VR)-Headset. In einer weiteren Ausführung umfasst die Anzeigeeinheit ein Augmented-Reality-Headset. Die App erlaubt es einem Benutzer des mobilen Endgeräts, ein GUI-Layout mit einem Maximum an Flexibilität für ein Maximum an Benutzerfreundlichkeit zu konfigurieren. Die App kann von einem Benutzer über ein Eingabegerät, das in kommunikativer Verbindung mit dem mobilen Endgerät steht, wie z. B. eine Tastatur, eine Computermaus, ein Trackball oder ein Touchscreen, bedient bzw. aktiviert werden.

Zu den (ggf. vorübergehenden oder nicht vorübergehenden) computerlesbaren Medien, die zur Speicherung von Computerprogrammbefehlen und Daten geeignet sind, gehören alle Formen nichtflüchtiger Speicher, Medien und Speichereinrichtungen, einschließlich bspw. Halbleiterspeichereinrichtungen, z. B. nichtflüchtiger löschbarer programmierbarer Speicher (EPROM), nichtflüchtiger elektrisch löschbarer programmierbarer Speicher (EEPROM) und Flash-Speichereinrichtungen; Magnetplatten, z. B. interne Festplatten oder Wechseldatenträger; magnetooptische Platten; und CD-ROM, DVD+/-R. DVD-RAM und DVD-ROM-Platten. Der Speicher kann verschiedene Objekte oder Daten speichern, einschließlich Caches, Klassen, Frameworks, Anwendungen, Sicherungsdaten, Jobs, Webseiten, Webseitenvorlagen, Datenbanktabellen, Repositories, in denen geschäftliche und/oder dynamische Informationen gespeichert sind, sowie alle anderen geeigneten Informationen einschließlich aller Parameter, Variablen, Algorithmen, Anweisungen, Regeln, Einschränkungen oder Verweise darauf. Darüber hinaus kann der Speicher auch andere geeignete Daten enthalten, wie z. B. Protokolle, Richtlinien, Sicherheits- oder Zugangsdaten, Berichtsdateien und andere. Der Prozessor und der Speicher können durch eine spezielle Logikschaltung ergänzt oder in diese integriert werden. Die Applikation bzw. App ist ein Computerprogramm und kann in jeder Form von Programmiersprache geschrieben sein, einschließlich kompilierter oder interpretierter Sprachen oder deklarativer oder prozeduraler Sprachen, und es kann in jeder Form eingesetzt werden, einschließlich als eigenständiges Programm oder als Modul, Komponente, Unterprogramm oder andere Einheit, die sich zur Verwendung in einer Computerumgebung eignet. In einer Verkörperung sind die computerausführbaren Anweisungen der vorliegenden Offenlegung in Swift, C#, Ruby, TypeScript, HTML, CSS und Python geschrieben.

Ein Computerprogramm kann, muss aber nicht, einer Datei in einem Dateisystem entsprechen. Ein Computerprogramm kann in einem Teil einer Datei gespeichert sein, der andere Programme oder Daten enthält, z. B. ein oder mehrere Skripte, die in einem Markup Language-Dokument gespeichert sind, in einer einzigen Datei, die dem betreffenden Programm gewidmet ist, oder in mehreren koordinierten Dateien, z. B. Dateien, die ein oder mehrere Module, Unterprogramme oder Codeteile speichern. Ein Computerprogramm kann so eingesetzt werden, dass es auf einem Computer, d. h. einer Recheneinheit, oder auf mehreren Computern ausgeführt werden kann, die sich an einem Standort bzw. auf einem Gerät, bspw. auf dem mobilen Endgerät, befinden oder über mehrere Standorte verteilt und durch ein Kommunikationsnetz miteinander verbunden sind.

Das Endgerät ist ebenfalls dazu ausgebildet, die Brille unter Berücksichtigung einer jeweiligen Zuordnung eines jeweiligen Brillenpunkts der Brille zu einem jeweiligen Gesichtspunkt des Gesichts auf dem Gesicht virtuell anzuordnen und weiterhin darzustellen.

Mit dem vorgestellten System, d. h. mit dem Endgerät und dem Sensor, und/oder der Applikation ist es möglich, eine Ausführungsform des vorgestellten Verfahrens auszuführen.

Es ist vorgesehen, dass eine Ausführungsform des vorgestellten Verfahrens mit einer Ausführungsform des vorgestellten Systems durchgeführt wird. Mit dem Verfahren zum Bereitstellen der Brille ist es u. a. möglich, die Brille auf dem Gesicht, üblicherweise dem 3D-Modell des Gesichts, virtuell anzupassen, auf bzw. an dem Gesicht virtuell anzuordnen und/oder an das Gesicht virtuell anzupassen. Dies umfasst auch ein Platzieren der Brille und/oder ein Zentrieren der Gläser der Brille, die in der Fassung der Brille aufgenommen sind. Dies ist u. a. auch unabhängig von einer materiellen Struktur der Gläser bzw. Linsen der Brille möglich, die aus einem transparenten amorphen Feststoff gebildet sind, bei dem es sich um Siliziumdioxid oder um einen Kunststoff handeln kann. Analog zu einem Anpassen einer Brille in einem Optikergeschäft ist es in Ausgestaltung des Verfahrens auch möglich, die Bügel und/oder die Nasenauflagen beim virtuellen Aufsetzen der Brille bedarfsweise virtuell zu verformen, bspw. zu biegen.

Zum Durchführen des Verfahrens mit dem Endgerät wird auf dieses entsprechende Software und somit eine Anwendung bzw. Applikation geladen und installiert, wobei einer Person als Nutzer, die die Brille auf ihrem Gesicht virtuell anordnen will, auf einem Anzeigefeld bzw. Display des Endgeräts eine Benutzeroberfläche und/oder ein Menü bereitgestellt wird, mit der bzw. dem die Person durch Schritte zur Durchführung des Verfahrens geführt wird. Aufnahmen des Gesichts werden von einer Person mit dem Sensor, bspw. einem Tiefensensor, des Endgeräts angefertigt, aus denen die Sensordaten des Gesichts abgeleitet werden.

Mit dem Verfahren und dem System sind eine automatische Echtzeit-Anordnung einer 3D-Brillenfassung auf dem Gesicht und eine Zentrierung der Gläser und/oder die Ermittlung der Zentrierparameter mit dem mobilen Endgerät möglich.

Korrekturgläser einer Brille sind individuelle Gläser, die an den Träger der Brillenfassung bzw. an dessen Gesicht und Augen angepasst sind. Bei der Anpassung dieser Gläser werden nicht nur die verschreibungspflichtigen Werte der Gläser berücksichtigt.

Im Rahmen des Verfahrens werden die Gläser, die bspw. als Einstärkengläser ausgebildet sein können, abhängig von einer Pupillendistanz und/oder Augendrehpunktdistanz und einer Durchblickshöhe in einer Hauptblickrichtung zentriert. Dabei verlaufen optische Achsen der Gläser durch Augendrehpunkte. Ein optischer Mittelpunkt eines jeweiligen Glases, der sich von dem mechanischen Schwerpunkt des Glases unterscheiden kann, der Hauptdurchblickspunkt durch ein jeweiliges Glas und der Augendrehpunkt eines jeweiligen Auges bzw. Augapfels, befinden sich auf einer Achse. Dabei entspricht die Pupillendistanz einem Abstand von Mittelpunkten der Pupillen, wenn die Augen bei einem Blick geradeaus in Hauptrichtung ein quasi unendlich weit entferntes Objekt fixieren. Die Durchblickshöhe ist der Abstand zwischen dem Durchblickspunkt in Hauptblickrichtung und einem unteren Rand des jeweiligen Glases der Brille.

Im Rahmen des Verfahrens können Gläser verschiedener Typen genutzt werden, z. B. Einstärken- oder Mehrstärkengläser, wie z. B. Gleitsichtgläser. Auch Mehrfokalgläser, wie z. B. Bifokal, Trifokal, etc., können in dem Verfahren eingesetzt werden. Ebenso kann das Verfahren für entspiegelte Gläser mit Filtern und Beschichtungen genutzt werden. Auch Gläser für bestimmte Bereiche, wie z. B. zum Autofahren, für den Arbeitsplatz, zum Lesen oder zur Handarbeit o. ä., können in diesem Verfahren genutzt werden. Diese können als Spezial-Brillengläser bezeichnet werden.

Um visuelle Verzerrungen während des Tragens der personalisierten Brillen aufgrund induzierter Prismen zu vermeiden, ist mit dem Verfahren eine gute Anpassung der Gläser an die Fassung möglich. Hierbei ermittelte Parameter sind z. B. die Pupillendistanz bzw. ein Pupillenabstand oder Augendrehpunktabstand, der Hornhautscheitelabstand, die Vorwärtsneigung der Fassung und/oder der Fassungsscheibenwinkel. Weitere bei dem Verfahren optional ermittelbare Parameter sind die Segmenthöhe für die Hauptsichtrichtung (Höhe) und der optische Zentrierungsabstand (engl. optical centration distance, OCD).

Es ist vorgesehen, dass die optischen Achsen der Gläser durch die Augendrehpunkte des Trägers verlaufen. Bei dem Verfahren werden die Gläser zentriert, wenn der Träger durch die bei dem Verfahren zentrierten Gläser schaut, entspricht ein Durchblickspunkt eines Glases, durch den er schaut, auch dem optischen Mittelpunkt des jeweiligen Glases. Dabei wird auch berücksichtigt, dass der Träger seinen Kopf hebt oder senkt.

Diese voranstehend genannten Punkte verändern sich je nach Position der Fassung auf dem Gesicht. Bei dem Verfahren wird u. a. der Zentrierpunkt des jeweiligen Glases gemessen, der sich je nach Position der Fassung auf dem Gesicht ändert. Auf Grundlage derartiger Messungen werden individuelle Gläser hergestellt.

Die Erfindung ermöglicht es, die optischen Anpassungsparameter auf dem mobilen Endgerät zu ermitteln, ohne dass eine physikalische Fassung bzw. Brillenfassung getragen werden muss. Die Erfindung verwendet einen 3D-Scan der Fassung und ordnet es auf einem 3D-Scan des Gesichts des Trägers an. Somit kann auf das Tragen der realen physikalischen Fassung, für das die Gläser angepasst werden sollen, verzichtet werden, da die hier erforderlichen optischen Anpassungsparameter bei dem Verfahren ermittelt werden.

Bei der Berechnung der virtuellen Anordnung der Fassung auf dem Gesicht, unter Verwendung des erfindungsgemäßen Verfahrens, werden keine großen Datensätze benötigt. Dies gilt sowohl für die Fassung als auch für den 3D-Scan des Gesichts. Bei dem Verfahren werden für durchzuführende Berechnungen aus den von den jeweiligen 3D-Scans zur Verfügung stehenden Datenmengen der Fassung und des Gesichts gezielt nur definierte Untermengen verwendet. Gleichzeitig wird die Möglichkeit aufrechterhalten, die Fassung korrekt auf dem Gesicht anordnen zu können.

Eine fehlerhafte Anordnung führt zu falschen Positionen für die primären Brillenpunkte bzw. Zentrierpunkte. Wenn Gläser mit diesen Werten hergestellt und in eine physikalische Fassung eingebaut werden, wird die Person nicht durch einen erwarteten Bereich des jeweiligen Glases blicken bzw. schauen und Unwohlsein verspüren. Mit dem hier vorgestellten Verfahren kann die Berechnung der Anordnung auf dem mobilen Endgerät, wie z. B. einem Smartphone, durchgeführt werden, ohne einen Optiker zu benötigen. Dies ermöglicht die Zentrierung der beiden Gläser der Brille von zu Hause aus und das Bestellen einer individuell ausgewählten Fassung für die Brille.

Bislang werden beim Erstellen von 3D-Scans von Fassungen oder Gesichtern große Objektdateien benötigt, die Tausende bis Hunderttausende von 3D-Punkten enthalten. Obwohl es möglich ist, eine Anordnung der Fassung auf dem Gesicht mit derartigen Sensordaten zu berechnen, ist dies zu ressourcenintensiv. Außerdem sind eine schnelle Berechnung und eine schnelle Anzeige mit solchen Datenmengen nur schwer möglich.

Bei dem Verfahren zum Bereitstellen und/oder Herstellen der Fassung wird der sonst übliche Rechenaufwand für die virtuelle Anordnung der Fassung auf dem Gesicht verringert. Entsprechend wird zum Bereitstellen und/oder Herstellen des 3D-Modells des Gesichts bei dem Verfahren der sonst übliche Rechenaufwand für die Darstellung eines Gesichts verringert. Durch Nutzung des Gesichtsnetzes (engl. face mesh) und/oder der Auswahl, üblicherweise Vorauswahl, mindestens eines Gesichtspunkts wird der Rechenaufwand zum virtuellen Positionieren bzw. Anordnen der Brille verringert.

Das Verfahren umfasst weiterhin eine Auswahl jeweiliger Bereiche des Gesichts, auf dem die Fassung angeordnet wird, wobei die jeweiligen Bereiche mit einem Minimum an Gesichtspunkten in 3D bzw. dreidimensional dargestellt werden. Die Berechnung zum Anordnen der Brille auf dem Gesicht wird entsprechend anhand eines Minimums an Gesichts- und Brillenpunkten durchgeführt. Dabei wird üblicherweise zur Anordnung der Brille auf bzw. an der Nase eine minimale 3D-Topologie einer jeweiligen Komponente der Brille und eines jeweiligen Bereichs des Gesichts, die einander zugeordnet werden, bereitgestellt. So wird bspw. zumindest zur Anordnung der Brücke auf bzw. an der Nase eine minimale 3D-Topologie der Nase bereitgestellt. Dieser ausgewählte Bereich des Gesichts ist zu dem Bereich in der Wirklichkeit gleichwertig. Entsprechend ist eine Auswahl eines Bereichs zur Anordnung jeweils eines Bügels an bzw. auf einem jeweiligen Ohr, üblicherweise an und/oder auf zumindest einem Ohrpunkt, und somit beider Bügel synchron an bzw. auf den Ohren möglich.

Nach Auswahl der jeweiligen Bereiche des Gesichts zur Anordnung der Brille bzw. der Brillenfassung umfasst das Verfahren weiter die virtuelle Anordnung der Brücke der Fassung auf der Nase. Dies umfasst weiterhin ein Drehen mindestens eines Bügels der Fassung, bis ein jeweiliger Bügel mit einem zuvor berechneten Ohrpunkt als Gesichtspunkt, in der Regel einem ungefähren Ohrpunkt, zusammenstößt und/oder darauf aufliegt.

Weiterhin werden bei dem Verfahren auf dem mobilen Endgerät, üblicherweise aus den ursprünglichen Brillenpunkten der vorgegebenen Anzahl an Brillenpunkten, die aus der Datenbank stammen, primäre Brillenpunkte und/oder Zentrierparameter bzw. Zentrierwerte der Gläser berechnet. Eine Reduzierung der 3D-Informationen eines jeweiligen Glases der Fassung zu mindestens einem Brillenpunkt kann bereits vor der Platzierung durchgeführt werden, wobei Ergebnisse in der Datenbank gespeichert werden.

Eine Benutzeroberfläche des Systems, in der Regel des Endgeräts, ermöglicht einem Benutzer, die Anordnung der Fassung auf dem Gesicht mit dem Auswertesystem berechnen und beurteilen zu können. Hierbei ist es denkbar, dass für einen Abstand zwischen einem Gesichtspunkt des Gesichts und einem Brillenpunkt ein Sollwert vorgesehen bzw. definiert wird, mit dem ein jeweiliger Istwert verglichen wird, wobei eine maximal tolerierbare Abweichung des Istwerts von dem Sollwert vorgesehen bzw. definiert wird.

Zum Bereitstellen von 3D-Daten bzw. von Objekten, hier der Fassung und des Gesichts, wird ein jeweiliger 3D-Scan der realen Fassung und des realen Gesichts mehrmals verarbeitet, bevor das jeweilige endgültige Objekt genutzt werden kann. Dabei werden als Sensordaten Punkte des Objekts, hier des Gesichts, sensorisch erfasst. Der 3D-Scan beginnt mit Punkten im 3D-Raum, die keine Verbindung zu anderen Punkten haben. Daher besteht der 3D-Scan üblicherweise aus nicht verbundenen 3D-Punkten. Während für die Bearbeitung einer 3D-Datei voneinander unabhängige bzw. miteinander nicht verbundene Punkte im Raum ein Objekt bilden, wird zur Darstellung zwischen diesen Punkten eine Verbindung hergestellt. Zum Anzeigen von einer 3D-Szene werden drei Punkte im Raum zu einem Dreieck verbunden. Drei verbundene Punkte befinden sich immer auf derselben Ebene, was für ein Rendering bzw. eine Bildsynthese von Bedeutung ist, wobei eine Darstellung eines Bilds des Objekts, d. h. des Gesichts und der Brille, aus dem Datensatz möglich ist. Es ist allgemein auch denkbar, jeweils aus n Punkten ein n-Eck bzw. Vieleck zu bilden.

Diese Dreiecke, ggf. Vielecke, werden weiterhin zusammengefügt bzw. zusammengesetzt, um das Objekt zu bilden, wobei von dem Objekt ein als Netz zu bezeichnendes bzw. ausgebildetes 3D-Modell bereitgestellt wird. Selbst ein einfaches Netz, wie bspw. für die Fassung, enthält üblicherweise mehr als hunderttausend Punkte, bspw. Brillenpunkte oder Gesichtspunkte bzw. Dreiecke.

Wie bereits erwähnt, enthält ein 3D-Scan eines realen Objekts, wie bspw. der Fassung, häufig hunderttausend Brillenpunkte. Beim Anordnen der Fassung auf dem Gesicht ist die Verarbeitung all dieser Punkte, also von Gesichtspunkten und Brillenpunkten, nicht möglich und sogar unnötig, da nicht alle Brillenpunkte nah an dem Gesicht positioniert sind.

Zur Veranschaulichung des erfindungsgemäßen Verfahrens wird ein bspw. linkshändiges Koordinatensystem definiert. In diesem Koordinatensystem zeigt die z-Koordinate bzw. zeigen z-Werte von dem Objekt oder dem Sensor weg und y-Werte nach oben. Dabei beschreibt ein z-Wert in Ausgestaltung einen Abstand eines jeweiligen Gesichtspunkts des Gesichts als Objekt vor dem Sensor, bspw. eines Tiefensensors und/oder einer Kamera, und somit eine Tiefe des Objekts.

Mit dem Verfahren wird die Anordnung der Fassung der Brille auf dem Gesicht mit dem mobilen Endgerät durchgeführt, wobei die hier vorgesehene Anordnung verglichen mit einer Anordnung einer physikalischen Brille auf einem physikalischen Gesicht in der realen Welt gleichwertig ist. Dabei wird eine Datengröße bzw. eine Menge an zu berücksichtigenden Punkten, also von Gesichtspunkten und Brillenpunkten, soweit reduziert, was eine Berechnung einer Echtzeit-Anordnung der Brille im 3D-Bereich auf einem Verbrauchergerät ermöglicht.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt in schematischer Darstellung ein erstes Beispiel für eine Brille, für die eine Ausführungsform des erfindungsgemäßen Verfahrens mit einem Endgerät als Komponente einer Ausführungsform des erfindungsgemäßen Systems durchgeführt wird.
Figur 2 zeigt in schematischer Darstellung ein zweites Beispiel für eine Brille, für die eine weitere Ausführungsform des erfindungsgemäßen Verfahrens durchgeführt werden kann.
Figur 3 zeigt das erste Beispiel der Brille und Details von Komponenten der Brille bei Durchführung der Ausführungsform des Verfahrens aus unterschiedlichen Perspektiven.
Figur 4 zeigt in schematischer Darstellung weitere Details des ersten Beispiels der Brille und ein Gesicht, auf dem das erste Beispiel der Brille bei Ausführungsform des Verfahrens virtuell aufgesetzt wird.
Figur 5 zeigt in schematischer Darstellung weitere Details des ersten Beispiels der Brille.
Figur 6 zeigt das Gesicht aus Figur 4 bei Durchführung der Ausführungsform des Verfahrens aus unterschiedlichen Perspektiven in schematischer Darstellung.
Figur 7 zeigt in schematischer Darstellung weitere Aspekte zur Durchführung der Ausführungsform des Verfahrens.

Die Figuren werden zusammenhängend und übergreifend beschrieben, gleichen Komponenten sind dieselben Bezugszeichen zugeordnet.

Die Ausführungsform des erfindungsgemäßen Verfahrens ist zum virtuellen Aufsetzen, Bewerten und Zentrieren einer Brille auf einem 3D-Modell eines Gesichts vorgesehen.

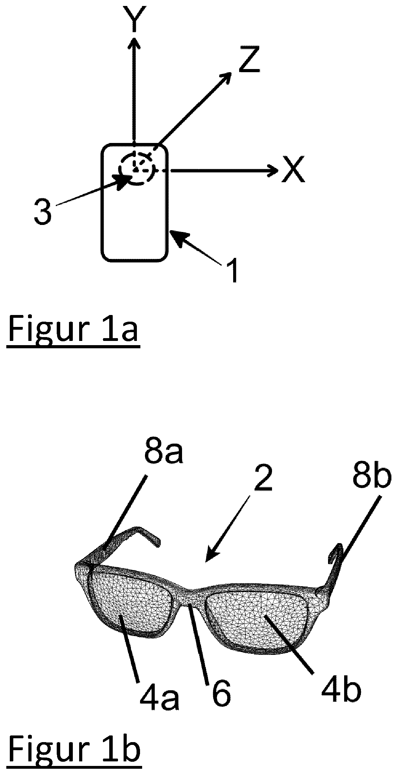

Hierzu zeigt Figur 1a ein Koordinatensystem mit einer x-Achse, einer y-Achse und einer z-Achse, wobei dieses hier definierte Koordinatensystem bei der Ausführungsform des Verfahrens als Referenz verwendet wird, wobei die genannten drei Achsen des Koordinatensystems zueinander senkrecht orientiert sind. Figur 1a zeigt außerdem ein mobiles Endgerät 1, hier ein Smartphone, das zur Kommunikation und Datenverarbeitung ausgebildet ist. Dieses Endgerät 1 weist einen hier als Tiefensensor ausgebildeten Sensor 3 zum optischen Erfassen einer Umgebung und/oder einer Szene auf. Dabei ist das Koordinatensystem bezüglich des Sensors 3 so ausgerichtet und/oder orientiert, dass die z-Achse parallel zu einer Haupterfassungsrichtung des Sensors 3 ist.

Bei dem hier bspw. linkshändigen Koordinatensystem zeigt die z-Koordinate bzw. zeigen z-Werte des sensorisch zu erfassenden Objekts, d. h. eines Gesichtspunkts des Gesichts oder eines Brillenpunkts der Brille, den Abstand des erfassten Objekts zum Sensor 3.

Die y-Achse ist vertikal ausgerichtet. Die x-Achse ist hier orthogonal zur y-Achse orientiert. Weiterhin ist hier vorgesehen, einen Ursprung des Koordinatensystems in dem Sensor 3 anzuordnen. Dabei ist in der Szene ein Punkt mit einem großen z-Wert in seiner Position weiter von einem Ursprung des Koordinatensystems und somit von dem Sensor 3 entfernt als ein Punkt mit einem kleinen z-Wert. Der Ursprung kann alternativ bspw. im Kopf einer Person liegen, auf deren Gesicht die Brille angeordnet werden soll. Bei der Ausführungsform des Verfahrens werden mit dem Sensor 3 als Sensordaten Punkte des Objekts erfasst und somit ermittelt.

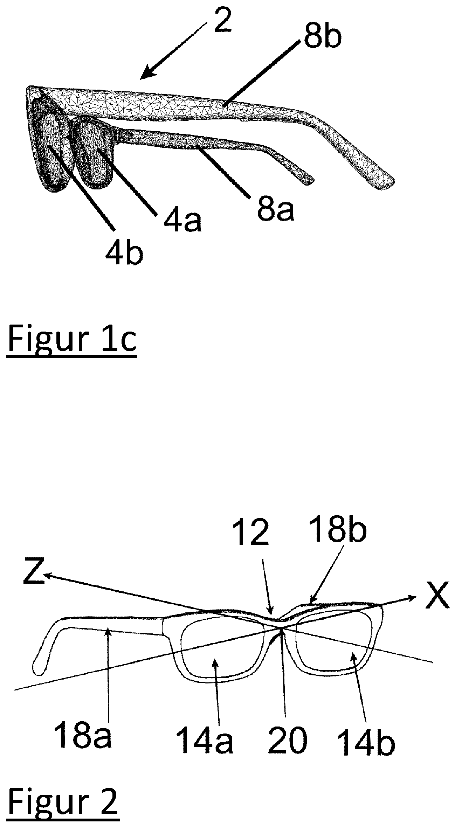

Das erste Beispiel der Brille ist in Figur 1b von vorne und in Figur 1c von der Seite dargestellt. Dabei umfasst diese Brille eine Fassung 2, die als Komponenten zwei Bügel 8a, 8b, zwei Gläser 4a, 4b bzw. entsprechende Linsen und eine Brücke 6 aufweist. Dabei ist hier weiterhin vorgesehen, dass jedes der beiden Gläser 4a, 4b im Mittelteil eingefasst ist. Das Mittelteil umfasst ebenso die Brücke 6. Das Mittelteil ist am äußeren, oberen Ende mit den Bügeln 8a, 8b verbunden.

Das in Figur 2 schematisch dargestellte zweite Beispiel der Brille umfasst ebenfalls eine Fassung 12, zwei Gläser 14a, 14b, und zwei Bügel 18a, 18b. Hierbei sind ebenfalls die beiden Gläser 14a, 14b in die Fassung 12 eingefasst. Die Fassung 12 umfasst darüber hinaus eine Brücke, wobei alternativ zu Figur 1a in Figur 2 ein Ursprung 20 eines Koordinatensystems in der Mitte der Brücke als Mittelteil der Fassung 12 angedeutet ist.

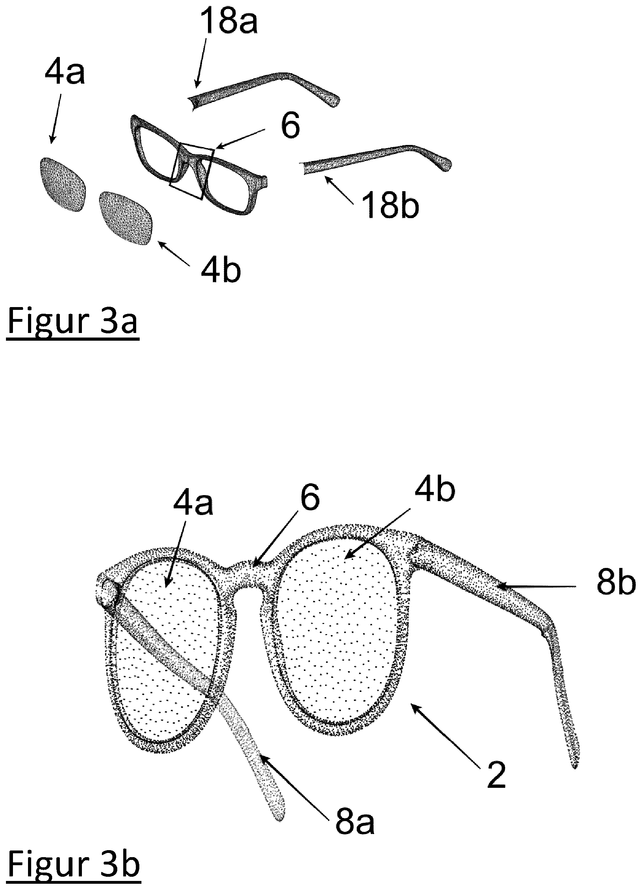

Im Rahmen des Verfahrens ist vorgesehen, einzelne Komponenten der Brille von anderen Komponenten zu trennen bzw. zu isolieren und somit eine jeweilige Komponente allein zu betrachten. Dies betrifft, wie in Figur 3a angedeutet, die Gläser 4a, 4b, die dazwischen befindliche Brücke 6 und die beiden Bügel 8a, 8b als Komponenten der Fassung 2. Es ist in Ausgestaltung ebenfalls möglich, eine Umrandung bzw. einen entsprechenden Rahmen für die Gläser 4a, 4b von anderen Komponenten der Brille zu isolieren und bei der Ausführungsform des Verfahrens getrennt zu verarbeiten.

Bei der Ausführungsform des Verfahrens ist vorgesehen, dass einzelne Komponenten der Fassung 2 durch eine geringe Anzahl an Brillenpunkten 3D- bzw. dreidimensional modelliert werden, die aus Sensordaten, hier den sensorisch erfassten Punkten der Fassung 2 der Brille, ausgewählt werden. Hierzu wird auf Figur 3b verwiesen, die die Fassung 2 mit der maximal möglichen Anzahl an Brillenpunkten, also ursprüngliche bzw. nicht-primäre Brillenpunkte, zeigt, bevor eine Auswahl an primären Brillenpunkten getroffen wurde. Dabei sind in Figur 3b den jeweiligen Brillenpunkten noch keine Bezugsziffern zugeordnet.

Um die minimale Anzahl an Brillenpunkten für den Bügel 8a, 8b herauszukristallisieren, wird der Bügel 8a, 8b selbst von dem Rest der Fassung 2 isoliert betrachtet. Dabei werden in Ausgestaltung nur Brillenpunkte verwendet, die sich in einem bestimmten positionsabhängigen Bereich entlang mindestens einer der beschriebenen Achsen befinden.

Dabei werden bspw. in einem ersten Schritt des Algorithmus die minimalen und maximalen z-Werte für den jeweiligen Bügel 8a, 8b ermittelt. Diese Extremwerte dienen dazu, den Bügel 8a, 8b in Zellen C aufzuteilen.

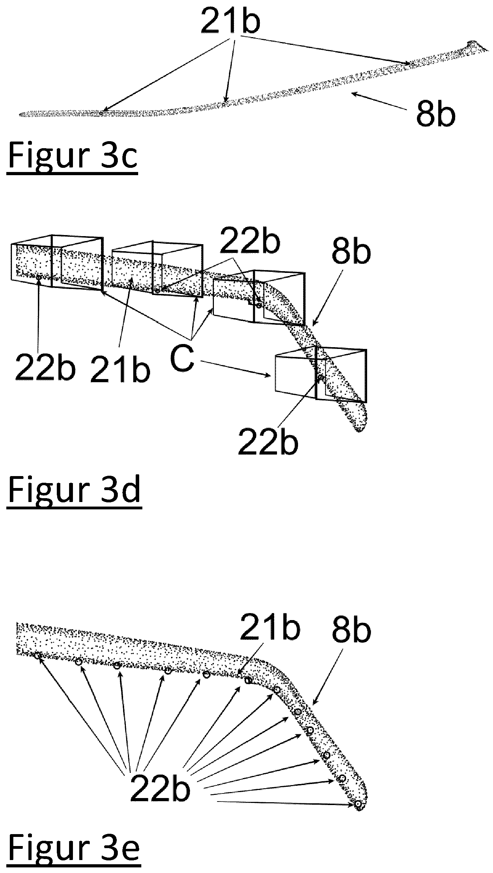

Figur 3c zeigt eine vergrößerte Darstellung des zweiten Bügels 8b. Darin sind ursprünglich vorgegebene Brillenpunkte 21b einer begrenzten Anzahl an Brillenpunkten 21b bzw. sog. nicht-primäre Brillenpunkte 21b dieses Bügels 8b angezeigt. Die Gesamtheit vorgegebener bzw. nicht-primärer Brillenpunkte 21b, also sämtlicher Brillenpunkte 21b, bilden eine Punktwolke, wobei diese vorgegebenen bzw. nicht-primären Brillenpunkte 21b dem Endgerät 1 von einer Datenbank bereitgestellt werden können.

Figur 3d zeigt die Gesamtheit der ursprünglichen bzw. nicht-primären Brillenpunkte 21b des zweiten Bügels 8b in eine Anzahl von n Zellen C, die hier jeweils als Quader schematisch dargestellt werden und gruppiert sind. Für jede Zelle C wird mindestens ein primärer Brillenpunkt 22b berechnet. Dabei wird der mindestens eine primäre Brillenpunkt 22b K (1 ... n) berechnet, indem dieser Brillenpunkt 22b für eine jeweilige Zelle C einen kleinsten bzw. minimalsten y-Wert aufweist. Dieser Brillenpunkt 22b bzw. sein x-Wert kann anschließend so angepasst werden, so dass er zentriert wird, d. h. sich in der Mitte der ursprünglichen bzw. nicht-primären Brillenpunkte 21b bezüglich seiner x-Achse befindet. Somit ist jeweils ein Brillenpunkt 22b einer jeweiligen Zelle C bezüglich der y-Achse ausgerichtet und befindet sich entlang der Grundlinie am unteren Rand des in Figur 3d und 3e gezeigten zweiten Bügels 8b. Es ist möglich, pro Zelle C nur einen Brillenpunkt 22b oder in Ausgestaltung mehrere Brillenpunkte 22b auszuwählen und/oder vorzusehen.

Figur 3e zeigt die primären Brillenpunkte 22b in der Menge der ursprünglichen bzw. nicht-primären Brillenpunkte 21b. Eine Verbindung von sämtlichen primären Brillenpunkten 22b bildet die jeweilige untere Grundlinie des Bügels 8a, 8b. Diese Grundlinie beschreibt Hauptaspekte, die bei der Anordnung der Fassung 2 auf dem Gesicht eines Trägers berücksichtigt werden. Für die Anordnung der Brille auf das Gesicht wird die Menge der primären Brillenpunkte 22b genutzt. Die untere Grundlinie umfasst jeweils mindestens einen primären Brillenpunkt 22b, der den später genauer beschriebenen Ohrpunkt als Gesichtspunkt berührt, der aus sämtlichen primären Brillenpunkten 22b ausgewählt wird.

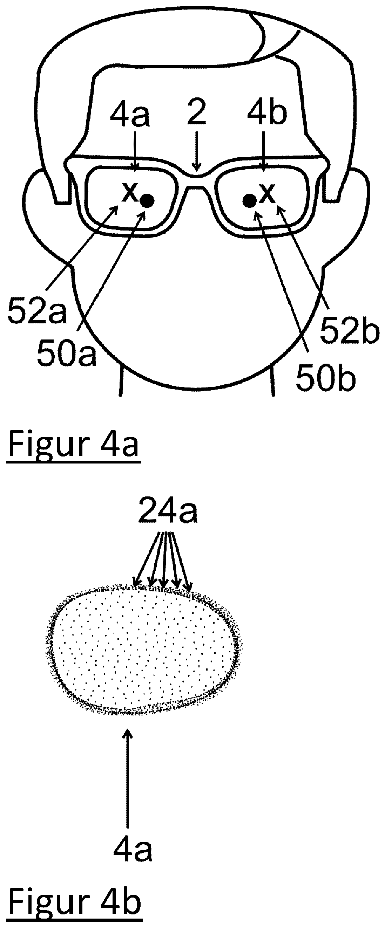

Figur 4a zeigt in schematischer Darstellung ein Gesicht einer Person, auf der eine Fassung 2 der virtuell anzuordnenden Brille angeordnet ist. Dabei zeigt Figur 4a auch jeweils eine durch einen Punkt angedeutete Pupille 50a, 50b eines jeweiligen Auges und einen jeweils durch ein Kreuz angedeuteten Augendrehpunkt 52a, 52b dieses Auges. Dabei geht aus Figur 4a hervor, dass die Pupille 50a, 50b von dem Augendrehpunkt 52a, 52b einen Abstand aufweist.

Figur 4b zeigt nicht-primäre bzw. ursprüngliche Brillenpunkte 24a des ersten Glases 4a. Diese ursprünglichen Brillenpunkte 24a werden aus sensorisch erfassten Sensordaten der Gläser 4a, 4b ausgewählt, die bereits eine begrenzte Anzahl an ursprünglichen Brillenpunkten 24a bilden.

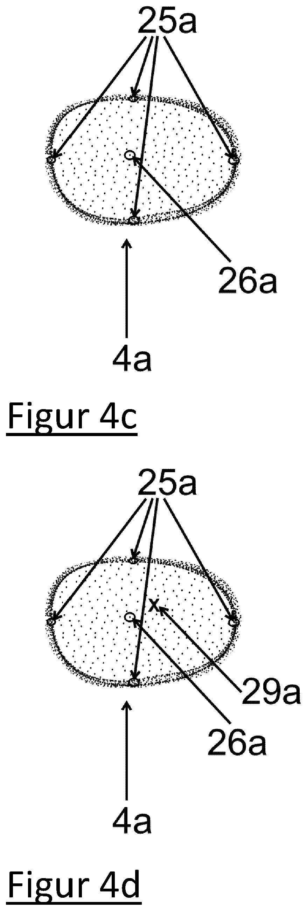

Figur 4c verdeutlicht die Berechnung für einen primären Brillenpunkt 26a. Um einen primären Brillenpunkt 26a eines Glases 4a zu erstellen, der das Glas 4a repräsentiert, ist vorgesehen, dass das Glas 4a in einem Vorverarbeitungsschritt vor einer folgenden Verarbeitung von der Fassung 2 getrennt wird. Bei der Verarbeitung werden aus den ursprünglichen bzw. nicht-primären Brillenpunkten 24a weitere Brillenpunkte 25a ausgewählt. Hier werden bspw. vier äußerste Brillenpunkte 25a eines jeweiligen Glases 4a hier jeweils ein äußerer Brillenpunkt 25a bezüglich der y-Achse oben und unten und jeweils ein äußerer Brillenpunkt 25a bezüglich der x-Achse links und rechts ermittelt. Diese äußersten Brillenpunkte 25a werden aus der Menge aller ursprünglichen Brillenpunkte 24a auf der Außenlinie des jeweiligen Glases 4a ausgewählt. Aus diesen ausgewählten Brillenpunkten 25a wird der primäre Brillenpunkt 26a als Mittelpunkt des Glases 4a berechnet, der die Hälfte des Abstands zwischen den jeweils zwei Brillenpunkten 25a oben und unten, links und rechts sowie vorne und hinten aufweist. Außerdem wird in Figur 4d eine Position eines möglichen Zentrierpunkts 29a als Zentrierparameter des Glases 4a angedeutet.

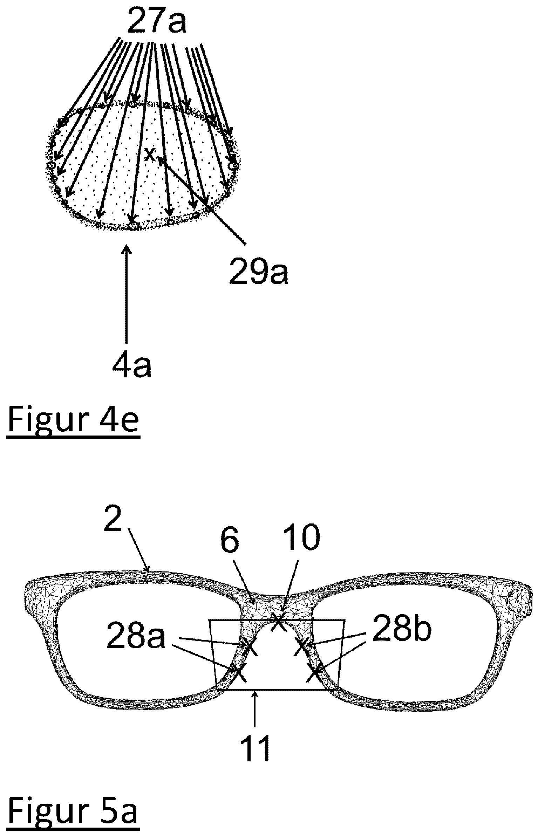

Figur 4e zeigt die finale Auswahl an primären Brillenpunkten 27a auf der Außenlinie des Glases 4a, die die Form des Glases 4a wiedergibt. Ausgehend von dem primären Brillenpunkt 27a werden zwei Ebenen mit demselben Ursprung, aber mit einem festen Winkel zwischen ihnen, erstellt. Demzufolge öffnen die Ebenen ein Dreieck, in dem alle ursprünglichen bzw. nicht-primären Brillenpunkte 24a eines Glases 4a berücksichtigt werden. Jeder ursprüngliche Brillenpunkt 24a wird auf seinen Abstand zu dem primären Brillenpunkt 26a überprüft und der ursprüngliche Brillenpunkt 24a mit dem größten Abstand zu dem primären Brillenpunkt 26a wird als primärer Brillenpunkt 27a gespeichert. In einem zweiten Schritt werden die Ebenen gedreht, wobei der feste Winkel zwischen ihnen beibehalten wird, um die nächste Gruppe von ursprünglichen Brillenpunkten 24a zu untersuchen. Eine resultierende Gruppe von primären ausgewählten Brillenpunkten 26a, 27a geben die Form des Glases 4a mit einer minimalen Anzahl an Brillenpunkten 26a, 27a wieder. Die Anzahl der Umdrehungen führt zu der Anzahl an Brillenpunkten 26a, 27a für das Glas 4a. Dieser Schritt wird für beide Gläser 4a, 4b vor dem Anordnen der Brille auf das Gesicht durchgeführt. Die primären Brillenpunkte 26a, 27a werden zur Berechnung des Zentrierparameters, hier eines Zentrierpunkts 29a eines jeweiligen Glases 4a, 4b, genutzt.

Alternativ ist es möglich, dass ursprüngliche bzw. nicht-primäre Brillenpunkte 24a eines Glases 4a, 4b in einem Raster betrachtet und verarbeitet werden. Dabei ist es möglich, dass die ursprünglichen Brillenpunkte 24a in eine Anzahl vertikaler und/oder horizontaler Zellen eingeordnet werden. Anschließend kann diese große Zelle in weitere kleinere Zellen unterteilt werden. Betrachtet werden nur Randzellen, welche als Zellen definiert sind, welche ursprüngliche Brillenpunkte 24a beinhalten, die eine Position am Rand des Glases 4a haben. Dabei wird für jede derartige Zelle nun ein extremer primärer Brillenpunkt 25a am Rand der Zelle gesucht. Damit ergeben sich äußere primäre Brillenpunkte 25a, die eine Form des Glases 4a wiedergeben.

Zur späteren Berechnung einer Krümmung des Glases 4a wird ebenfalls mindestens ein weiterer primärer Brillenpunkt 27a des Glases 4a ausgewählt. Dieser mindestens eine weitere primäre Brillenpunkt 27a ist der frontalste bzw. vorderste oder hinterste Brillenpunkt auf einer Oberfläche des Glases 4a mit einem minimalen oder maximalen z-Wert. Dieser mindestens eine Brillenpunkt 27a wird berechnet, indem eine ebene Fläche als geometrische Figur erstellt wird, welche alle ursprünglichen Brillenpunkte 24a eines jeweiligen Glases 4a enthält, wobei das Vektorprodukt aus der Höhe und der Breite die Normale dieser ebenen Fläche ist, die entsprechend durch alle Brillenpunkte 24a geht. Die Position der ebenen Fläche ist daher an einem Brillenpunkt 27a in z-Richtung festgelegt, umfasst bzw. umspannt aber eine große Anzahl an Brillenpunkten 24a in x- und y-Richtung. Um den frontalsten oder hintersten Brillenpunkt 27a zu finden, werden alle ursprünglichen Brillenpunkte 24a des Glases 4a ausgewertet. Jeder ursprüngliche Brillenpunkt 24a wird anhand seines Abstands zu der ebenen Fläche analysiert, indem der ursprüngliche Brillenpunkt 24a auf die ebene Fläche projiziert und der Abstand zwischen dem ursprünglichen Brillenpunkt 24a des Glases 4a und dem Brillenpunkt 26a, d. h. einem Projektionspunkt, gemessen wird. Mindestens ein Brillenpunkt 27a mit einem minimalen oder maximalen z-Wert wird als primärer Brillenpunkt 27a gespeichert. Dieser Brillenpunkt 27a kann ebenfalls durch seine Nachbarschaft zu anderen Brillenpunkten 24a eingegrenzt werden. Zu den primären Brillenpunkten 26a, 27a eines Glases 4a, 4b zählen also z. B. die Brillenpunkte 27a der Außenlinie, der ein mittlerer Brillenpunkt 26a des Glases 4a und ein frontaler und/oder rückseitiger Brillenpunkt.

Figur 4d zeigt weiterhin einen möglichen Zentrierpunkt 29a des ersten Glases 4a. Dieser wird durch eine orthogonale bzw. senkrechte Projektion des Augendrehpunkts 52a auf eine nachfolgend genauer beschriebene geometrische Figur ermittelt. Dabei kann der Projektionspunkt zu einem weiteren Projektions- oder Schnittpunkt weiterverarbeitet werden, wobei eine Position dieses Projektionspunkts anschließend zurück auf das Glas 4a übertragen werden kann und dort die Position des Zentrierpunkts 29a bestimmt. Alternativ oder ergänzend ist mindestens eine nachfolgend genauer beschriebene geometrische Figur bereits eine ausreichend genaue Repräsentation des Glases 4a, wonach der ermittelte Punkt und dessen Position die Position des Zentrierpunkts 29a angeben.

Bei einer alternativen Ausführung zur Berechnung der Außenlinie des Glases 4a bzw. der Linse werden ursprüngliche bzw. nicht-primäre Brillenpunkte 24a analysiert, welche an bzw. auf der Innenseite des Glases 4a platziert sind. Außerdem werden weitere Brillenpunkte ermittelt, welche an bzw. auf der Außenseite des Glases 4a platziert sind. Dabei wird zu jeweils einem Brillenpunkt 24a auf der Innenseite ein weiterer zugeordneter Brillenpunkt auf der Außenseite als Partner berechnet. Dabei unterscheiden sich die Brillenpunkte 24a auf der Innenseite von den weiteren Brillenpunkten auf der Außenseite lediglich bezüglich ihrer z-Koordinate, wobei die Brillenpunkte 24a auf der Innenseite des Glases 4a dem Gesicht zugewandt sind, wohingegen die weiteren Brillenpunkte auf der Außenseite des Glases 4a von dem Gesicht abgewandt sind. Demnach werden hierbei zwei Außenlinien, d. h. eine erste Außenlinie aus den Brillenpunkten 24a auf der Innenseite und eine zweite Außenlinie mit den weiteren Brillenpunkten auf der Außenseite, bereitgestellt. Weiterhin wird für jede der beiden Außenlinien der mittlere Brillenpunkt in dem Glas 4a bzw. in der Linse berechnet. Ausgehend von einem jeweiligen mittleren Brillenpunkt wird jeweils eine nach außen orientierte Gerade gezogen. Außerdem werden beide Gläser 4a, 4b mit dem Mittelteil verbunden. Dort, wo sich die Geraden eines jeweiligen Glases 4a, 4b mit dem Mittelteil schneiden, befindet sich der Rand des jeweiligen Glases 4a, 4b. Anhand von Schnittpunkten der Geraden mit dem Mitteteil wird die Form des Glases 4a, 4b ermittelt. Diese Schnittpunkte können als primäre Brillenpunkte der Gläser 4a, 4b genutzt werden. Das Mittelteil umfasst auch eine Umrandung der Gläser 4a, 4b. In weiterer Ausgestaltung ist es möglich, lediglich eine Außenlinie pro Glas 4a, 4b zu berücksichtigen, die sich als mittlere Außenlinie zwischen der Außenlinie auf der Innenseite und der Außenlinie auf der Außenseite der primären Brillenpunkte des Glases befindet. Üblicherweise wird bei dem Verfahren mindestens eine der erwähnten Außenlinien eines jeweiligen Glases 4a, 4b berücksichtigt.

Figur 4e zeigt weiterhin auch den Zentrierpunkt 29a, der durch Projektion des Augendrehpunkts 52a auf eine nachfolgend genauer beschriebene geometrische Figur ermittelt wird. Weiterhin werden die primären Brillenpunkte 27a des Glases 4a, 4b, welche die Außenlinie repräsentieren, dargestellt.

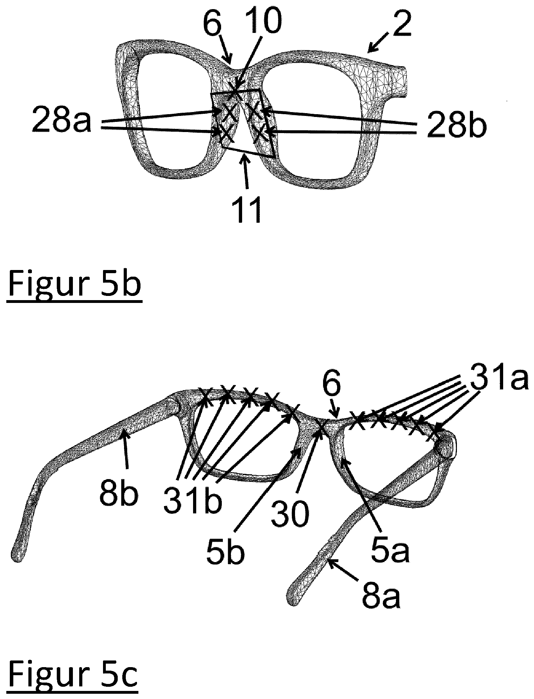

In Figur 5a und 5b ist gezeigt, wie ein unterer primärer Brillenpunkt 10 der Brücke 6 der Fassung 2 positioniert ist, welcher auf einer Nasenwurzel der Nase des Gesichts virtuell angeordnet bzw. aufgesetzt wird. Die Figuren 5a und 5b zeigen neben dem primären Brillenpunkt 10 der Brücke 6 weitere primäre Brillenpunkte 28a, 28b von Nasenauflagen 5a, 5b der Brücke 6 der Brille. Dabei bilden der primäre Brillenpunkt 10 und die primären Brillenpunkte 28a, 28b eine Kontrolllinie der Brücke 6 und von Nasenauflagen 5a, 5b, die am inneren Rand der Brücke 6 angeordnet sind. In Figur 5c ist zusätzlich noch ein hinterer primärer Brillenpunkt 30 als Mittelpunkt innerhalb der Brücke 6 schematisch angedeutet. Dabei ist eine erste Nasenauflage 5a einem ersten Glas 4a und eine zweite Nasenauflage 5b einem zweiten Glas 4b zugeordnet. Dabei ist weiterhin vorgesehen, dass die Kontrolllinie für die Brillenpunkte 10, 28a, 28b durch die Nasenauflagen 5a, 5b verläuft. Figur 5c zeigt ferner primäre Brillenpunkte 31a, 31b an jeweils einer Innenseite einer Umrandung bzw. eines Mittelteils der Fassung 2, die ein jeweiliges Glas 4a, 4b umschließt.

Zum Erstellen einer Wölbung und/oder der Kontrolllinie der Brücke 6 wird vorab eine Anzahl von Brillenpunkten ausgewählt. Eine Vorauswahl an Brillenpunkten 10, 28a, 28b wird als Kontrolllinie bezeichnet und kann bspw. manuell und/oder automatisch erstellt werden, indem Brillenpunkte 10, 28a, 28b in einem Netz der Nasenauflagen 5a, 5b und der dazwischen angeordneten Brücke 6 ausgewählt werden. Hierzu wird eine in Figur 5a und 5b dargestellte Ebene 11 gezeigt.

Um die primären Brillenpunkte 10, 28a, 28b, die sich alle auf der Oberfläche der Nasenauflagen 5a, 5b und der Brücke 6 befinden, ohne den manuellen Arbeitsaufwand zu erhalten, kann der nachfolgend beschriebene Algorithmus verwendet werden.

Hierbei wird die Kontrolllinie, entlang der die Brillenpunkte 10, 28a, 28b angeordnet sind, verwendet, um die Ebene 11 zu erstellen, welche das Netz der Fassung 2 durchschneidet. In Ausgestaltung durchschneidet die Ebene 11 auch die Brücke 6 des Netzes der Fassung 2. Um den Suchaufwand für Brillenpunkte auf dieser Ebene 11 zu minimieren, wird ein Suchfeld, das sich zwischen dem einen und dem anderen Glas 4a, 4b der beiden Gläser 4a, 4b der Brille erstreckt, sowie ein Ansichtsfenster erstellt, in dem die Brillenpunkte 10, 28a, 28b liegen sollten. Alle Brillenpunkte 10, 28a, 28b in diesem Suchfeld bzw. Suchfenster werden berücksichtigt. Falls der Abstand von einem dieser Brillenpunkte 10, 28a, 28b zu einer als Schnittebene ausgebildeten Ebene 11 null beträgt, wird dieser Brillenpunkt 10, 28a, 28b direkt zu einer Liste von vorausgewählten Brillenpunkten 10, 28a, 28b hinzugefügt. Falls er sich nicht auf der Ebene 11 befindet und der nächste Brillenpunkt auf der anderen Seite der Ebene 11 liegt, wird ein Schnitt, bspw. Schnittpunkt, mit der Ebene 11 berechnet und zu den vorausgewählten Brillenpunkten 10, 28a, 28b hinzugefügt. Hierbei wird berücksichtigt, dass die Brillenpunkte 10, 28a, 28b unsortiert sind und sich nicht unbedingt nahe an der Innenoberfläche bzw. dem unteren Rand der Brücke 6 befinden.

Zum Bereitstellen von Brillenpunkten 10, 28a, 28b nahe an der inneren Oberfläche der Brücke 6 werden unter Berücksichtigung der Kontrolllinie zwei oder mehr Zwischenpunkte ausgewählt, die zwischen den Nasenauflagen 5a, 5b der Fassung 2 liegen. Diese Zwischenpunkte bilden einen Ursprung von zwei weiteren Ebenen. Diese beiden weiteren Ebenen sind um einen festen Winkel zueinander verschoben. Diese weiteren Ebenen werden gedreht. Außerdem werden nur Brillenpunkte 10, 28a, 28b, die zwischen diesen Ebenen angeordnet sind, analysiert. Die Brillenpunkte 10, 28a, 28b, die dem Ursprung der Ebene am nächsten sind, werden ausgewählt bzw. beibehalten und bilden eine Reihe von Brillenpunkten 10, 28a, 28b, die auf der Oberfläche, hier am unteren Rand, der Brücke 6 und an einem jeweiligen Rand einer Nasenauflage 5a, 5b liegen. Dieser Vorgang kann so oft wiederholt werden, bis die Anzahl der erforderlichen Brillenpunkte 10, 28a, 28b zum Beschreiben einer Wölbung der Brücke 6 erreicht ist.

Die primären Brillenpunkte 10, 28a, 28b der Brücke 6 beschreiben die destillierte Information über die Form der Brücke 6 und der Nasenauflagen 5a, 5b der Fassung 2. Diese Brillenpunkte 10, 28a, 28b beinhalten die Wölbung der Brücke 6. Falls die Nasenauflagen 5a, 5b und die Brücke 6 möglicherweise nicht mit diesen Brillenpunkten 10, 28a, 28b beschrieben werden können, können weitere Kontrolllinien und Brillenpunkte verwendet werden, z. B. zwei frontale Linien und/oder eine dritte orthogonale Linie.

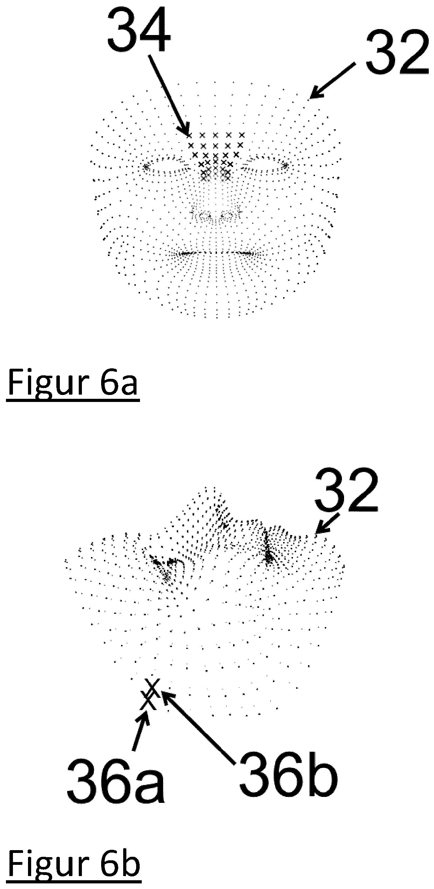

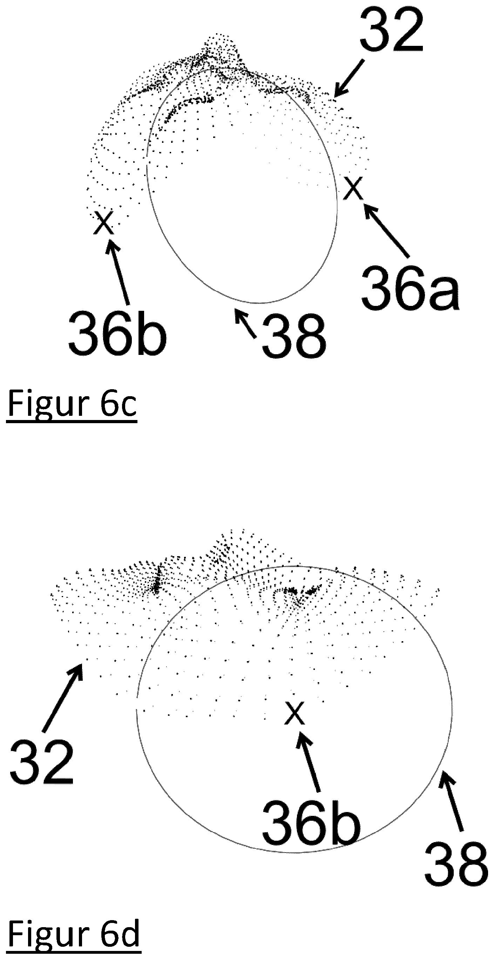

Das 3D-Modell des Gesichts ist in den Figuren 6a, 6b, 6c, 6d anhand der Gesichtspunkte 32, 34 aus unterschiedlichen Perspektiven schematisch dargestellt. Dabei sind hier in den Figuren 6a, 6b und 6d zusätzlich auch Gesichtspunkte 32, 34 an einer Nasenwurzel und an einem Nasenrücken der Nase gezeigt, die im Rahmen des Verfahrens aus sämtlichen Gesichtspunkten 32, 34 ausgewählt werden.

In den Figuren 6b, 6c und 6d sind ein erster Ohrpunkt und ein zweiter Ohrpunkt als weitere Gesichtspunkte 36a, 36b angedeutet, wobei bei der Ausführungsform des Verfahrens jeweils ein Bügel 8a, 8b auf mindestens einem derartigen Ohrpunkt als Gesichtspunkt 36a, 36b virtuell aufgesetzt wird. Hierzu ist in Figur 6c weiterhin ein Kreis 38 um den Mittelpunkt der Strecke zwischen den zwei Ohrpunkten 36a, 36b angedeutet. Figur 6d zeigt die Seitenansicht, in der ersichtlich wird, dass der Mittelpunkt des Kreises 38 mit den beiden Ohrpunkten als Gesichtspunkte 36a, 36b übereinstimmt.

Um zu überprüfen, wie Bereiche des Gesichts, d. h. Ohren, die Nase, die Stirn, Augenbrauen und Wangen, die Fassung 2 berühren werden, werden die primären äußersten Brillenpunkte 31a, 31b (entlang der z-Achse), die das Gesicht berühren, an einer dem Gesicht zugewandten Innenseite der Umrandung der Fassung 2 berechnet, der das jeweilige Glas 4a, 4b umschließt, wobei diese Brillenpunkte 31a, 31b entlang einer Außenlinie auf der Umrandung der Fassung 2 angeordnet werden. Diese Brillenpunkte 31a, 31b können zur Kollisionserkennung der Fassung 2 mit dem Gesicht verwendet werden, um zu sehen, wo die Fassung 2 das Gesicht genau berühren wird. In einer alternativen Ausführungsform kann unter Durchführung eines iterativen Verfahrens die Fassung 2 so verschoben werden, dass keiner der Brillenpunkte 10, 28a, 28b, 31a, 31b in dem Gesichtsmesh liegt.

In Ausgestaltung des Verfahrens werden die anhand der voranstehenden Figuren schematisch dargestellten Brillenpunkte 22b an den Bügeln 8a, 8b, die Brillenpunkte 10 an der Brücke 6, und die Brillenpunkte 28a, 28b an den Nasenauflagen 5a, 5b berücksichtigt. Hierbei wird die Fassung 2 der Brille relativ zu dem 3D-Modell des Gesichts bewegt, d. h. gedreht und/oder verschoben. Dabei wird mindestens ein Brillenpunkt 22b jeweils eines Bügels 8a, 8b jeweils zunächst einem als Ohrpunkt ausgebildeten Gesichtspunkt 36a, 36b zugeordnet und somit virtuell aufgesetzt. Danach werden die Bügel 8a, 8b gedreht, wobei die Brillenpunkte 10, 28a, 28b der Brücke 6 und der Nasenauflagen 5a, 5b Gesichtspunkten 32, 34 der Nase zugeordnet werden, wobei die Brücke 6 und die Nasenauflagen 5a, 5b auf der Nase virtuell angeordnet werden.

Ein fester Sitz der Fassung 2 auf der Nase kennzeichnet sich dadurch, dass keiner der Brillenpunkte im virtuellen Gesicht sitzt und somit mit diesem kollidiert. Sobald keiner der Brillenpunkte der Nasenauflagen 5a, 5b und/oder Brücke 6 mit dem Gesicht kollidiert, werden die Abstände aller Brillenpunkte 10, 28a, 28b, 31a, 31b zu den Gesichtspunkten 32, 34, 36a, 36b gemessen und bewertet und so der feste Sitz der Brille auf der Nase virtuell ermittelt.

Es ist jedoch auch alternativ oder ergänzend eine umgekehrte Reihenfolge möglich, wonach zunächst die Brillenpunkte 10, 28a, 28b der Brücke 6 und der Nasenauflagen 5a, 5b Gesichtspunkten 32, 34 der Nase zugeordnet werden, wobei entsprechend die Brücke 6 und die Nasenauflagen 5a, 5b auf der Nase virtuell aufgesetzt werden. In diesem Fall werden danach die Brillenpunkte 22b der Bügel 8a, 8b den Ohrpunkten als Gesichtspunkte 36a, 36b zugeordnet, wobei entsprechend die Bügel 8a, 8b auf bzw. an den Ohren virtuell aufgesetzt werden.

Hierbei ist vorgesehen, dass die Fassung 2 relativ zu dem Gesicht korrekt skaliert, gedreht und zentriert wird, um ihrem physikalischen Gegenstück zu entsprechen. Die Fassung 2 kann bspw. in weniger als tausend primären Brillenpunkten 10, 22b, 25a, 26a, 27a, 28a, 28b, 30, 31a, 31b, in denen sämtliche Informationen für die korrekte Anordnung auf dem Gesicht enthalten sind, beschrieben werden. Durch eine derartige Verringerung einer Anzahl ursprünglich sensorisch erfasster Punkte als Sensordaten und somit einer entsprechenden Verringerung der Komplexität werden die bei dem Verfahren vorgesehenen Berechnungen mit dem Endgerät 1 unter geringem Aufwand an Datenverarbeitungskapazität durchgeführt. Hierzu wird aus der gesamten Anzahl der Brillenpunkte jene zum Beschreiben einer Wölbung der Brücke 6, der Grundlinie eines jeweiligen Bügels 8a, 8b, einer Normallinie für die Brücke 6 und die Nasenauflagen 5a, 5b, des Mittelteils oder der Umrandung und für eine Form und die Krümmung eines jeweiligen Glases 4a, 4b ausgewählt.

Entsprechend wird aus den Sensordaten des Gesichts, die beim dreidimensionalen Scan sensorisch ermittelt werden, eine reduzierte Anzahl an Gesichtspunkten 32, 34 ausgewählt.

Ähnlich wie bei einer Vorbereitung der Fassung 2 der Brille kann bei dem 3D-Scan des Gesichts zunächst beim dreidimensionalen Scan eine große Anzahl an Punkten als Sensordaten sensorisch ermittelt werden, aus denen eine reduzierte Anzahl an Gesichtspunkten 32, 34, 36a, 36b ausgewählt wird. Für die Anordnung der Fassung 2 auf dem Gesicht werden Brillenpunkte 10, 22b, 25a, 26a, 27a, 28a, 28b, 30, 31a, 31b für eine jeweilige Komponente der Brille ausgewählt. Weiterhin werden auch Gesichtspunkte 32, 34, 36a, 36b für zu untersuchende Bereiche des Gesichts ausgewählt. Hierbei werden zu untersuchende Gesichtspunkte 32, 34 auf der Nase berücksichtigt, auf dem auch eine gut angepasste physikalische Fassung sitzen würde. Diese Gesichtspunkte 32, 34 der Nase, aber auch von anderen Bereichen des Gesichts, werden bei dem Verfahren zum virtuellen Anordnen der Brille auf dem Gesicht analysiert. Dasselbe gilt auch für Gesichtspunkte 32, 34 der Stirn als Bereich des Gesichts sowie für die Gesichtspunkte 36a, 36b der Ohren, die hier auch als Ohrpunkte bezeichnet werden. Es ist auch möglich, dass bei dem Verfahren ein Netz bzw. ein Mesh des Gesichts verwendet wird, wobei zum Bereitstellen von Gesichtspunkten 32, 34, 36a, 36b eines jeweiligen Bereichs des Gesichts, d. h. der Ohren, der Nase, der Stirn und der Wangen, eine begrenzte Anzahl ausgewählt wird. Neben den anderen bereits beschriebenen Gesichtspunkten 32, 34, 36a, 36b bilden u. a. auch die Ohrpunkte eine Annäherung an jene Stellen, an der die Bügel 8a, 8b beim virtuellen Anordnen aufliegen werden. Dabei kann in einer alternativen Ausgestaltung eine Objekterkennung eines jeweiligen Ohrs verwendet werden, wobei es möglich ist, dass auch dreidimensional angeordnete Positionen außerhalb des besagten Netzes des Gesichts bereitgestellt werden. Es ist weiterhin möglich, dass für bestimmte Bereiche des Gesichts, üblicherweise für die Ohren und die Nase, eine dichtere Anzahl an Gesichtspunkten 32, 34, 36a, 36b berücksichtigt wird und somit eine hohe Auflösung realisiert wird, wohingegen für andere Bereiche, bspw. für die Stirn oder für die Wangen, eine geringere Dichte an Gesichtspunkten 32, 34, 36a, 36b und somit eine entsprechend geringere Auflösung berücksichtigt wird. Durch gezielte Auswahl einer Dichte an Gesichtspunkten 32, 34, 36a, 36b bei der virtuellen Anordnung der Fassung an bzw. auf einem jeweiligen Bereich des Gesichts wird ein Rechenaufwand erheblich reduziert, da nicht eine maximale Anzahl an Punkten berücksichtigt werden muss.

Das Gesicht aber auch die Fassung 2 bestehen aus einer großen Anzahl an Punkten, die auch als Scheitelpunkte ausgebildet sein bzw. bezeichnet werden können. Bei der Durchführung des Verfahrens werden diese Punkte auf eine begrenzte Anzahl an primären Brillenpunkten 10, 22b, 25a, 26a, 27a, 28a, 28b, 30, 31a, 31b und eine begrenzte Anzahl an Gesichtspunkten 32, 34, 36a, 36b reduziert. Dabei werden u. a. auch Kennlinien, die Grundlinien an den Bügeln 8a, 8b, Außenlinien der Gläser 4a, 4b und die Kontrolllinie an der Brücke 6 und den Nasenauflagen 5a, 5b ausgewählt, die eine Position der Fassung 2 auf dem Gesicht der Person anzeigen. Dazu wird die vorverarbeitete Fassung 2 mit ihren charakteristischen Kennlinien bzw. Umrisslinien mit jeweiligen Gesichtspunkten 32, 34, d. h. mit Nasenpunkten im Fall der Nase, und mit Ohrpunkten als weitere Gesichtspunkte 36a, 36b im Fall der Ohren verglichen.

Zum Platzieren wird ein sogenannter Ersatzabstand berücksichtigt. Dieser Abstand D_{SUB} beschreibt einen räumlichen Unterschied zwischen einem ausgeprägten Gesichtspunkt und einer Rückseite der physikalischen Brücke 6, üblicherweise einem hinteren mittleren Brillenpunkt 30 der Brücke 6, der dem Gesicht zugewandt ist. Dabei ist es möglich, den Ersatzabstand D_{SUB} mit einem Wert von 0 mm zu initialisieren, wobei vorgesehen wird, dass die Fassung 2, in diesem Fall die Brücke 6, die Nase in diesem Brillenpunkt 30 berührt. Unter Verwendung weiterer Brillenpunkte 31a, 31b und Gesichtspunkte 32, 34 wird die Brille nun soweit verschoben, dass die Brille nicht im Gesicht sitzt und nicht mit dem Gesicht kollidiert. Ein finaler Abstand eines jeweiligen Brillenpunkts 10, 22b, 25a, 26a, 27a, 28a, 28b, 30, 31a, 31b zu einem jeweiligen Gesichtspunkt kann anschließend vermessen werden.

Weiterhin ist bei dem Verfahren vorgesehen, dass die Fassung 2 auf den Ohrpunkten, die räumlich unveränderbar sind, aufliegt. Dabei ist es möglich, dass eine Ohrachse zwischen den beiden Ohrpunkten als Gesichtspunkte 36a, 36b berechnet und ein Mittelpunkt zwischen den beiden Ohrpunkten entlang der Ohrachse ermittelt wird. Hierfür ist es auch möglich, angenäherte Ohrpunkte als Gesichtspunkte 36a, 36b zu verwenden. Unter Berücksichtigung eines derartigen Mittelpunkts wird zwischen den beiden Ohrpunkten ein individueller Gesichtspunkt 32, 34 ausgewählt, der auch mit dem Sensor 3 bei dem 3D-Scan gemessen und als Ersatzabstand D_{SUB} verwendet wird. Weiterhin wird auf der Ohrachse zwischen den Ohrpunkten um den Mittelpunkt herum ein Kreis 38 Cₑ mit einem Radius r_{efc} bereitgestellt. Diesbezüglich wird auf nachfolgende Formel verwiesen: ${r}_{efc} = {D}_{SUB} + Abstand \left(Gesichtspunkt-Ohrachse\right)$

Unabhängig davon, ob zunächst die Bügel 8a, 8b an den Ohren bzw. den Ohrpunkten als Gesichtspunkte 36a, 36b angeordnet werden und danach die Brücke 6 auf Gesichtspunkten 32, 34 der Nase angeordnet wird oder umgekehrt, werden in beiden Fällen Gesichtspunkte 32, 34, 36a, 36b des Gesichtsnetzes verwendet. Ein primärer Gesichtspunkt 32, 34 wird ausgewählt, welcher oben auf der Nase angeordnet ist. Dafür wird aus Gesichtspunkten 32, 34 des Nasenrückens eine Gerade erstellt, die durch diese Gesichtspunkte 32, 34 verläuft, wobei diese Gerade weiterhin mit dem Kreis um den Mittelpunkt zwischen den als Ohrpunkten ausgebildeten Gesichtspunkten 36a, 36b geschnitten wird. Dabei wird ein erster Anordnungspunkt ermittelt und/oder bereitgestellt. Hierbei ist weiterhin vorgesehen, dass dieser Anordnungspunkt entlang einer Nasenlinie liegt, die sich ergibt, wenn eine Symmetrieachse des Gesichts die Nase an ihrer Oberfläche schneidet, wobei diese Symmetrieebene im Rahmen üblicher anatomischer Toleranzen des Gesichts vorgesehen wird. Weiterhin wird auf Grundlage dieses Anordnungspunkts bzw. Gesichtspunkts eine Kollision zwischen der Fassung 2 und dem Gesicht berechnet, was auch als Kollisionserkennung bezeichnet werden kann.

Weiterhin wird auch die mindestens eine Außenlinie, Grundlinie und/oder Kontrolllinie der Fassung 2 oder eine Teilmenge hiervon verwendet. Auf der mindestens einen Außenlinie wird ein bestimmter Brillenpunkt als Ursprung einer ebenen Fläche ausgewählt, wobei es sich bspw. um einen obersten Brillenpunkt mit einem maximalen y-Wert handelt. Gesichtspunkte 32, 34 der Nase und der Stirn, die diese weitere ebene Fläche bzw. Ebene schneiden, werden berechnet. Diese weitere ebene Fläche ist in der Regel größer als die voranstehend beschriebene Ebene 11. Diese weitere ebene Fläche geht durch sämtliche äußere Brillenpunkte 31a, 31b, die an einem inneren Rand der Fassung 2 bzw. der Außenlinie liegen, wobei diese Brillenpunkte 31a, 31b die weitere ebene Fläche aufspannen.

Von den Gesichtspunkten 32, 34 werden diejenigen ausgewählt, die sich in der Nähe zu Brillenpunkten 25a, 27a der mindestens einen Außenlinie der Fassung befinden, wobei z-Werte der Gesichtspunkte 32, 34 mit z-Werten der Brillenpunkte verglichen werden. Wenn ein Abstand für einen Istwert zwischen mindestens einem Brillenpunkt und mindestens einem Gesichtspunkt 32, 34 gering ist, was bspw. dann der Fall ist, wenn der Istwert kleiner als ein hierfür vorgesehener Sollwert für den Abstand ist, liegt eine Kollision zwischen der Fassung 2 und dem Gesicht vor. Zur Minimierung des Abstands ist es möglich, die Fassung 2 relativ zu dem Gesicht entweder nach innen oder nach außen zu bewegen, wobei ein unterer Ersatzabstand D_{SUB} erhöht bzw. vergrößert wird.

In einem nächsten Schritt werden die Nase als zu untersuchender Bereich des Gesichts sowie die Kontrolllinie für die Brücke 6 und die Nasenauflagen 5a, 5b verwendet. Dabei wird die Ebene 11 aus der Kontrolllinie für die Brücke 6 und die Nasenauflagen 5a, 5b erstellt bzw. erzeugt und üblicherweise mit der Außenseite bzw. Oberfläche der Nase geschnitten, entlang der auch die mittige Nasenlinie verläuft. Dabei wird die Ebene 11 aus der Kontrolllinie für die Brücke 6 und die Nasenauflagen 5a, 5b erstellt. Weiterhin werden sämtliche Gesichtspunkte 32, 34 der Nase berücksichtigt. Wenn ein Gesichtspunkt 32, 34 direkt auf der Ebene 11 liegt, wird er einer Liste hinzugefügt, der die Gesichtspunkte 32, 34 der Nasenlinie bzw. einer Nasenkurve definiert. Falls ein jeweiliger Gesichtspunkt 32, 34 nicht auf der Ebene 11 liegt, wird überprüft, ob sich zwei unmittelbar benachbarte Gesichtspunkte 32, 34 auf unterschiedlichen Seiten der Ebene 11 befinden. Zwischen diesen beiden unmittelbar benachbarten Gesichtspunkten 32, 34 neben der Ebene 11 wird eine Linie gezogen und ein Schnittpunkt dieser Linie mit der Ebene 11 berechnet, wobei dieser Schnittpunkt als Gesichtspunkt 32, 34 der Liste für die Nasenlinie bzw. Nasenkurve hinzugefügt wird.

In einem weiteren Schritt wird ein minimaler Abstand eines jeweiligen ausgewählten Gesichtspunkts 32, 34 entlang der Nasenlinie zu den primären Brillenpunkten 10, 28a, 28b entlang der Kontrolllinie für die Brücke 6 und die Nasenauflagen 5a, 5b berechnet, wobei diese primären Brillenpunkte 10, 28a, 28b die besagte Kontrolllinie bilden. Weiterhin werden mehrere Brillenpunkte 10, 28a, 28b mit mehreren Gesichtspunkten 32, 34 verglichen. Dabei wird jedem Brillenpunkt 10, 28a, 28b entlang der Kontrolllinie ein nächstgelegener Gesichtspunkt 32, 34 zugeordnet. Dann wird für jedes Paar aus jeweils einem Brillenpunkt 10, 28a, 28b und einem jeweiligen Gesichtspunkt 32, 34 ein minimaler Abstand berechnet. Hierbei ist es möglich, dass der berechnete Abstand einen negativen Istwert aufweist, was bedeutet, dass sich die Brücke 6 und/oder mindestens eine Nasenauflage 5a, 5b zumindest teilweise innerhalb der virtuellen Nase befinden würde. Falls der Abstand positiv ist, befindet sich die Brücke 6 bzw. mindestens eine Nasenauflage 5a, 5b auf der Nase. Bei dem Verfahren wird die Fassung 2 so lange bewegt, d. h. entweder nach oben oder nach unten verschoben, bis der Istwert des minimalen Abstands unterhalb des hierfür vorgesehenen Sollwerts bzw. eines entsprechenden Grenzwerts liegt. Die Fassung 2 wird an eine passende Position an oder auf dem Gesicht verschoben, bis der hierfür vorgesehene Abstand mit dem minimalen Istwert ermittelt ist, der geringer als der hierfür vorgesehene Schwell- bzw. Sollwert ist. Hierbei ist es möglich, dass nur ausgewählte Paare aus Brillenpunkten 10, 28a, 28b und Gesichtspunkten 32, 34 innerhalb eines gewünschten Toleranzbereichs für eine etwaige Abweichung eines Istwerts für den Abstand eines jeweiligen Brillenpunkts 10, 28a, 28b und einem jeweiligen Gesichtspunkt 32, 34 von dem hierfür vorgesehenen Sollwert liegen. Dies kann bedeuten, dass die Fassung 2 bspw. oben auf der Nase jedoch nicht auf Seiten der Nase aufliegt.

Falls ein Istwert so stark von dem jeweiligen Sollwert für den Abstand abweicht und somit außerhalb eines vorgesehenen Toleranzbereichs hierfür liegt, wird eine Position der Fassung 2 um eine Schrittgröße verschoben. Dazu wird ein weiterer Kreis Cₛ verwendet, der einen kleineren Radius, üblicherweise einen Schrittgrößenradius rₛ, aufweist, der geringer als der Radius r_{efc} des voranstehend beschriebenen Kreises 38 ist. Ein Mittelpunkt des weiteren kleinen Kreises Cₛ beschreibt eine aktuelle bzw. letzte Position der Fassung 2. Da eine weitere Position der Fassung 2 ebenfalls wieder auf dem größeren Kreis 38 liegen soll, wird der kleinere Kreis Cₛ mit dem größeren Kreis 38 geschnitten. Ein sich dabei ergebender Schnittpunkt zwischen den beiden Kreisen Cₛ, 38 gibt eine nächste Position der Fassung 2 an. Sobald diese Position erreicht ist, werden wieder Istwerte und Sollwerte der Nasenauflage 5a, 5b bzw. der Brücke 6 miteinander verglichen.

Eine nächste Position der Fassung 2 wird berechnet, indem der kleine Kreis Cₛ mit dem größeren Kreis 38 Cₑ geschnitten wird. Ein dabei ermittelter Schnittpunkt der beiden Kreise 38, Cₛ gibt eine nächste zu untersuchende Position zur Anordnung der Brille auf dem Gesicht vor. Alternativ hierzu wird die nächste Position der Fassung 2 berechnet, indem bspw. die Gravitation oder Reibung betrachtet wird, und die Fassung nach unten bewegt. Alternativ kann die Fassung 2 auch am unteren Rand der Nase aufgesetzt werden und die y- und z-Werte so verändert werden, dass die Fassung 2 auf der Nase nach oben wandert, bis sie mit dem Gesicht kollidiert.

Bei einer jeweiligen Bewegung, d. h. Verschiebung und/oder Drehung, der Fassung 2 relativ zu dem Gesicht wird der Winkel der Fassung 2 relativ zu dem Gesicht angepasst, wobei berücksichtigt wird, dass eine Position eines jeweiligen Bügels 8a, 8b einer Position eines jeweiligen Ohrpunkts als Gesichtspunkt 36a, 36b oder zumindest dessen ungefährer Position entspricht. Es ist möglich, eine Kollisionserkennung mehrmals hintereinander zu wiederholen und ggf. den Wert für den Ersatzabstand D_{SUB} anzupassen. Die Fassung 2 wird so oft relativ zu dem Gesicht bewegt, bis der Istwert für den Abstand zwischen einem jeweiligen Brillenpunkt 10, 22b, 25a, 26a, 27a, 28a, 28b, 30, 31a, 31b und einem Gesichtspunkt 32, 34, 36a, 36b höchstens um den Toleranzwert, in Ausgestaltung gar nicht von dem hierfür vorgesehen Sollwert, abweicht. Alternativ oder ergänzend ist es möglich, für die durchzuführende Kollisionserkennung eine maximale Anzahl an Versuchen vorzusehen. Sämtliche Berechnungen werden hier mit dem mobilen Endgerät 1 durchgeführt. Dabei werden die Gesichtspunkte 32, 34, 36a, 36b aus einer Vielzahl von ursprünglichen Punkten als Sensordaten ausgewählt, die von dem Sensor 3 bei dem 3D-Scan erfasst werden.

Ergänzend kann die Fassung 2, sofern es eine Kollisionsverhinderung auf Nase, Stirn und/oder Ohr erlaubt, nach links oder rechts verschoben werden. Hierbei können jeweils zwei Paare eines Brillenpunkts 10, 22b, 25a, 26a, 27a, 28a, 28b, 30, 31a, 31b und eines Gesichtspunkts 32, 34, 36a, 36b berücksichtigt werden, wobei beide Paare üblicherweise symmetrisch zu dem Brillenpunkt 30 in der Brücke 6 und/oder zu eine Mittellinie der Nase angeordnet sind, wenn beide Istwerte beider Paare gleich sind. Falls diese Istwerte für beide Paare voneinander abweichen, ist die Fassung 2 auf dem Gesicht asymmetrisch angeordnet.

Um bspw. einen Zentrierpunkt 29a eines Glases 4a, 4b, bspw. dessen Anpassungshöhe oder Zentrierungsabstand (OCD), zu berechnen, werden die Augendrehpunkte 52a, 52b berücksichtigt, die zum Ermitteln der Zentrierpunkte orthogonal auf das geometrische Modell bzw. auf die Repräsentationen der Gläser 4a, 4b projiziert werden. In Ausgestaltung sind hier nur primäre Brillenpunkte 27a der Gläser 4a, 4b innerhalb der Fassung 2 von Bedeutung. Um den Rechenaufwand zu minimieren, wird eine Position der Gläser 4a, 4b auf dem Gesicht ermittelt, wobei die Gläser 4a, 4b auf primäre Brillenpunkte 27a bzw. die Außenlinie eines jeweiligen Glases 4a, 4b reduziert werden. Diese primären Brillenpunkte 27a können auch einen primären Brillenpunkt einer vorderen Seite bzw. Außenseite der Gläser 4a, 4b beinhalten. Außerdem wird ein mittlerer bzw. primärer Brillenpunkt 10 der Fassung 2 betrachtet und berechnet. Es ist weiterhin möglich, das Gesicht auf Positionen der Augendrehpunkte 52a, 52b zu reduzieren. Alternativ kann das Gesicht auf die Pupillen 50a, 50b statt auf die Augendrehpunkte 52a, 52b reduziert werden.

Nach einer Reduktion auf die primären Brillenpunkte 27a des jeweiligen Glases 4a, 4b und auf die Augendrehpunkte 52a, 52b kann aus den primären Brillenpunkten 27a eine geometrische Figur erzeugt und der Augendrehpunkt 52a, 52b auf die geometrische Figur projiziert werden. Handelt es sich bei der geometrischen Figur um eine ebene Fläche, ist ihre Form durch die Außenlinie des jeweiligen Glases 4a, 4b definiert, üblicherweise begrenzt. Dadurch kann die Anpassungshöhe und/oder der Zentrierungsabstand (OCD) ermittelt werden, indem der Abstand zwischen dem Projektionspunkt und dem Rand der Fläche ermittelt werden kann.

Alternativ oder ergänzend wird der Projektionspunkt auf die ebene Fläche mit dem Augendrehpunkt 52a, 52b als Ausgangspunkt einer Geraden definiert. Die Gerade wird anschließend mit einer Kugel geschnitten. Da eine Kugel keinen Rand aufweist, wird der Schnittpunkt bzw. Projektionspunkt auf eine weitere finale ebene Fläche projiziert, von der die Position des Projektionspunkts abgelesen werden kann. Diese Position entspricht der Position des Zentrierpunkts 29a, da diese finale ebene Fläche in ihrer Form wieder durch die Außenlinie des jeweiligen Glases 4a, 4b definiert ist. Die Anpassungshöhe und/oder OCD kann wieder aus dem Abstand zwischen dem Projektionspunkt bzw. Schnittpunkt und dem Rand der ebenen Fläche ermittelt werden.

Weiterhin kann auch ein Scheitelpunktabstand, bspw. Hornhaut-Scheitelpunktabstand (engl. cornea vertex distance, CVD), ermittelt werden, mit dem angegeben wird, wie weit die Hornhaut eines jeweiligen Auges von einer Rückseite eines jeweiligen Glases 4a, 4b entfernt ist. Dieser Abstand beträgt je nach Größe des Gesichts bspw. 12 bis 14 mm. Für eine Messung dieses Abstands werden geeignete Brillenpunkte bspw. auf der Rückseite des jeweiligen Glases 4a, 4b und Gesichtspunkte des jeweiligen Auges ausgewählt. Anschließend wird der Abstand der Brillenpunkte und der Gesichtspunkte vermessen.

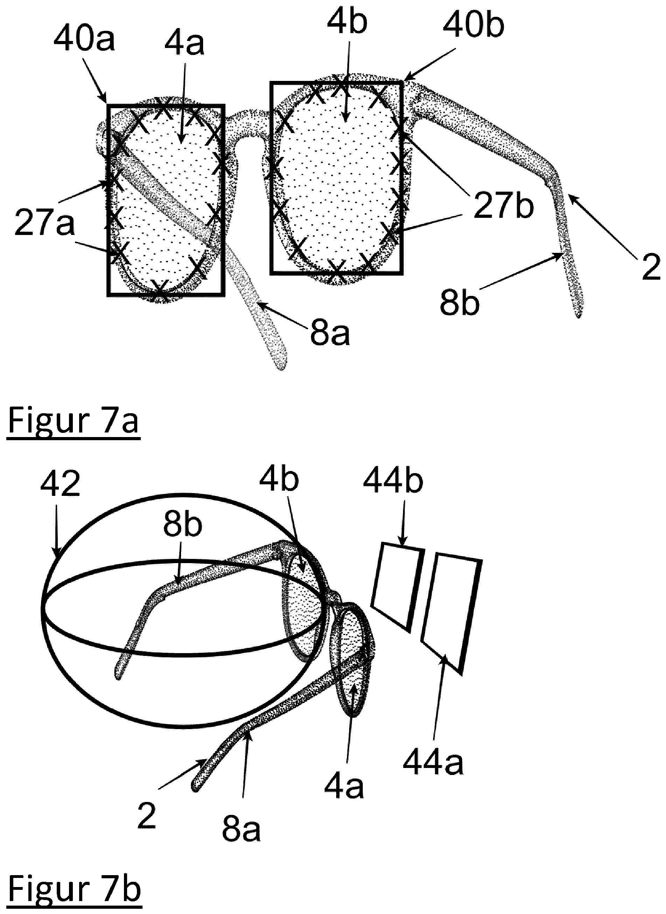

Durch die in diesem Verfahren genutzte Reduzierung der Daten ist es nicht nur möglich, das virtuelle Aufsetzen der Fassung 2 mit dem Endgerät 1 sondern auch auf einem Server zu berechnen, da die geringe Menge an hierfür erforderlichen Daten auch über ein Netzwerk problemlos übertragen werden kann. Zum Ermitteln der Zentrierung werden in der Regel mehrere Messungen durchgeführt, auf Grundlage derer die Berechnung des Zentrierungsabstands (OCD) und der Höhe des Zentrierpunkts 29a umfasst wird. Der Abstand und die Höhe des Zentrierpunkts 29a werden mit zwei ebenen Flächen Pₒᵣ, Pₒₗ links und rechts der Brücke 6 aus Brillenpunkten 25a, 26a, 27a der Gläser 4a, 4b, definiert durch die Außenlinie eines jeweiligen Glases 4a, 4b, ermittelt. Diese liefern eine Position und eine Ausrichtung der Gläser 4a, 4b bezüglich ihrer primären Brillenpunkte 26a und von Normalenvektoren der beiden ebenen Flächen Pₒᵣ, Pₒₗ. Die äußersten Brillenpunkte 25a, 26a, 27a der Gläser 4a, 4b werden auf Außenlinien zweier anhand von Figur 7 vorgestellten ebenen Flächen 40a, 40b Pₒᵣ, Pₒₗ dargestellt. Da die Fassung 2 üblicherweise nicht ideal symmetrisch ist und bspw. geneigt sein kann, werden diese beiden besagten ebenen Flächen 40a, 40b Pₒᵣ, Pₒₗ unabhängig voneinander betrachtet. Betrachtet man diese ebenen Flächen 40a, 40b Pₒᵣ, Pₒₗ, so können sie zueinander gedreht sein und können auch einen unterschiedlichen y-Wert ihres unteren Rands aufweisen. Die Flächen sind jedoch durch die primären Brillenpunkte 26a, 27a der Gläser 4a, 4b bzw. der Außenlinien der Gläser 4a, 4b definiert.

Bei der Ausführung des Verfahrens ist vorgesehen, dass das Gesicht mit dem Sensor 3 des Endgeräts 1 erfasst bzw. gescannt und somit ermittelt wird. Dabei wird zunächst eine große Anzahl an Sensordaten des Gesichts erfasst, die aufgearbeitet werden, woraus die Gesichtspunkte 32, 34, 36a, 36b ermittelt werden. Aus diesen Sensordaten wird eine begrenzte Anzahl an Gesichtspunkten 32, 34, 36a, 36b für die Nase, die Augen und die Ohren als Bereiche des Gesichts zumindest teilweise dynamisch berechnet und automatisch ausgewählt, wobei eine Anzahl an zu verarbeiteten Daten reduziert wird. Ergänzend können die Gesichtspunkte 32, 34, 36a, 36b aus den Sensordaten mit Hilfe von maschinellem Lernen (machine learning) automatisch erzeugt werden. Diese ausgewählten Gesichtspunkte 32, 34, 36a, 36b bilden zusammen das anhand der Figuren 6a, 6b, 6c, 6d dargestellte 3D-Modell des Gesichts.

In weiterer Ausgestaltung wird der Person bzw. einem Nutzer, auf deren bzw. auf dessen Gesicht die Brille virtuell angeordnet wird, auf einem Anzeigefeld bzw. Monitor des Endgeräts 1 eine Benutzeroberfläche bereitgestellt, mit der der Person eine Anleitung zur Durchführung des Verfahrens mit dem Endgerät 1 dargestellt wird. Dies umfasst u. a. Anweisungen, wie die Person den Sensor 3 des Endgeräts 1 auf ihr Gesicht auszurichten hat. Dies umfasst bspw. einen Abstand zwischen dem Sensor 3 und dem Gesicht und auch mindestens einen Winkel und somit eine entsprechende Ausrichtung des Sensors 3 relativ zu dem Gesicht. Üblicherweise ist vorgesehen, dass die Person von ihrem Gesicht aus mindestens einer Position bzw. Perspektive Aufnahmen anzufertigen hat, bei denen die Sensordaten des Gesichts erfasst werden, woraus wiederum die besagten Gesichtspunkte 32, 34, 36a, 36b berechnet und ausgewählt werden. In der Regel ist die mindestens eine Position bzw. Perspektive vorgegeben. Eine Qualität der Sensordaten kann durch Erhöhung einer Anzahl an Positionen erhöht werden.

Dabei wird der Person eine Durchführung und/oder Nutzung des Verfahrens auch ohne Hilfe von professionellem Personal, wie es in einem Optikergeschäft der Fall ist, erleichtert. Dabei wird die Person über die Benutzeroberfläche durch einen Prozess des Scannens des Gesichts geführt, wobei der Person auch immer eine bspw. visuelle und/oder akustische Rückmeldung bzw. ein Feedback bereitgestellt wird. Die virtuelle Anordnung der Fassung 2 wird durch eine spiegelähnliche Darstellung des Gesichts mit der darauf virtuell angeordneten Brille auf dem Anzeigefeld des Endgeräts 1 angezeigt.

Weiterhin wird die virtuelle Anordnung mit der Applikation und dem Auswertesystem überprüft und der Person eine Rückmeldung auf dem Endgerät 1 eingeblendet. Die weiteren Verfahrensschritte des Zentrierens können dann eventuell nicht oder nur eingeschränkt von der Person durchgeführt werden. Hierbei ist in anderen Ausgestaltungen auch möglich, die Zentrierung trotz mangelhafter virtueller Anordnung durchzuführen und die Ergebnisse zur Überprüfung bzw. Auswertung automatisch zu der Datenbank zu senden. Ebenfalls ist eine manuelle Überprüfung durch einen Optiker denkbar.

Die Rückmeldung des Auswertesystems umfasst auch die Maßnahme, einen Abstand bzw. einen jeweiligen Istwert eines Abstands zwischen einzelnen Brillenpunkten 10, 22b, 25a, 26a, 27a, 28a, 28b, 30, 31a, 31b und Gesichtspunkten 32, 34, 36a, 36b in dem Auswertesystem umzuwandeln. Dabei wird z. B. ein Abstand zwischen der Nase und der Brücke 6 und/oder der Fassung 2 berücksichtigt. Weiterhin können dabei auch Abstände zwischen bestimmten Gesichtspunkten 32, 34, 36a, 36b berücksichtigt werden, die zum Bereitstellen des 3D-Modells des Gesichts berechnet und/oder ausgewählt werden. Dies betrifft u. a. auch einen Abstand zwischen den Pupillen der Augen der Person.

Weiterhin wird bspw. ein Abstand bzw. Unterschied zwischen einer physikalischen Breite der Fassung 2 und einer Größe eines jeweiligen Bügels 8a, 8b verwendet. Hierbei ist vorgesehen, dass die physikalische Breite der Fassung 2 bekannt ist oder berechnet wird. Entsprechende Brillenpunkte 10, 22b, 25a, 26a, 27a, 28a, 28b, 30, 31a, 31b, die u. a. auch die physikalische Breite der Fassung 2 beschreiben, werden dem Endgerät 1 aus einer Datenbank des Servers bereitgestellt. Die Größe des Bügels 8a, 8b wird unter Berücksichtigung von verschiedenen ausgewählten Gesichtspunkten 32, 34, 36a, 36b bereitgestellt.

Das auf der Benutzeroberfläche bereitgestellte Auswertesystem, mit dem eine Bewertung durchgeführt wird, basiert auf tatsächlichen Bewertungen von Optikern für unterschiedliche Breiten der Fassung 2 und des Gesichts sowie u. a. einer Form der Nase. Die im Rahmen des Verfahrens ermittelten Gesichtspunkte 32, 34, 36a, 36b werden benutzt, um eine Passform der Brille auf dem Gesicht zu bewerten. Ergänzend werden mit dem Auswertesystem neben den Istwerten und Sollwerten hier auch Abstände zwischen Gesichtspunkten 32, 34, 36a, 36b berücksichtigt und mit Abständen zwischen Brillenpunkten 10, 22b, 25a, 26a, 27a, 28a, 28b, 30, 31a, 31b verglichen. Diese Abstände der Brillenpunkte 10, 22b, 25a, 26a, 27a, 28a, 28b, 30, 31a, 31b können dynamisch berechnet oder aus einer bzw. durch eine Datenbank des Servers bereitgestellt werden. Dabei wird der Person das Gesamtergebnis angezeigt, wobei zumindest drei Kategorien berücksichtigt werden, die eine Größe der Fassung 2 beschreiben und angeben, ob diese zu klein, passend oder zu groß ist. Eine derartige Bewertung hängt zumindest von einer Abweichung eines Istwerts von einem vorgesehenen Sollwert für einen Abstand zwischen einem jeweiligen Gesichtspunkt 32, 34, 36a, 36b und dem zuzuordnenden Brillenpunkt 10, 22b, 25a, 26a, 27a, 28a, 28b, 30, 31a, 31b ab. Mit dem Auswertesystem wird der Person angezeigt, wie gut die Fassung 2, d. h. die Brücke 6 und die Nasenauflagen 5a, 5b, auf die Nase passt bzw. passen, wobei auch angegeben wird, ob eine gesamte Größe der Fassung 2 bspw. zu groß oder zu klein ist.

Diese Erzeugung der Sollwerte des Auswertesystems kann dabei mit Hilfe maschinellen Lernens durchgeführt werden. Der Bereich maschinellen Lernens (machine learning) umfasst dabei als Gesamtbereich die Gruppen: überwachtes Lernen (supervised learning), unüberwachtes Lernen (unsupervised learning), teilüberwachtes Lernen (semi-supervised learning) und bestärkendes Lernen (reinforcement learning). Die Erzeugung der Sollwerte des Auswertesystems ist mit Algorithmen aus allen oben genannten Bereichen möglich.

Im Falle des überwachten Lernens wird mit Beispielen bzw. Trainingsdaten die Beziehung zwischen z. B. Abständen der Brillenpunkte 25a, 26a, 27a, 28a, 28b zu den Gesichtspunkten 32, 34 und der Passformbewertung dem Algorithmus vorgestellt. Die Passformbewertung kann durch Optiker bestimmt werden.

Der Algorithmus modelliert dann die Beziehung zwischen den Eingabedaten, z. B. von Abständen der Brillenpunkte 25a, 26a, 27a, 28a, 28b und Ausgabedaten (Passformbewertung). Im Zuge einer neuen Anordnung mit unbekannter Passformbewertung, aber bekannten Abständen, kann der Algorithmus dann eine Passformbewertung erzeugen bzw. voraussagen. Dies kann z. B. mit einem Entscheidungsbaum (decision tree) oder bspw. neuronalen Netz (neural network) passieren.

Alternativ ist es möglich, mit unüberwachtem Lernen z. B. Abstände zu gruppieren. Diese Gruppierungen werden erzeugt, ohne Beispiele bzw. Trainingsdaten zu definieren. Der Algorithmus kann selbstständig Regeln und relevante Eingabedaten erkennen. Clustering-Algorithmen, wie der k-means Algorithmus, sind Beispiele für unüberwachtes Lernen. Hier ist es z. B. möglich, die Sensordaten bzw. Gesichtspunkte 32, 34 einfach zu gruppieren, bspw. in einen Vorder- und Hintergrund, um diese anschließend weiterzuverarbeiten. Alternativ ist auch die Kombination aus unüberwachtem und überwachtem Lernen möglich, das teilüberwachtes Lernen genannt wird.

Ein alternatives Auswertesystem kann auf der Basis von bestärkendem Lernen aufgebaut sein. Dabei lernt der Algorithmus kontinuierlich z. B. welche Eingabeparameter am besten geeignet sind, indem seine Voraussage immer wieder bewertet (bestärkt) wird. Ein solcher macht z. B. Voraussagen über die Passform, welche dann immer wieder von anderen Systemen, z. B. einem virtuellen oder echten Optiker, bewertet werden. Mit der Dauer der Lernphase kann das System immer stabiler Vorrausagen bezüglich der Passform liefern.

Die Ermittlung einer Passformbewertung mittels maschinellen Lernens (machine learning) ist u. a. mit folgenden Algorithmen möglich: Regressionsalgorithmen, wie z. B. lineare Regression (linear regression), logistische Regression (logistic regression), Poisson Regression (Poisson regression). Algorithmen und Methoden aus dem Bereich Regularisation (Regularization), wie z. B. ridge regression, elastic net. Algorithmen aus dem Bereich instanzbasiertes Lernen (instance-based learning): z. B. k-nearest neighbor, support vector machine (SVM), selbstorganisierende Karten (self organzing maps). Die Ermittlung der Passformbewertung ist ebenso über Bäume, wie z. B. über einen Entscheidungsbaum (decision tree), oder Clustering Algorithmen, wie z. B. k-means, hierarchische Clusteranalyse (hierarchical clustering), möglich. Im Bereich der künstlichen neuronalen Netze (artificial neural networks) können z. B. Perzeptron (perceptron), back-propagation oder Hopfield Netzwerke (Hopfield network) eingesetzt werden. Ebenso können neuronale Netze bzw. Netzwerke (neural networks), wie z. B. faltende neuronale Netzwerke (convolutional neural networks), vorwärtsgerichtete neuronale Netzwerke (feed forward neural networks), rekurrente neuronale Netzwerke (recurrent neural networks), eingesetzt werden. Algorithmen, welche schwächere Prädiktoren kombinieren, um so besser Vorhersagen zu ermöglichen: z. B. random forest oder gradient boosted trees. Ebenfalls einsetzbar sind Algorithmen aus dem stochastischen Lernen, wie z. B. das simulierte Abkühlen (simulated annealing), Markov-Ketten (Markov chains). Darüber hinaus können Algorithmen aus dem Bereich Dimensionsreduzierung (dimensionality reduction), wie z. B. eine Hauptkomponentenanalyse (principal component analysis (PCA)), eingesetzt werden. Auch Algorithmen, welche als Basis die Formel von Bayes nutzen, wie z. B. Bayessche Netze (Baysian network), sind einsetzbar.

Wenn die Fassung 2 gemäß dem Auswertesystem als passend eingestuft bzw. klassifiziert wird, wird nachfolgend noch die Zentrierung der Gläser 4a, 4b durchgeführt, wobei die Zentrierpunkte 29a berechnet werden. Die Zentrierung der Gläser 4a, 4b wird nach dem virtuellen Aufsetzen der Fassung 2 der Brille auf das Gesicht durchgeführt. Hierbei wird berücksichtigt, dass eine bestmögliche Abbildung eines jeweiligen Glases 4a, 4b durch deren optischen Mittelpunkt gegeben ist. Dabei wird berücksichtigt, dass die optische Achse des Glases 4a, 4b durch den Augendrehpunkt 52a, 52b verläuft und dabei eine Augendrehpunktforderung erfüllt. Falls das Glas 4a, 4b in Ausgestaltung als flache Ebene betrachtet wird, ist die optische Achse senkrecht zu der Oberfläche des Glases 4a, 4b orientiert und verläuft durch den Augendrehpunkt 52a, 52b. Weiterhin wird ein Vorneigungswinkel ermittelt, der einen Winkel zwischen der Fassung 2 und einer vertikalen Ebene parallel zum Boden angibt. Darüber hinaus wird eine Inklination ermittelt, die einen Winkel zwischen einem jeweiligen Bügel 8a, 8b und der Umrandung bzw. einem Mittelteil der Fassung 2, die zwischen Enden der beiden Bügel 8a, 8b angeordnet ist, angibt. Alternativ kann die Inklination bereits durch Metadaten aus der Datenbank bekannt sein und zur Überprüfung zur Verfügung gestellt werden. Dabei ist ein jeweiliges Ende des Bügels 8a, 8b von einem jeweiligen Ohr abgewandt und über ein Gelenk und/oder ein Scharnier mit äußeren Enden der Umrandung gelenkig und drehbar verbunden. Es ist vorgesehen, dass die Fassung 2 üblicherweise eine Inklination von 80° bis 85° aufweist. Die Inklination und der Vorneigungswinkel ergeben zusammen einen Wert von 90°. So kann die Inklination bzw. ein entsprechender Inklinationswinkel etwa 80° und ein entsprechender Vorneigungswinkel etwa 10° betragen. Weiterhin wird mit der Inklination berücksichtigt, dass die Person in der Regel unter einem Winkel von 5° bis 10° unter der Nullblickrichtung durch die Gläser 4a, 4b der Brille blickt bzw. schaut. Hierbei handelt es sich um einen empirischen Wert, wonach durch die Brille bzw. durch deren Gläser 4a, 4b nicht geradeaus, sondern geringfügig nach unten geblickt wird. Die Hauptblickrichtung ergibt sich als Orthogonale zu dem Glas 4a, 4b bzw. die entsprechende Achse, die durch den Augendrehpunkt eines jeweiligen Glases 4a, 4b geht, wobei diese Hauptblickrichtung von der Nullblickrichtung abweicht.

Figur 7 deutet in schematischer Darstellung weitere Aspekte zur Durchführung des erfindungsgemäßen Verfahrens an.

Figur 7a zeigt Brillenpunkte 27a, die sich auf der Außenlinie eines jeweiligen Glases 4a, 4b befinden. Dabei ist hier weiterhin dargestellt, dass diese Brillenpunkte 27a bzw. die Außenlinie des jeweiligen Glases 4a, 4b in der primären ebenen Fläche 40a, 40b angeordnet sind bzw. die Form dieser Fläche 40a, 40b definieren.

Figur 7b zeigt weiterhin in schematischer Darstellung eine Kugel 42 bzw. Sphäre als geometrische Figur, die hier einem der beiden Brillengläser 4a, 4b zugeordnet ist. Weiterhin zeigt Figur 7b finale ebene Flächen 44a, 44b, die auch als Projektionsfläche bezeichnet werden können. Dabei ist vorgesehen, dass eine erste finale ebene Fläche 44a im ersten Glas 4a und somit auch der ersten primären ebenen Fläche 40a zugeordnet wird. Eine zweite finale ebene Fläche 44b wird hier dem zweiten Glas 4b und somit auch der zweiten primären ebenen Fläche 40b zugeordnet.

Es ist vorgesehen, dass eine jeweilige primäre ebene Fläche 40a, 40b aus einer Außenlinie bzw. den darauf angeordneten Brillenpunkten 27a ermittelt wird. Dabei ermöglicht bereits eine jeweilige primäre ebene Fläche 40a, 40b das Erstellen eines Zentrierpunkts 29a eines jeweiligen Glases 4a, 4b und eine Ermittlung einer horizontalen und vertikalen Verschiebung dieses Zentrierpunkts 29a zum Rand des Glases 4a, 4b. Die Kugel 42 als mögliche geometrische Figur ermöglicht weiterhin eine genauere Repräsentation einer Form des Glases 4a, 4b bzw. einer entsprechenden Linse. Dabei ist es möglich, dass diese geometrische Figur aus der Außenlinie des Glases 4a, 4b, also den primären Brillenpunkten 27a des Glases 4a, 4b, ermittelt wird. Durch eine Unbegrenztheit einer geometrischen Figur, bspw. der Kugel 42, wird die finale ebene Fläche 44a, 44b zum Berechnen des Zentrierpunkts 29a verwendet. Dabei ist vorgesehen, dass beide finalen ebenen Flächen 44a, 44b horizontal auf derselben Höhe angeordnet sind und relativ zueinander keinerlei Rotation aufweisen. Dabei sind Maße der finalen ebenen Flächen 44a, 44b gleich den Maßen der primären ebenen Flächen 40a, 40b. Dabei ist es möglich, dass die finalen ebenen Flächen 44a, 44b bspw. ein Messpapier repräsentieren. Auf ein solches wird üblicherweise in einem Optikergeschäft eine Brille gelegt, um Abstände des Zentrierpunkts 29a zu dem Rand des Glases 4a, 4b zu messen.

Im Rahmen des Verfahrens ist vorgesehen, dass für jedes Glas 4a, 4b die Kugel 42 als geometrische Figur verwendet wird, um die Krümmung des Glases 4a, 4b zu repräsentieren, da eine Projektion auf eine gekrümmte Fläche ein anderes Ergebnis als eine Projektion auf eine ebene Fläche liefert. Durch die Kugel 42 wird die Krümmung des Glases 4a, 4b angegeben, ob dieses bspw. konvex, konkav oder planar gekrümmt bzw. geformt ist.

Ein Mittelpunkt der Kugel 42 kann geeignet gewählt werden und ist keinem weiteren Punkt zugeordnet. Je nach Form des Glases 4a, 4b wird deren Durchmesser bzw. Radius gewählt, der abhängig von einer Krümmung des Glases 4a, 4b sein kann. Je stärker es gekrümmt ist, desto kleiner ist der Radius. Bei einem flachen Glas 4a, 4b ist ein großer Radius zu wählen, eine Position des Mittelpunkts und somit dessen Abstand zu dem Glas 4a, 4b ist von dem Radius abhängig. Es ist auch möglich, dass die Kugel 42, deren Radius und eine Position ihres Mittelpunkts bereits berechnet werden, bevor die Brille auf dem Gesicht platziert wird. Hierzu werden entsprechende Metadaten für die Position des Mittelpunkts und ihres Radius gespeichert. Nach der Platzierung der Brille bzw. einem Placement wird unter Berücksichtigung der Position des jeweiligen Glases 4a, 4b bzw. seiner primären Brillenpunkte die Position der Kugel 42 im Raum berechnet.

Brillenpunkte 25a, 26a, 27a eines jeweiliges Glases 4a, 4b zeigen dessen Form und somit auch dessen Krümmung an. Es ist möglich, einen vorläufigen Radius der Kugel 42 zunächst zu schätzen. Entsprechend wird ihr Mittelpunkt in einem dem vorläufigen Radius entsprechenden Abstand, je nach Form des Glases 4a, 4b, hinter oder vor dem Glas 4a, 4b angeordnet und die Kugel 42 dann aufgespannt. Dann werden über ein Optimierungsverfahren der Radius und die Position des Mittelpunkts optimiert, bis die Brillenpunkte 25a, 26a, 27a auf der Oberfläche des Glases 4a, 4b auch auf der Kugel 42 liegen. Dann werden der Mittelpunkt und der Radius gespeichert. So kann auf dem Endgerät 1 wieder Rechenleistung gespart werden, indem später nur der Radius der Kugel 42 und ihr Mittelpunkt genutzt werden.

In Ausgestaltung ist es möglich, dass die geometrische Figur zum Bestimmen der Krümmung des Glases 4a, 4b als Rotationskörper ausgebildet sein kann, der bei der hier vorgestellten Ausführungsform des Verfahrens bspw. als die hier dargestellte Kugel 42 ausgebildet ist. Hierbei wird ein jeweiliger Rotationskörper ausgewählt, mit dem die Krümmung dargestellt wird. Weiterhin kann die geometrische Form einem Glas 4a, 4b entsprechend alternativ linsenförmig und ggf. oval gebogen bzw. verbogen sein. Es ist auch möglich, dass die geometrische Figur ellipsenförmig gebogen ist. Hierbei wird eine jeweilige geometrische Form ausgewählt, mit der die Krümmung dargestellt wird.

Wenn die geometrische Figur die primäre ebene Fläche 40a, 40b ist, wird ein Projektionspunkt erzeugt, indem der jeweilige Augendrehpunkt 52a, 52b auf diese primäre ebene Fläche 40a, 40b projiziert wird. Die Position des Zentrierpunkts 29a kann aus diesem Projektionspunkt direkt abgeleitet werden.

Wird das Glas 4a, 4b mit der geometrischen Figur, bspw. der Kugel 42, modelliert, kann durch einen Schnittpunkt I_{SR} und I_{SL} oder Projektionspunkt nicht automatisch ein Zentrierpunkt 29a errechnet werden, da nicht jede geometrische Figur einen eindeutigen Rand hat, mit dem die Position des Zentrierpunkts 29a errechnet werden kann. Für die Berechnung der Position des Zentrierpunkts 29a wird in einem solchen Fall eine finale ebene Fläche 44a, 44b genutzt, auf die der Schnittpunkt weiter projiziert wird. Diese finale ebene Fläche 44a, 44b wird in ihrem Ausmaß durch die Außenlinien des Glases 4a, 4b definiert.

Unter Berücksichtigung der jeweiligen finalen Fläche 44a, 44b kann hier auch die Höhe bestimmt werden, durch die das Auge ausgehend von dem Augendrehpunkt 52a, 52b orthogonal auf die geometrische Figur, bspw. die Kugel 42, und damit auf das Glas 4a, 4b trifft. Es ist vorgesehen, dass beide primären Flächen 40a, 40b und/oder beide finalen Flächen 44a, 44b jeweils in einer gemeinsamen Ebene angeordnet werden können. Ergänzend ist möglich, beide finalen Flächen 44a, 44b auszurichten, z. B. auf eine gemeinsame Höhe (y-Koordinate) oder Tiefe (z-Koordinate). Außerdem kann eine Rotation der finalen Flächen 44a, 44b verändert werden, wobei die finalen Flächen 44a, 44b z. B. parallel ausgerichtet werden.

In Ausgestaltung ist es möglich, dass die primären Flächen 40a, 40b auch zueinander geneigt sein können, wobei eine derartige Neigung, die hier durch einen üblicherweise stumpfen Winkel beschrieben werden kann, die Form und Position der beiden Gläser 4a, 4b der Fassung 2 wiedergibt und/oder in Relation setzt. Die jeweiligen in der Regel ebenen Flächen 40a, 40b, 44a, 44b repräsentieren ein von einem Optiker üblicherweise benutztes Millimeterpapier. Es ist möglich, dass die Umrandung der Brille bzw. Fassung 2 so gebogen ist, dass die beiden Gläser 4a, 4b unterschiedlich gelagert sind. So kann ein Glas 4a, 4b vielleicht komplett vertikal angeordnet und das andere dazu unter einem schiefen Winkel von X Grad orientiert sein. Die Fassung 2 ist in der Regel in der Mitte geknickt und weist einen Fassungsscheibenwinkel als möglichen Zentrierparameter auf, der anzeigt, dass die beiden Gläser 4a, 4b in z-Richtung bzw. entlang der z-Achse unterschiedlich positioniert sind. Dies ist alles durch die primäre Fläche 40a, 40b repräsentiert. Damit kann bereits die Position des Zentrierpunkts 29a durch Messung eines Abstands vom Rand der primären Fläche 40a, 40b bestimmt werden. Beide primären Flächen 40a, 40b repräsentieren die gebogenen Gläser 4a, 4b bzw. eine jeweilige Kugel 42. Ein Optiker legt üblicherweise die Fassung 2 mit dem vorgesehenen Fassungsscheibenwinkel auf eine flache finale Ebene 44a, 44b. Beide flachen finalen Flächen 44a, 44b (Millimeterpapier) weisen denselben unteren Rand und dieselbe Position entlang der z-Achse auf, weshalb beide finalen Flächen 44a, 44b in einer gemeinsamen übergeordneten Ebene angeordnet sind.

Im Rahmen des Verfahrens wird eine Handlungsweise des Optikers weiterentwickelt, indem die finalen Flächen 44a, 44b P_{b} verwendet werden, deren untere Ränder dieselbe Höhe, aber keine Rotation und/oder Neigung relativ zueinander aufweisen. Die zwei Schnittpunkte I_{SR} und I_{SL} werden dann auf die jeweilige Fläche 44a, 44b P_{b} projiziert, von da aus wird der Abstand zwischen dem Schnittpunkt und dem Rand der Fläche 44a, 44b P_{b} berechnet. Dadurch kann der Zentrierpunkt 29a in seiner Position mit dem Abstand zum Rand der jeweiligen Fläche 44a, 44b P_{b} bestimmt werden. Alternativ oder ergänzend kann der Abstand der beiden Zentrierpunkte 29a zueinander sowie der Abstand jeweils eines Zentrierpunkts 29a zu einem Brillenpunkt 10, 30 ermittelt werden, welcher die Mitte bzw. einen Mittelpunkt der Fassung 2, üblicherweise der Brücke 6, repräsentiert.

In Ausgestaltung des Verfahrens ist es möglich, dass zum Messen und somit zum Ermitteln der Höhe des Zentrierpunkts 29a die Person ihren Kopf anhebt, bis ein jeweiliges Glas 4a, 4b, üblicherweise die primären Flächen 40a, 40b, orthogonal zum Boden und somit sowohl vertikal als auch horizontal ausgerichtet ist. Danach ist vorgesehen, dass die Person auf einen vorgegebenen Punkt, üblicherweise den Sensor 3 des Endgeräts 1, blickt. Dabei ergibt sich, dass der Augendrehpunkt 52a, 52b und die Pupille auf einer Achse liegen, die auf einer Normalachse parallel zu einer Erfassungsrichtung des Sensors 3 (z-Achse) liegen, wobei hier vorgesehen ist, dass ein Optiker als Referenz hier durch den Sensor 3 ersetzt wird. Dabei ist es möglich, dass der optische Zentrierpunkt 29a auf dem Schnittpunkt der Achse durch den Augendrehpunkt 52a, 52b liegt.

In Ausgestaltung ist vorgesehen, dass die Pupille eines jeweiligen Auges als Hilfsmittel benutzt werden kann, aus dem die Position des Augendrehpunkts 52a, 52b oder ein Hornhautscheitelabstand ermittelt wird.

Nachfolgend sind Schritte der Ausführungsform des Verfahrens zusammengefasst:
1. Erzeugen einer 3D-Punktwolke der Brille (ohne Kunde und ohne Endgerät 1), die ursprüngliche Brillenpunkte 21b, 24a umfasst. Reduzierung der Menge der ursprünglichen Brillenpunkte 21b, 24a.
2. Erzeugen einer primären geringen Menge an Brillenpunkten 10, 22b, 25a, 26a, 27a, 28a, 28b, 30, 31a, 31b für die Brücke 6, die Bügel 8a, 8b, die Fassung 2 und die Gläser 4a, 4b.
   a. Erzeugen mindestens einer Außenlinie für das Glas 4a, 4b, zu deren Berechnung primäre Brillenpunkte 25a, 27a genutzt werden.
   b. Erzeugen einer Linie, bspw. Grundlinie, für jeden Bügel 8a, 8b.
   c. Erzeugen einer primären Fläche 40a, 40b für jedes Glas 4a, 4b definiert durch eine Außenlinie.
   d. Erzeugen der Kugel 42 als geometrische Figur für die Krümmung, wobei deren Position und Radius für später gespeichert werden, wobei diese Krümmung der Kugel 42 aus primären Brillenpunkten 25a, 27a der Außenlinie und der Oberfläche des jeweiligen Glases 4a, 4b erzeugt wird.
   e. Erzeugen der finalen Flächen 44a, 44b als geometrische Figur.
3. Messen der Brille bzw. deren Brillenpunkte 10, 22b, 25a, 26a, 27a, 28a, 28b, 30, 31a, 31b zur Erzeugung von Metadaten für die Datenbank.
4. Scannen des Gesichts mit dem Sensor 3.
5. Virtuelles Aufsetzen der Brille auf das Gesicht, das nur aus einer geringen Anzahl an Gesichtspunkten 32, 34, 36a, 36b besteht:
   a. Aufnehmen der Ohrpunkte und Erzeugen eines Radius, auf dem sich die Brille bewegen darf.
   b. Aufsetzen der Brille zuerst so, dass ein Brillenpunkt 10, 30 in der Mitte der Brille und die Stirn so nah wie möglich sind.
   c. Wenn die Brille in der Stirn sitzen sollte, wird die Brille nach vorne verschoben und der Radius um die Ohrpunkte vergrößert.
   d. Zum Positionieren der Brille relativ zu der Nase wird eine Ebene 11 auf Basis der Brillenpunkte 10, 30 der Brücke 6 ermittelt.
   e. Diese Ebene 11 wird mit Gesichtspunkten 32, 34 der Nase geschnitten.
   f. Berechnen von Abständen der Brillenpunkte 10, 28a, 28b, 30 zu der Nase.
   g. Bewegen, bspw. Verschieben, der Brille so lange auf dem ersten Kreis, bis die Brille nicht mehr in der Nase, aber so nah wie möglich auf der Nase sitzt, dann wird eine Verschiebung durch den zweiten Kreis durchgeführt.
   h. Verschieben von Winkeln der Bügel 8a, 8b, so dass sie auf den Ohrpunkten sitzen.
6. Dann ist die virtuelle Platzierung abgeschlossen.
7. Berechnen der Abstände bestimmter Brillenpunkte 10, 22b, 25a, 26a, 27a, 28a, 28b, 30, 31a, 31b zu den Gesichtspunkten 32, 34, 36a, 36b.
8. Prüfung, ob solche Abstände in Ordnung sind, also ob die Brille zu groß oder zu klein ist, wobei Brillenpunkte 10, 22b, 25a, 26a, 27a, 28a, 28b, 30, 31a, 31b aus der Datenbank genutzt werden. Metadaten für Sollwerte sind ebenfalls aus der Datenbank abrufbar.
9. Falls die Größe der Brille in Ordnung ist:
   a. Ermitteln der Augendrehpunkte 52a, 52b.
   b. Aufnehmen einer Position der Gläser 4a, 4b auf dem Gesicht und Nutzung der primären Flächen 40a, 40b.
   c. Finden der Geraden, welche orthogonal zu der primären Fläche 40a, 40b durch den Augendrehpunkt 52a, 52b geht bzw. Projektion des Augendrehpunkts 52a, 52b auf die primäre Fläche 40a, 40b, ein dabei ermittelter Schnittpunkt erlaubt eine Berechnung des Zentrierpunkts 29a.
   d. Falls Krümmung nicht betrachtet werden soll:
      i. Ermitteln eines Abstands bzw. der Höhe eines Schnitt- bzw. Projektionspunkts als Zentrierpunkt 29a bis zum unteren Rand der primären Flächen 40a, 40b.
      ii. Ablesen des Abstands dieser Projektion zum nasalen Rand der primären Fläche 40a, 40b, wobei dieser Rand der Nase zugewandt ist. Alternativ: Ermitteln eines Abstands der Pupillen 50a, 50b zueinander oder der Augendrehpunkte 52a, 52b zueinander. Alternativ kann ein Abstand (monokularer Pupillenabstand) eines jeweiligen Projektionspunkts bzw. Schnittpunkts bis zur Mitte der Brille ermittelt werden.
   e. Betrachtung der Krümmung:
      i. Schneiden der gefundenen Geraden durch einen Augendrehpunkt 52a, 52b mit der Kugel 42.
      ii. Projektion des Schnittpunkts der Geraden mit der Kugel 42 auf die finale Fläche 44a, 44b.
      iii. Ablesen des Abstands dieser Projektion vom unteren Rand der finalen Fläche 44a, 44b, wobei die Höhe des Zentrierpunkts 29a ermittelt wird.
      iv. Ablesen des Abstands dieser Projektion zum nasalen Rand der finalen Fläche 44a, 44b, wobei dieser Rand der Nase zugewandt ist. Alternativ: Ermitteln eines Abstands der Pupillen 50a, 50b zueinander oder der Augendrehpunkte 52a, 52b zueinander. Alternativ kann ein Abstand (monokularer Pupillenabstand) eines jeweiligen Projektionspunkts bzw. Schnittpunkts bis zur Mitte der Brille ermittelt werden.

### BEZUGSZEICHEN:

- 1: Endgerät
- 2: Fassung
- 3: Sensor
- 4a, 4b: Glas
- 5a, 5b: Nasenauflage
- 6: Brücke
- 8a, 8b: Bügel
- 10: Brillenpunkt
- 11: Ebene
- 12: Fassung
- 14a, 14b: Glas
- 18a, 18b: Bügel
- 20: Ursprung
- 21b: Brillenpunkt
- 22b: Brillenpunkt
- 24a: Brillenpunkt
- 25a: Brillenpunkt
- 26a: Brillenpunkt
- 27a: Brillenpunkt
- 28a, 28b: Brillenpunkt
- 29a: Zentrierpunkt
- 30: Brillenpunkt
- 31a, 31b: Brillenpunkt
- 32, 34: Gesichtspunkt
- 36a, 36b: Gesichtspunkt (Ohrpunkt)
- 38: Kreis
- 40a, 40b: Fläche
- 42: Kugel
- 44a, 44b: Fläche
- 50a, 50b: Pupille
- 52a, 52b: Augendrehpunkt

## Patentansprüche

1. Computerimplementiertes Verfahren zum virtuellen Bereitstellen einer Brille für ein Gesicht einer Person, bei dem das Gesicht von mindestens einem Sensor (3) eines mobilen Endgeräts (1) erfasst wird, wobei ein Algorithmus dann eine Beziehung zwischen den Sensordaten als Eingabedaten und Gesichtspunkten als Ausgabedaten modelliert und im Zuge von neuen, unbekannten Sensordaten die Gesichtspunkte erzeugt, wobei die Gesichtspunkte aus derartigen Sensordaten von dem Endgerät (1) berechnet werden, wobei dem Algorithmus durch überwachtes Lernen mit Trainingsdaten eine Beziehung zwischen Sensordaten und gewünschten Gesichtspunkten vorgestellt wird, wobei, ergänzend dazu, der Algorithmus kontinuierlich lernt, welche Sensordaten am besten geeignet sind, um Gesichtspunkte zu erzeugen, indem seine Voraussage immer wieder bewertet und/oder bestärkt wird, wobei auf Basis des erfassten Gesichts ein virtuelles 3D-Modell des Gesichts erstellt wird, wobei mittels einer auf dem mobilen Endgerät (1) implementierten und laufenden und mit dem mindestens einen Sensor (3) in kommunikativer Verbindung stehenden Applikation auf Basis des 3D-Modells des Gesichts und eines bereitgestellten virtuellen 3D-Modells der Brille bei einem Anordnen der Brille auf dem Gesicht automatisch einander zugeordnete Brillenpunkte (10, 21b, 22b, 24a, 25a, 26a, 27a, 28a, 28b, 30, 31a, 31b) der Brille und Gesichtspunkte (32, 34, 36a, 36b) des Gesichts berechnet werden und die Brille unter Nutzung der einander zugeordneten und berechneten Brillenpunkte (10, 21b, 22b, 24a, 25a, 26a, 27a, 28a, 28b, 30, 31a, 31b) und Gesichtspunkte (32, 34, 36a, 36b) virtuell auf dem Gesicht angeordnet wird, wobei zur Modellierung jeweils eines Glases (4a, 4b, 14a, 14b) der Brille jeweils eine vorgegebene begrenzte Anzahl an Brillenpunkten (21b, 24a) automatisch ausgewählt wird, wobei zum Ermitteln mindestens eines Zentrierparameters des jeweiligen Glases (4a, 4b, 14a, 14b) lediglich Positionen von primären Brillenpunkten (10, 22b, 25a, 26a, 27a, 28a, 28b, 30, 31a, 31b) des jeweiligen Glases (4a, 4b, 14a, 14b) in einem 3D-Raum sowie die Position eines Augendrehpunkts (52a, 52b) eines jeweiligen Auges in demselben 3D-Raum genutzt werden, wobei aus den primären Brillenpunkten (27a, 28a, 28b, 30, 31a, 31b) des jeweiligen Glases (4a, 4b, 14a, 14b) eine ebene Fläche (40a, 40b) oder eine Kugel (42) als mindestens eine geometrische Figur erzeugt wird, mit der das jeweilige Glas (4a, 4b, 14a, 14b) virtuell repräsentiert wird,
wobei, im Fall einer ebenen Fläche, die primäre Brillenpunkte (27a), die sich auf einer Außenlinie eines jeweiligen Glases (4a, 4b, 14a, 14b) befinden, die ebene Fläche (40a, 40b) definieren, und wobei, im Fall einer Kugel, je nach Form des Glases (4a, 4b, 14a, 14b) ein Radius der Kugel (42) gewählt wird, der abhängig von einer Krümmung des Glases (4a, 4b, 14a, 14b) ist, wobei nach Anordnen der Brille unter Berücksichtigung einer Position der primären Brillenpunkte (27a) des jeweiligen Glases (4a, 4b, 14a, 14b) eine Position der Kugel (42) im Raum berechnet wird.

2. Verfahren nach Anspruch 1, bei dem berücksichtigt wird, dass die Brille als Komponenten eine Fassung (2, 12) mit einer Brücke (6) und zwei Bügeln (8a, 8b, 18a, 18b) aufweist,
wobei das virtuelle 3D-Modell für die Brille berechnet wird, wobei für mindestens eine Komponente der Brille jeweils eine vorgegebene begrenzte Anzahl an Brillenpunkten (21b, 24a) automatisch ausgewählt wird,
wobei mit dem mindestens einen Sensor (3) des Endgeräts (1) Sensordaten für mindestens einen Bereich des Gesichts sensorisch erfasst werden, wobei mit dem mobilen Endgerät (1) aus den erfassten Sensordaten das virtuelle 3D-Modell des Gesichts berechnet wird,
wobei für eine jeweilige Komponente der Brille aus der begrenzten Anzahl an Brillenpunkten (21b, 24a) mindestens ein primärer Brillenpunkt (10, 22b, 25a, 26a, 27a, 28a, 28b, 30, 31a, 31b) ermittelt wird,
wobei dieser mindestens eine primäre Brillenpunkt (10, 22b, 25a, 26a, 27a, 28a, 28b, 30, 31a, 31b) der jeweiligen Komponente der Brille bei einem virtuellen Anordnen der Brille auf dem Gesicht mittels der Applikation mindestens einem Gesichtspunkt (32, 34, 36a, 36b) eines des mindestens einen Bereichs des Gesichts zugeordnet wird, wobei bei dem virtuellen Anordnen der Brille auf dem Gesicht aus dem 3D-Modell für das Gesicht der mindestens eine Gesichtspunkt (32, 34, 36a, 36b) zumindest teilweise dynamisch berechnet wird.

3. Verfahren nach Anspruch 2, bei dem beim virtuellen Anordnen der Brille auf dem Gesicht mindestens eine Komponente der Brille so lange virtuell bewegt, d. h. gedreht und/oder verschoben, wird, bis der mindestens eine primäre Brillenpunkt (10, 22b, 25a, 26a, 27a, 28a, 28b, 30, 31a, 31b) der jeweiligen Komponente der Brille und der mindestens eine dem mindestens einen primären Brillenpunkt (10, 22b, 25a, 26a, 27a, 28a, 28b, 30, 31a, 31b) zugeordnete Gesichtspunkt (32, 34, 36a, 36b) zueinander einen Istwert eines Abstands aufweisen, der maximal um einen Toleranzwert von einem hierfür vorgesehenen Sollwert des Abstands abweicht, und anschließend für alle verbleibenden Komponenten der Brille jeweils ein Abstand zwischen einem jeweiligen primären Brillenpunkt (10, 22b, 25a, 26a, 27a, 28a, 28b, 30, 31a, 31b) der jeweiligen Komponente und einem dem jeweiligen primären Brillenpunkt (10, 22b, 25a, 26a, 27a, 28a, 28b, 30, 31a, 31b) zugeordneten Gesichtspunkt (32, 34, 36a, 36b) bestimmt und mit einem hierfür vorgesehenen Sollwert des Abstands verglichen wird, und aus dem Vergleich abgeleitet wird, ob die Brille passt.

4. Verfahren nach Anspruch 2 oder 3, bei dem für die Brücke (6) als Komponente der Brille aus der begrenzten Anzahl an Brillenpunkten (21b, 24a) mindestens ein primärer Brillenpunkt (10, 22b, 25a, 26a, 27a, 28a, 28b, 30, 31a, 31b) ermittelt wird, der an einem Rand der Brücke (6) angeordnet ist, wobei dieser mindestens eine primäre Brillenpunkt (10, 22b, 25a, 26a, 27a, 28a, 28b, 30, 31a, 31b) beim virtuellen Anordnen der Brille auf dem Gesicht mindestens einem Gesichtspunkt (32, 34, 36a, 36b) der Nase als Bereich des Gesichts zugeordnet wird, und
wobei für jeden Bügel (8a, 8b, 18a, 18b) als Komponenten der Brille aus der begrenzten Anzahl an Brillenpunkten (21b, 24a) mindestens ein primärer Brillenpunkt (10, 22b, 25a, 26a, 27a, 28a, 28b, 30, 31a, 31b) ermittelt wird, der an einem Rand des jeweiligen Bügels (8a, 8b, 18a, 18b) angeordnet ist, wobei dieser mindestens eine primäre Brillenpunkt (10, 22b, 25a, 26a, 27a, 28a, 28b, 30, 31a, 31b) beim virtuellen Anordnen der Brille auf dem Gesicht mindestens einem als Ohrpunkt ausgebildeten Gesichtspunkt (32, 34, 36a, 36b) des Ohrs als Bereich des Gesichts zugeordnet wird.

5. Verfahren nach einem der voranstehenden Ansprüche, bei dem eine nach dem virtuellen Anordnen der Brille auf dem Gesicht resultierende Anordnung der Brille auf dem Gesicht mit einem Auswertesystem bewertet wird.

6. Verfahren nach einem der voranstehenden Ansprüche, bei dem eine Krümmung der geometrischen Figur durch Einbeziehung von mindestens einem Brillenpunkt (10, 21b, 22b, 24a, 25a, 26a, 27a, 28a, 28b, 30, 31a, 31b) auf einer Oberfläche des jeweiligen Glases (4a, 4b, 14a, 14b) sowie von mindestens zwei Brillenpunkten (10, 21b, 22b, 24a, 25a, 26a, 27a, 28a, 28b, 30, 31a, 31b) auf einer Außenlinie des jeweiligen Glases (4a, 4b, 14a, 14b) erzeugt wird.

7. Verfahren nach einem der voranstehenden Ansprüche, bei dem ein Zentrierpunkt (29a) als der mindestens eine Zentrierparameter des jeweiligen Glases (4a, 4b, 14a, 14b) unter Verwendung einer Projektion des Augendrehpunkts (52a, 52b) des jeweiligen Auges auf die geometrische Figur des jeweils entsprechenden Glases (4a, 4b, 14a, 14b) ermittelt wird, wobei in Abhängigkeit der geometrischen Form ein dabei projizierter Punkt auf eine vordefinierte ebene Fläche, deren Lage und Form durch die Außenlinie des jeweiligen Glases (4a, 4b, 14a, 14b) definiert ist, projiziert wird.

8. Verfahren nach einem der Ansprüche 2 bis 7, bei dem als der mindestens eine Zentrierparameter eine Inklination einer Fassung (2) der Brille, ein Fassungsscheibenwinkel, eine Vorneigung der Fassung (2) und/oder ein Hornhautscheitelabstand ermittelt wird bzw. werden.

9. Verfahren nach einem der voranstehenden Ansprüche, bei dem auf einer Anzeigeeinheit des Endgeräts (1) das virtuelle Anordnen der Brille auf dem Gesicht und/oder eine Bewertung einer resultierenden virtuellen Anordnung der Brille auf dem Gesicht dynamisch, insbesondere in Echtzeit, dargestellt und angezeigt wird.

10. Computergestützte Applikation für ein mobiles Endgerät (1) zum virtuellen Bereitstellen einer Brille für ein Gesicht einer Person, die dazu ausgebildet ist, ein Verfahren nach einem der voranstehenden Ansprüche durchzuführen, bei dem das mobile Endgerät (1) mindestens einen Sensor (3) aufweist, der dazu ausgebildet ist, das Gesicht zu erfassen, wobei ein Algorithmus dann eine Beziehung zwischen den Sensordaten als Eingabedaten und Gesichtspunkten als Ausgabedaten modelliert und im Zuge von neuen, unbekannten Sensordaten die Gesichtspunkte erzeugt, wobei die Gesichtspunkte aus derartigen Sensordaten von dem Endgerät (1) berechnet werden, wobei dem Algorithmus durch überwachtes Lernen mit Trainingsdaten eine Beziehung zwischen Sensordaten und gewünschten Gesichtspunkten vorgestellt wird, wobei, ergänzend dazu, der Algorithmus kontinuierlich lernt, welche Sensordaten am besten geeignet sind, um Gesichtspunkte zu erzeugen, indem seine Voraussage immer wieder bewertet und/oder bestärkt wird, wobei die Applikation auf dem mobilen Endgerät (1) implementiert ist, auf dem mobilen Endgerät (1) läuft, mit dem mindestens einen Sensor (3) in kommunikativer Verbindung steht und dazu ausgebildet ist, auf Basis eines mit dem erfassten Gesicht erstellten virtuellen 3D-Modells des Gesichts und eines bereitgestellten 3D-Modells der Brille bei einem Anordnen der Brille auf dem Gesicht automatisch einander zugeordnete Brillenpunkte (10, 21b, 22b, 24a, 25a, 26a, 27a, 28a, 28b, 30, 31a, 31b) der Brille und Gesichtspunkte (32, 34, 36a, 36b) des Gesichts zu berechnen und die Brille unter Nutzung der einander zugeordneten und berechneten Brillenpunkte (10, 21b, 22b, 24a, 25a, 26a, 27a, 28a, 28b, 30, 31a, 31b) und Gesichtspunkte (32, 34, 36a, 36b) virtuell auf dem Gesicht anzuordnen und zu zentrieren, wobei zur Modellierung jeweils eines Glases (4a, 4b, 14a, 14b) der Brille jeweils eine vorgegebene begrenzte Anzahl an Brillenpunkten (21b, 24a) automatisch ausgewählt wird, wobei zum Ermitteln mindestens eines Zentrierparameters des jeweiligen Glases (4a, 4b, 14a, 14b) lediglich Positionen von primären Brillenpunkten (10, 22b, 25a, 26a, 27a, 28a, 28b, 30, 31a, 31b) des jeweiligen Glases (4a, 4b, 14a, 14b) in einem 3D-Raum sowie die Position des Augendrehpunkts (52a, 52b) des jeweiligen Auges in demselben 3D-Raum genutzt werden, wobei aus den primären Brillenpunkten (27a, 28a, 28b, 30, 31a, 31b) des jeweiligen Glases (4a, 4b, 14a, 14b) eine ebene Fläche (40a, 40b) oder eine Kugel (42) als mindestens eine geometrische Figur erzeugt wird, mit der das jeweilige Glas (4a, 4b, 14a, 14b) virtuell repräsentiert wird,
wobei, im Fall einer ebenen Fläche, die primäre Brillenpunkte (27a), die sich auf einer Außenlinie eines jeweiligen Glases (4a, 4b, 14a, 14b) befinden, die ebene Fläche (40a, 40b) definieren,
und wobei, im Fall einer Kugel, je nach Form des Glases (4a, 4b, 14a, 14b) ein Radius der Kugel (42) gewählt wird, der abhängig von einer Krümmung des Glases (4a, 4b, 14a, 14b) ist, wobei nach Anordnen der Brille unter Berücksichtigung einer Position der primären Brillenpunkte (27a) des jeweiligen Glases (4a, 4b, 14a, 14b) eine Position der Kugel (42) im Raum berechnet wird.

11. Computergestützte Applikation nach Anspruch 10, die zu ihrer funktionsbestimmten Ausführung auf dem Endgerät (1) mit einer auf dem Endgerät (1) und/oder in einem Backend implementierten Recheneinheit und/oder Speichereinheit in kommunikativer Verbindung steht.

12. System zum computerimplementierten Bereitstellen einer Brille für ein Gesicht einer Person, das dazu ausgebildet ist, ein Verfahren nach einem der Ansprüche 1 bis 9 durchzuführen, wobei das System ein mobiles Endgerät (1) mit mindestens einem Sensor (3) aufweist, der dazu ausgebildet ist, das Gesicht zu erfassen, wobei ein Algorithmus dann eine Beziehung zwischen den Sensordaten als Eingabedaten und Gesichtspunkten als Ausgabedaten modelliert und im Zuge von neuen, unbekannten Sensordaten die Gesichtspunkte erzeugt, wobei die Gesichtspunkte aus derartigen Sensordaten von dem Endgerät (1) berechnet werden, wobei dem Algorithmus durch überwachtes Lernen mit Trainingsdaten eine Beziehung zwischen Sensordaten und gewünschten Gesichtspunkten vorgestellt wird, wobei, ergänzend dazu, der Algorithmus kontinuierlich lernt, welche Sensordaten am besten geeignet sind, um Gesichtspunkte zu erzeugen, indem seine Voraussage immer wieder bewertet und/oder bestärkt wird, wobei auf dem mobilen Endgerät (1) eine Applikation implementiert ist, die auf dem mobilen Endgerät (1) läuft, mit dem mindestens einen Sensor (3) in kommunikativer Verbindung steht und dazu ausgebildet ist, auf Basis eines mit dem erfassten Gesicht erstellten virtuellen 3D-Modells des Gesichts und eines bereitgestellten 3D-Modells der Brille bei einem Anordnen der Brille auf dem Gesicht automatisch einander zugeordnete Brillenpunkte (10, 21b, 22b, 24a, 25a, 26a, 27a, 28a, 28b, 30, 31a, 31b) der Brille und Gesichtspunkte (32, 34, 36a, 36b) des Gesichts zu berechnen und die Brille unter Nutzung der einander zugeordneten und berechneten Brillenpunkte (10, 21b, 22b, 24a, 25a, 26a, 27a, 28a, 28b, 30, 31a, 31b) und Gesichtspunkte (32, 34, 36a, 36b) virtuell auf dem Gesicht anzuordnen und zu zentrieren, wobei zur Modellierung jeweils eines Glases (4a, 4b, 14a, 14b) der Brille jeweils eine vorgegebene begrenzte Anzahl an Brillenpunkten (21b, 24a) automatisch ausgewählt wird, wobei zum Ermitteln mindestens eines Zentrierparameters des jeweiligen Glases (4a, 4b, 14a, 14b) lediglich Positionen von primären Brillenpunkten (10, 22b, 25a, 26a, 27a, 28a, 28b, 30, 31a, 31b) des jeweiligen Glases (4a, 4b, 14a, 14b) in einem 3D-Raum sowie die Position des Augendrehpunkts (52a, 52b) des jeweiligen Auges in demselben 3D-Raum genutzt werden, wobei aus den primären Brillenpunkten (27a, 28a, 28b, 30, 31a, 31b) des jeweiligen Glases (4a, 4b, 14a, 14b) eine ebene Fläche (40a, 40b) oder eine Kugel (42) als mindestens eine geometrische Figur erzeugt wird, mit der das jeweilige Glas (4a, 4b, 14a, 14b) virtuell repräsentiert wird,
wobei, im Fall einer ebenen Fläche, die primäre Brillenpunkte (27a), die sich auf einer Außenlinie eines jeweiligen Glases (4a, 4b, 14a, 14b) befinden, die ebene Fläche (40a, 40b) definieren,
und wobei, im Fall einer Kugel, je nach Form des Glases (4a, 4b, 14a, 14b) ein Radius der Kugel (42) gewählt wird, der abhängig von einer Krümmung des Glases (4a, 4b, 14a, 14b) ist, wobei nach Anordnen der Brille unter Berücksichtigung einer Position der primären Brillenpunkte (27a) des jeweiligen Glases (4a, 4b, 14a, 14b) eine Position der Kugel (42) im Raum berechnet wird.

## Claims

1. A computer-implemented method for virtually providing spectacles for a person's face, in which the face is detected by at least one sensor (3) of a mobile terminal device (1), wherein an algorithm then models a rela+onship between the sensor data as input data and facial points as output data, and generates the facial points based on new, unknown sensor data, wherein the facial points are calculated by the terminal device (1) from such sensor data, wherein a rela+onship between the sensor data and the desired facial points is taught to the algorithm through supervised learning using training data, wherein addi+onally, the algorithm con+nuously learns, by its predic+ons being repeatedly evaluated and/or reinforced, which sensor data is best suited for genera+ng facial points, wherein a virtual 3D model of the face is created based on the detected face, wherein, by means of an applica+on implemented on and running on the mobile terminal device (1) and in communica+on with the at least one sensor (3), based on the 3D model of the face and a provided virtual 3D model of the spectacles, during the arranging of the spectacles on the face, mutually associated spectacle points (10, 21b, 22b, 24a, 25a, 26a, 27a, 28a, 28b, 30, 31a, 31b) of the spectacles and facial points (32, 34, 36a, 36b) of the face are automa+cally calculated and the spectacles are virtually arranged on the face using the mutually associated and calculated spectacle points (10, 21b, 22b, 24a, 25a, 26a, 27a, 28a, 28b, 30, 31a, 31b) and facial points (32, 34, 36a, 36b), wherein, for modeling each lens (4a, 4b, 14a, 14b) of the spectacles, respec+vely a specified, a limited number of spectacle points (21b, 24a) is automa+cally selected, wherein, to determine at least one centering parameter of the respec+ve lens (4a, 4b, 14a, 14b), only the posi+ons of the primary spectacle points (10, 22b, 25a, 26a, 27a, 28a, 28b, 30, 31a, 31b) of the respec+ve lens (4a, 4b, 14a, 14b) in a 3D space, as well as the posi+on of an eye pivot point (52a, 52b) of a respec+ve eye in the same 3D space, are used, wherein, from the primary spectacle points (27a, 28a, 28b, 30, 31a, 31b) of the respec+ve lens (4a, 4b, 14a, 14b) a flat surface (40a, 40b) or a sphere (42) is generated as at least one geometric figure, with which the respec+ve lens (4a, 4b, 14a, 14b) is virtually represented,
wherein, in the case of a flat surface, the primary spectacle points (27a) located on an outer line of a respec+ve lens (4a, 4b, 14a, 14b) define the flat surface (40a, 40b), and wherein, in the case of a sphere, depending on the shape of the lens (4a, 4b, 14a, 14b), a radius of the sphere (42) is selected that depends on a curvature of the lens (4a, 4b, 14a, 14b), wherein, a4er arranging the spectacles, a posi+on of the sphere (42) in space is calculated, taking into account the posi+on of the primary spectacle points (27a) of the respec+ve lens (4a, 4b, 14a, 14b).

2. The method according to claim 1, in which it is taken into account that the spectacles have, as components, a frame (2, 12) with a bridge (6) and two temples (8a, 8b, 18a, 18b),
wherein the virtual 3D model for the spectacles is calculated, wherein respec+vely a specified limited number of spectacle points (21b, 24a) is automa+cally selected for at least one component of the spectacles,
wherein sensor data for at least one region of the face is detected by the at least one sensor (3) of the terminal device (1), and wherein the virtual 3D model of the face is calculated by the mobile terminal device (1) based on the detected sensor data,
wherein, for each component of the spectacles, at least one primary spectacle point (10, 22b, 25a, 26a, 27a, 28a, 28b, 30, 31a, 31b) is determined from the limited number of spectacle points (21b, 24a), wherein this at least one primary spectacle point (10, 22b, 25a, 26a, 27a, 28a, 28b, 30, 31a, 31b) of the respec+ve component of the spectacles is assigned, during the virtual arranging of the spectacles on the face by means of the applica+on, to at least one facial point (32, 34, 36a, 36b) of one of the at least one regions of the face, wherein, during the virtual arranging of the spectacles on the face, the at least one facial point (32, 34, 36a, 36b) is dynamically calculated, at least in part, from the 3D model for the face.

3. The method according to claim 2, in which, during virtually arranging the spectacles on the face, at least one component of the spectacles is virtually moved, that is, rotated and/or shi4ed, un+l the at least one primary spectacle point (10, 22b, 25a, 26a, 27a, 28a, 28b, 30, 31a, 31b) of the respec+ve component of the spectacles and the at least one facial point (32, 34, 36a, 36b) associated with the at least one primary spectacle point (10, 22b, 25a, 26a, 27a, 28a, 28b, 30, 31a, 31b) have an actual value of a distance rela+ve to one another, which deviates by no more than a tolerance value from a target value of the distance specified for this purpose, and then, for each of the remaining components of the spectacles, a distance between a respec+ve primary spectacle point (10, 22b, 25a, 26a, 27a, 28a, 28b, 30, 31a, 31b) of the respec+ve component and a corresponding point (32, 34, 36a, 36b) associated with the respec+ve primary spectacle point (10, 22b, 25a, 26a, 27a, 28a, 28b, 30, 31a, 31b) is determined and compared with a target value for the distance provided for this purpose, and this comparison is used to determine whether the spectacles fit.

4. The method according to claim 2 or 3, in which, for the bridge (6) as a component of the spectacles, at least one primary spectacle point (10, 22b, 25a, 26a, 27a, 28a, 28b, 30, 31a, 31b) is determined from the limited number of spectacle points (21b, 24a), which is arranged at an edge of the bridge (6), wherein, during the virtual arranging of the spectacles on the face, this at least one primary spectacle point (10, 22b, 25a, 26a, 27a, 28a, 28b, 30, 31a, 31b) is assigned to at least one facial point (32, 34, 36a, 36b) on the nose, as a region of the face, and
wherein, for each temple (8a, 8b, 18a, 18b) as a component of the spectacles, at least one primary spectacle point (10, 22b, 25a, 26a, 27a, 28a, 28b, 30, 31a, 31b) is determined from the limited number of spectacle points (21b, 24a), which is arranged at an edge of the respec+ve temple (8a, 8b, 18a, 18b), wherein, during the virtual arranging of the spectacles on the face, this at least one primary spectacle point (10, 22b, 25a, 26a, 27a, 28a, 28b, 30, 31a, 31b) is assigned to at least one facial point (32, 34, 36a, 36b) formed as an ear point on the ear, as a region of the face.

5. The method according to any of the preceding claims, in which the posi+oning of the spectacles on the face, resul+ng from the virtual arranging of the spectacles on the face, is evaluated by an evalua+on system.

6. The method according to any of the preceding claims, in which a curvature of the geometric figure is created by incorpora+ng at least one spectacle point (10, 21b, 22b, 24a, 25a, 26a, 27a, 28a, 28b, 30, 31a, 31b) on a surface of the respec+ve lens (4a, 4b, 14a, 14b) and at least two spectacle points (10, 21b, 22b, 24a, 25a, 26a, 27a, 28a, 28b, 30, 31a, 31b) on an outer line of the respec+ve lens (4a, 4b, 14a, 14b).

7. The method according to any of the preceding claims, in which a centering point (29a) is determined as the at least one centering parameter of the respec+ve lens (4a, 4b, 14a, 14b) by using a projec+on of the eye pivot point (52a, 52b) of the respec+ve eye onto the geometric figure of the respec+ve lens (4a, 4b, 14a, 14b), wherein, depending on the geometric shape, a point projected thereby is projected onto a predefined flat surface, the posi+on and shape of which are defined by the outer line of the respec+ve lens (4a, 4b, 14a, 14b).

8. The method according to any of claims 2 to 7, in which the at least one centering parameter is determined as the inclina+on of a frame (2) of the spectacles, a frame lens angle, a pantoscopic +lt of the frame (2), and/or a corneal vertex distance.

9. The method according to any of the preceding claims, in which the virtual arranging of the spectacles on the face and/or an evalua+on of a resul+ng virtual arranging of the spectacles on the face is dynamically rendered and displayed on a display unit of the terminal device (1), in par+cular in real +me.

10. A computer-based applica+on for a mobile terminal device (1) for virtually providing spectacles for a person's face, which is configured to perform a method according to any of the preceding claims, in which the mobile terminal device (1) has at least one sensor (3), which is formed to detect the face, wherein an algorithm then models a rela+onship between the sensor data as input data and facial points as output data, and generates the facial points based on new, unknown sensor data, wherein the facial points are calculated by the terminal device (1) from such sensor data, wherein a rela+onship between the sensor data and the desired facial points is taught to the algorithm through supervised learning using training data, wherein addi+onally, the algorithm con+nuously learns, by its predic+ons being repeatedly evaluated and/or reinforced, which sensor data is best suited for genera+ng facial points, wherein the applica+on is implemented on the mobile terminal device (1), runs on the mobile terminal device (1), is in communica+on with the at least one sensor (3), and is configured to automa+cally calculate, based on the 3D model of the face generated using the detected face and a provided virtual 3D model of the spectacles, during the arranging of the spectacles on the face, mutually associated spectacle points (10, 21b, 22b, 24a, 25a, 26a, 27a, 28a, 28b, 30, 31a, 31b) of the spectacles and facial points (32, 34, 36a, 36b) of the face and to virtually arrange and center the spectacles on the face using the mutually associated and calculated spectacle points (10, 21b, 22b, 24a, 25a, 26a, 27a, 28a, 28b, 30, 31a, 31b) and facial points (32, 34, 36a, 36b), wherein, for modeling each lens (4a, 4b, 14a, 14b) of the spectacles, respec+vely a specified, limited number of spectacle points (21b, 24a) is automa+cally selected, wherein, to determine at least one centering parameter of the respec+ve lens (4a, 4b, 14a, 14b), only the posi+ons of the primary spectacle points (10, 22b, 25a, 26a, 27a, 28a, 28b, 30, 31a, 31b) of the respec+ve lens (4a, 4b, 14a, 14b) in a 3D space, as well as the posi+on of the eye pivot point (52a, 52b) of a respec+ve eye in the same 3D space, are used, wherein, from the primary spectacle points (27a, 28a, 28b, 30, 31a, 31b) of the respec+ve lens (4a, 4b, 14a, 14b) a flat surface (40a, 40b) or a sphere (42) is generated as at least one geometric figure, with which the respec+ve lens (4a, 4b, 14a, 14b) is virtually represented,
wherein, in the case of a flat surface, the primary spectacle points (27a) located on an outer line of a respec+ve lens (4a, 4b, 14a, 14b) define the flat surface (40a, 40b), and wherein, in the case of a sphere, depending on the shape of the lens (4a, 4b, 14a, 14b), a radius of the sphere (42) is selected that depends on a curvature of the lens (4a, 4b, 14a, 14b), wherein, a4er arranging the spectacles, a posi+on of the sphere (42) in space is calculated, taking into account the posi+on of the primary spectacle points (27a) of the respec+ve lens (4a, 4b, 14a, 14b).

11. A computer-based applica+on according to claim 10, which, for the purpose of its intended opera+on on the terminal device (1), is in communica+on with a compu+ng unit and/or a storage unit implemented on the terminal device (1) and/or in a backend.

12. A system for the computer-implemented provision of spectacles for a person's face, which is configured to perform a method according to any of claims 1 to 9, wherein the system has a mobile terminal device (1) with at least one sensor (3), which is designed to detect the face, wherein an algorithm then models a rela+onship between the sensor data as input data and facial points as output data, and generates the facial points based on new, unknown sensor data, wherein the facial points are calculated by the terminal device (1) from such sensor data, wherein a rela+onship between the sensor data and the desired facial points is taught to the algorithm through supervised learning using training data, wherein addi+onally, the algorithm con+nuously learns, by its predic+ons being repeatedly evaluated and/or reinforced, which sensor data is best suited for genera+ng facial points, wherein an applica+on is implemented on the mobile terminal device (1), which runs on the mobile terminal device (1), is in communica+on with the at least one sensor (3), and is configured to automa+cally calculate, based on the 3D model of the face generated using the detected face and a provided virtual 3D model of the spectacles, during the arranging of the spectacles on the face, mutually associated spectacle points (10, 21b, 22b, 24a, 25a, 26a, 27a, 28a, 28b, 30, 31a, 31b) of the spectacles and facial points (32, 34, 36a, 36b) of the face and to virtually arrange and center the spectacles on the face using the mutually associated and calculated spectacle points (10, 21b, 22b, 24a, 25a, 26a, 27a, 28a, 28b, 30, 31a, 31b) and facial points (32, 34, 36a, 36b), wherein, for modeling each lens (4a, 4b, 14a, 14b) of the spectacles, respec+vely a specified, limited number of spectacle points (21b, 24a) is automa+cally selected, wherein, to determine at least one centering parameter of the respec+ve lens (4a, 4b, 14a, 14b), only the posi+ons of the primary spectacle points (10, 22b, 25a, 26a, 27a, 28a, 28b, 30, 31a, 31b) of the respec+ve lens (4a, 4b, 14a, 14b) in a 3D space, as well as the posi+on of the eye pivot point (52a, 52b) of a respec+ve eye in the same 3D space, are used, wherein, from the primary spectacle points (27a, 28a, 28b, 30, 31a, 31b) of the respec+ve lens (4a, 4b, 14a, 14b) a flat surface (40a, 40b) or a sphere (42) is generated as at least one geometric figure, with which the respec+ve lens (4a, 4b, 14a, 14b) is virtually represented,
wherein, in the case of a flat surface, the primary spectacle points (27a) located on an outer line of a respec+ve lens (4a, 4b, 14a, 14b) define the flat surface (40a, 40b),
and wherein, in the case of a sphere, depending on the shape of the lens (4a, 4b, 14a, 14b), a radius of the sphere (42) is selected that depends on a curvature of the lens (4a, 4b, 14a, 14b), wherein, a4er arranging the spectacles, a posi+on of the sphere (42) in space is calculated, taking into account the posi+on of the primary spectacle points (27a) of the respec+ve lens (4a, 4b, 14a, 14b).

## Revendications

1. Procédé mis en œuvre par ordinateur pour fournir virtuellement une paire de lune$es pour un visage d'une personne, le visage étant détecté par au moins un capteur (3) d'un terminal mobile (1),
un algorithme modélisant ensuite une rela+on entre les données du capteur en tant que données d'entrée et les points faciaux en tant que données de sor+e, et générant les points faciaux à par+r de nouvelles données inconnues venant du capteur, les points faciaux étant calculés à par+r de ces données du capteur par le terminal (1), une rela+on entre les données du capteur et les points faciaux souhaités étant présentée à l'algorithme par appren+ssage supervisé à l'aide de données d'entraînement, et l'algorithme apprenant en outre en con+nu quelles données du capteur sont les plus adaptées pour générer des points faciaux, en évaluant et/ou en renforçant con+nuellement ses prédic+ons,
un modèle 3D virtuel du visage étant créé à par+r du visage détecté,
une applica+on, mise en œuvre et exécutée sur le terminal mobile (1) et communicant avec ledit au moins un capteur (3), perme$ant de calculer sur la base du modèle 3D du visage et d'un modèle 3D virtuel des lune$es fournies, lorsque les lune$es sont placées sur le visage, des points de lune$es (10, 21b, 22b, 24a, 25a, 26a, 27a, 28a, 28b, 30, 31a, 31b) des lune$es et des points faciaux (32, 34, 36a, 36b) du visage qui sont automa+quement mis en correspondance les uns avec les autres,
et les lune$es étant placées virtuellement sur le visage à l'aide des points de lune$es (10, 21b, 22b, 24a, 25a, 26a, 27a, 28a, 28b, 30, 31a, 31b) et des points faciaux (32, 34, 36a, 36b),
un nombre limité prédéfini de points de lune$es (21b, 24a) étant sélec+onné automa+quement pour modéliser chaque verre (4a, 4b, 14a, 14b) des lune$es, les posi+ons des points de lune$es primaires (10, 22b, 25a, 26a, 27a, 28a, 28b, 30, 31a, 31b) du verre concerné (4a, 4b, 14a, 14b) dans un espace 3D ainsi que la posi+on d'un point de pivot de l'œil (52a, 52b) d'un œil concerné dans ce même espace 3D étant les seules données u+lisées pour déterminer au moins un paramètre de centrage du verre concerné (4a, 4b, 14a, 14b), les points de lune$es primaires (27a, 28a, 28b, 30, 31a, 31b) de chaque verre (4a, 4b, 14a, 14b) perme$ant de générer une surface plane (40a, 40b) ou une sphère (42) en tant qu'au moins une figure géométrique servant à représenter virtuellement le verre (4a, 4b, 14a, 14b) concerné,
dans le cas d'une surface plane, les points de lune$es primaires (27a), situés sur une ligne extérieure d'un verre respec+f (4a, 4b, 14a, 14b), définissant la surface plane (40a, 40b), et dans le cas d'une sphère, un rayon de la sphère (42) étant choisi en fonc+on de la forme du verre (4a, 4b, 14a, 14b), ce rayon dépendant de la courbure du verre (4a, 4b, 14a, 14b), une posi+on de la sphère (42) dans l'espace étant calculée après placement des lune$es, compte tenu de la posi+on des points de lune$es primaires (27a) du verre (4a, 4b, 14a, 14b) concerné.

2. Procédé selon la revendica+on 1, tenant compte du fait que les lune$es présentent comme composants une monture (2, 12) avec un pont (6) et deux branches (8a, 8b, 18a, 18b),
le modèle 3D virtuel des lune$es étant calculé, un nombre limité prédéfini de points de lune$es (21b, 24a) étant sélec+onné automa+quement pour au moins un composant des lune$es,
ledit au moins un capteur (3) du terminal (1) perme$ant de détecter des données du capteur pour au moins une zone du visage, le modèle 3D virtuel du visage étant calculé à par+r des données du capteur détectées à l'aide du terminal mobile (1),
un point de lune$es primaire (10, 22b, 25a, 26a, 27a, 28a, 28b, 30, 31a, 31b) étant déterminé pour chaque composant des lune$es à par+r du nombre limité de points de lune$es (21b, 24a),
le au moins un point de lune$es primaire (10, 22b, 25a, 26a, 27a, 28a, 28b, 30, 31a, 31b) du composant correspondant des lune$es étant associé, lors d'un posi+onnement virtuel des lune$es sur le visage à l'aide de l'applica+on, à au moins un point facial (32, 34, 36a, 36b) d'une des au moins une zone du visage, le au moins un point facial (32, 34, 36a, 36b) étant calculé, au moins en par+e, de manière dynamique à par+r du modèle 3D du visage lors du posi+onnement virtuel des lune$es sur le visage.

3. Procédé selon la revendica+on 2, où, lors du posi+onnement virtuel des lune$es sur le visage, au moins un composant des lune$es est déplacé virtuellement, c'est-à-dire qu'il est pivoté et/ou déplacé, jusqu'à ce que le au moins un point de lune$es primaire (10, 22b, 25a, 26a, 27a, 28a, 28b, 30, 31a, 31b) du composant concerné et le au moins un point facial (32, 34, 36a, 36b) associé à ce point de lune$es primaire (10, 22b, 25a, 26a, 27a, 28a, 28b, 30, 31a, 31b) présentent entre eux une valeur réelle de distance qui ne s'écarte pas de plus d'une valeur de tolérance par rapport à une valeur de consigne de distance prévue à cet effet, puis, pour tous les autres composants des lune$es, une distance est déterminée entre un point de lune$es primaire (10) respec+f du composant concerné et un point facial (32, 34, 36a, 36b) associé à ce point de lune$es primaire (10, 22b, 25a, 26a, 27a, 28a, 28b, 30, 31a, 31b), et ce$e distance est comparée à une valeur de consigne prévue à cet effet, la comparaison perme$ant de déterminer si les lune$es sont bien ajustées.

4. Procédé selon la revendica+on 2 ou 3, **caractérisé en ce que**, pour le pont (6) en tant que composant des lune$es, au moins un point de lune$es primaire (10, 22b, 25a, 26a, 27a, 28a, 28b, 30, 31a, 31b) est déterminé parmi le nombre limité de points de lune$es (21b, 24a), lequel est situé sur un bord du pont (6), le au moins un point de lune$es primaire (10) étant associé, lors du posi+onnement virtuel des lune$es sur le visage, à au moins un point facial (32, 34, 36a, 36b) du nez en tant que zone du visage, et
**en ce que**, pour chaque branche (8a, 8b, 18a, 18b) en tant que composant des lune$es, au moins un point de lune$es primaire (10, 22b, 25a, 26a, 27a, 28a, 28b, 30, 31a, 31b) est déterminé parmi le nombre limité de points de lune$es (21b, 24a), lequel est situé sur un bord de la branche correspondante (8a, 8b, 18a, 18b), le au moins un point de lune$es primaire (10, 22b, 25a, 26a, 27a, 28a, 28b, 30, 31a, 31b) étant associé, lors du posi+onnement virtuel des lune$es sur le visage, à au moins un point facial (32, 34, 36a, 36b) de l'oreille, conçu comme point d'oreille, en tant que zone du visage.

5. Procédé selon l'une des revendica+ons précédentes, où la posi+on des lune$es sur le visage, résultant de leur posi+onnement virtuel sur le visage, est évaluée à l'aide d'un système d'évalua+on.

6. Procédé selon l'une des revendica+ons précédentes, où une courbure de la figure géométrique est générée en prenant en compte au moins un point de lune$es (10, 21b, 22b, 24a, 25a, 26a, 27a, 28a, 28b, 30, 31a, 31b) situé sur une surface du verre concerné (4a, 4b, 14a, 14b) ainsi qu'au moins deux points de lune$es (10, 21b, 22b, 24a, 25a, 26a, 27a, 28a, 28b, 30, 31a, 31b) situés sur un contour extérieur du verre concerné (4a, 4b, 14a, 14b).

7. Procédé selon l'une des revendica+ons précédentes, où un point de centrage (29a) est déterminé en tant que le au moins un paramètre de centrage du verre (4a, 4b, 14a, 14b) concerné, à l'aide d'une projec+on du point de pivot de l'œil (52a, 52b) de l'œil concerné sur la figure géométrique du verre correspondant (4a, 4b, 14a, 14b), un point ainsi projeté étant projeté, en fonc+on de la forme géométrique, sur une surface plane prédéfinie dont la posi+on et la forme sont définies par le contour extérieur du verre concerné (4a, 4b, 14a, 14b).

8. Procédé selon l'une des revendica+ons 2 à 7, **caractérisé en ce que**, pour déterminer le au moins un paramètre de centrage, on détermine l'inclinaison d'une monture (2) de lune$es, l'angle de la monture, l'inclinaison vers l'avant de la monture (2) et/ou la distance entre le sommet de la cornée et la monture.

9. Procédé selon l'une des revendica+ons précédentes, où le posi+onnement virtuel des lune$es sur le visage et/ou une évalua+on du posi+onnement virtuel des lune$es sur le visage qui en résulte sont représentés et affichés de manière dynamique, notamment en temps réel, sur une unité d'affichage du terminal (1).

10. Applica+on mise en œuvre par ordinateur, des+née à un terminal mobile (1), perme$ant de visualiser virtuellement une paire de lune$es sur le visage d'une personne, conçue pour me$re en œuvre un procédé selon l'une des revendica+ons précédentes, où le terminal mobile (1) présente au moins un capteur (3) conçu pour détecter le visage,
un algorithme modélisant ensuite une rela+on entre les données du capteur en tant que données d'entrée et les points faciaux en tant que données de sor+e, et générant les points faciaux à par+r de nouvelles données inconnues venant du capteur, les points faciaux étant calculés à par+r de ces données du capteur par le terminal (1), une rela+on entre les données du capteur et les points faciaux souhaités étant présentée à l'algorithme par appren+ssage supervisé à l'aide de données d'entraînement, et l'algorithme apprenant en outre en con+nu quelles données du capteur sont les plus adaptées pour générer des points faciaux, en évaluant et/ou en renforçant con+nuellement ses prédic+ons,
l'applica+on étant mise en œuvre sur le terminal mobile (1), exécutée sur le terminal mobile (1), communicant avec le au moins un capteur (3) et conçue pour calculer sur la base d'un modèle 3D virtuel du visage créé à par+r du visage détecté et d'un modèle 3D des lune$es fourni, lorsque les lune$es sont placées sur le visage, des points de lune$es (10, 21b, 22b, 24a, 25a, 26a, 27a, 28a, 28b, 30, 31a, 31b) des lune$es et des points faciaux (32, 34, 36a, 36b) du visage qui sont automa+quement mis en correspondance les uns avec les autres, et pour posi+onner et centrer virtuellement les lune$es sur le visage à l'aide des points de lune$es (10, 21b, 22b, 24a, 25a, 26a, 27a, 28a, 28b, 30, 31a, 31b) et des points faciaux (32, 34, 36a, 36b) associés les uns aux autres et calculés,
un nombre limité prédéfini de points de lune$es (21b, 24a) étant sélec+onné automa+quement pour modéliser chaque verre (4a, 4b, 14a, 14b) des lune$es, les posi+ons des points de lune$es primaires (10, 22b, 25a, 26a, 27a, 28a, 28b, 30, 31a, 31b) du verre concerné (4a, 4b, 14a, 14b) dans un espace 3D ainsi que la posi+on d'un point de pivot de l'œil (52a, 52b) d'un œil concerné dans ce même espace 3D étant les seules données u+lisées pour déterminer au moins un paramètre de centrage du verre concerné (4a, 4b, 14a, 14b), les points de lune$es primaires (27a, 28a, 28b, 30, 31a, 31b) de chaque verre (4a, 4b, 14a, 14b) perme$ant de générer une surface plane (40a, 40b) ou une sphère (42) en tant qu'au moins une figure géométrique servant à représenter virtuellement le verre (4a, 4b, 14a, 14b) concerné,
dans le cas d'une surface plane, les points de lune$es primaires (27a), situés sur une ligne extérieure d'un verre respec+f (4a, 4b, 14a, 14b), définissant la surface plane (40a, 40b), et dans le cas d'une sphère, un rayon de la sphère (42) étant choisi en fonc+on de la forme du verre (4a, 4b, 14a, 14b), ce rayon dépendant de la courbure du verre (4a, 4b, 14a, 14b), une posi+on de la sphère (42) dans l'espace étant calculée après placement des lune$es, compte tenu de la posi+on des points de lune$es primaires (27a) du verre (4a, 4b, 14a, 14b) concerné.

11. Applica+on mise en œuvre par ordinateur selon la revendica+on 10, qui, pour son exécu+on fonc+onnelle sur le terminal (1), communique avec une unité de calcul et/ou une unité de mémoire mise en œuvre sur le terminal (1) et/ou dans un système dorsal.

12. Système mis en œuvre par ordinateur, perme$ant de fournir une paire de lune$es adaptée au visage d'une personne, conçu pour me$re en œuvre un procédé selon l'une des revendica+ons 1 à 9, le système présentant un terminal mobile (1) équipé d'au moins un capteur (3) conçu pour détecter le visage, un algorithme modélisant ensuite une rela+on entre les données du capteur en tant que données d'entrée et les points faciaux en tant que données de sor+e, et générant les points faciaux à par+r de nouvelles données inconnues venant du capteur, les points faciaux étant calculés à par+r de ces données du capteur par le terminal (1), une rela+on entre les données du capteur et les points faciaux souhaités étant présentée à l'algorithme par appren+ssage supervisé à l'aide de données d'entraînement, et l'algorithme apprenant en outre en con+nu quelles données du capteur sont les plus adaptées pour générer des points faciaux, en évaluant et/ou en renforçant con+nuellement ses prédic+ons,
une applica+on étant mise en œuvre sur le terminal mobile (1), exécutée sur le terminal mobile (1), communicant avec ledit au moins un capteur (3) et conçue pour calculer sur la base d'un modèle 3D virtuel du visage créé à par+r du visage détecté et d'un modèle 3D des lune$es fourni, lorsque les lune$es sont placées sur le visage, des points de lune$es (10, 21b, 22b, 24a, 25a, 26a, 27a, 28a, 28b, 30, 31a, 31b) des lune$es et des points faciaux (32, 34, 36a, 36b) du visage qui sont automa+quement mis en correspondance les uns avec les autres, et pour posi+onner et centrer virtuellement les lune$es sur le visage à l'aide des points de lune$es (10, 21b, 22b, 24a, 25a, 26a, 27a, 28a, 28b, 30, 31a, 31b) et des points faciaux (32, 34, 36a, 36b) associés les uns aux autres et calculés,
un nombre limité prédéfini de points de lune$es (21b, 24a) étant sélec+onné automa+quement pour modéliser chaque verre (4a, 4b, 14a, 14b) des lune$es, les posi+ons des points de lune$es primaires (10, 22b, 25a, 26a, 27a, 28a, 28b, 30, 31a, 31b) du verre concerné (4a, 4b, 14a, 14b) dans un espace 3D ainsi que la posi+on d'un point de pivot de l'œil (52a, 52b) d'un œil concerné dans ce même espace 3D étant les seules données u+lisées pour déterminer au moins un paramètre de centrage du verre concerné (4a, 4b, 14a, 14b), les points de lune$es primaires (27a, 28a, 28b, 30, 31a, 31b) de chaque verre (4a, 4b, 14a, 14b) perme$ant de générer une surface plane (40a, 40b) ou une sphère (42) en tant qu'au moins une figure géométrique servant à représenter virtuellement le verre (4a, 4b, 14a, 14b) concerné,
dans le cas d'une surface plane, les points de lune$es primaires (27a), situés sur une ligne extérieure d'un verre respec+f (4a, 4b, 14a, 14b), définissant la surface plane (40a, 40b), et dans le cas d'une sphère, un rayon de la sphère (42) étant choisi en fonc+on de la forme du verre (4a, 4b, 14a, 14b), ce rayon dépendant de la courbure du verre (4a, 4b, 14a, 14b), une posi+on de la sphère (42) dans l'espace étant calculée après placement des lune$es, compte tenu de la posi+on des points de lune$es primaires (27a) du verre (4a, 4b, 14a, 14b) concerné.
